(19) Europäisches Patentamt
European Patent Office
Office européen des brevets

(11) EP 4 589 855 A1

(12) **EUROPEAN PATENT APPLICATION**
published in accordance with Art. 153(4) EPC

(43) Date of publication:
**23.07.2025 Bulletin 2025/30**

(21) Application number: **23871032.1**

(22) Date of filing: **28.09.2023**

(51) International Patent Classification (IPC):
***H04B 7/0456*** *(2017.01)*

(52) Cooperative Patent Classification (CPC):
**H04B 7/0456; H04W 72/21; H04W 72/231; H04W 72/232**

(86) International application number:
**PCT/CN2023/122596**

(87) International publication number:
**WO 2024/067807 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.10.2022 CN 202211215724**
**17.02.2023 CN 202310165426**

(71) Applicant: **Huawei Technologies Co., Ltd.**
**Shenzhen, Guangdong 518129 (CN)**

(72) Inventors:
- **DONG, Changzhao**
  **Shenzhen, Guangdong 518129 (CN)**
- **LIU, Xianda**
  **Shenzhen, Guangdong 518129 (CN)**
- **GAO, Xiang**
  **Shenzhen, Guangdong 518129 (CN)**
- **ZHANG, Zhening**
  **Shenzhen, Guangdong 518129 (CN)**
- **LIU, Kunpeng**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

# (54) COMMUNICATION METHOD AND APPARATUS, AND STORAGE MEDIUM

(57) This application discloses a communication method and apparatus, and a storage medium. In this application, a terminal receives codeword indication information, where the codeword indication information indicates a first codeword, and the first codeword corresponds to at least one first PTRS port; and receives DCI, where the DCI indicates an association between the at least one first PTRS port and at least one first DMRS port. The terminal determines, from the at least one first DMRS port based on the codeword indication information and the DCI, a first DMRS port associated with each of the at least one first PTRS port, and transmits at least one PTRS signal through the at least one first PTRS port based on the first DMRS port associated with each of the at least one first PTRS port. According to the solutions in this application, an association between a PTRS port and a DMRS port can be accurately determined. This improves communication reliability.

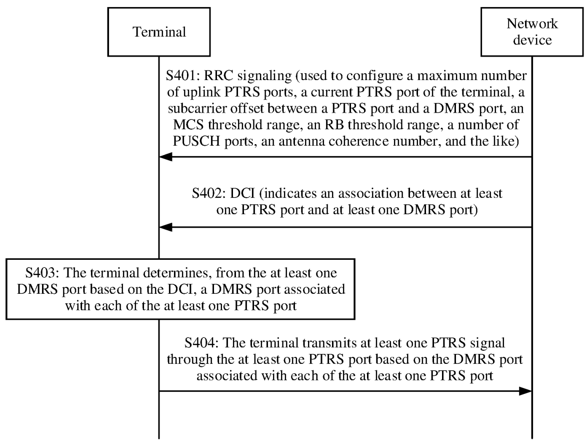


FIG. 4

EP 4 589 855 A1

## Description

This application claims priorities to Chinese Patent Application No. 202211215724.9, filed with the China National Intellectual Property Administration on October 1, 2022 and entitled "COMMUNICATION METHOD AND APPARATUS, AND STORAGE MEDIUM", and to Chinese Patent Application No. 202310165426.1, filed with the China National Intellectual Property Administration on February 17, 2023 and entitled "COMMUNICATION METHOD AND APPARATUS, AND STORAGE MEDIUM", both of which are incorporated herein by reference in their entireties.

## TECHNICAL FIELD

This application relates to the field of communication technologies, and in particular, to a communication method and apparatus, and a storage medium.

## BACKGROUND

There is an association between a phase tracking reference signal (phase tracking reference signal, PTRS) port and a corresponding candidate demodulation reference signal (demodulation reference signal, DMRS) port. Currently, a maximum of four physical uplink shared channel (physical uplink shared channel, PUSCH) ports/sounding reference signal (sounding reference signal, SRS) ports are supported in uplink of a single terminal, and/or a maximum of four-stream transmission is supported in the uplink of the single terminal. However, currently, there is no corresponding solution for how to associate the PTRS port with the DMRS port in this scenario.

## SUMMARY

This application provides a communication method and apparatus, and a storage medium, to accurately determine an association between a PTRS port and a DMRS port. This improves communication reliability.

According to a first aspect, a communication method is provided. The method includes: A terminal receives codeword indication information, where the codeword indication information indicates a first codeword, and the first codeword corresponds to at least one first PTRS port; the terminal receives downlink control information (downlink control information, DCI), where the DCI indicates an association between the at least one first phase tracking reference signal PTRS port and at least one first DMRS port, and the at least one first DMRS port is a DMRS port corresponding to one or more layers in the first codeword; the terminal determines, from the at least one first DMRS port based on the codeword indication information and the DCI, a first DMRS port associated with each of the at least one first PTRS port; and the terminal transmits at least one PTRS signal through the at least one first PTRS port based on the first DMRS port associated with each of the at least one first PTRS port.

In this aspect, an association between a PTRS port and a DMRS port can be accurately determined. This improves communication reliability.

For example, the codeword indication information and the DCI may be independent information, or the codeword indication information and the DCI may be in first information. The terminal determines, from the at least one first DMRS port based on the first information, the first DMRS port associated with each of the at least one first PTRS port.

In a possible implementation, the method further includes: The terminal reports M PTRS ports supported by the terminal; or the terminal receives first information from a network device, where the first information is used to configure the M PTRS ports, and M is a positive integer; and the terminal determines a number of the at least one first PTRS port corresponding to the first codeword, where the number of the at least one first PTRS port is less than or equal to M.

For example, the terminal receives second information from the network device, where the second information is used to configure Q PTRS ports, Q is a positive integer, and Q is less than or equal to M.

In another possible implementation, the number of the at least one first PTRS port is M.

In this implementation, the number of the at least one first PTRS port corresponding to the first codeword may be M based on a number of layers included in the first codeword.

In still another possible implementation, M> 1, a first DMRS port associated with at least one first PTRS port is determined based on the DCI, and DMRS ports associated with remaining M-1 PTRS ports are preset ports.

In still another possible implementation, M=2, a first DMRS port associated with one of two first PTRS ports is determined based on the DCI, and a first DMRS port associated with the other one of the two first PTRS ports is a preset port.

In this implementation, if the first DMRS port associated with the one first PTRS port is determined from a plurality of candidate first DMRS ports, the DCI may indicate the first DMRS port associated with the first PTRS port. If there is only one first DMRS port associated with the other first PTRS port, the first DMRS port associated with the first PTRS port is the preset port.

In still another possible implementation, a number of first DMRS ports associated with the other one of the two first PTRS ports is 1.

In still another possible implementation, the first codeword corresponds to N first PTRS ports, N<M, a second codeword corresponds to R second PTRS ports, R=M-N, and N and R are positive integers. The terminal determines second DMRS ports respectively associated with the R second PTRS ports, where the second DMRS port is a DMRS port that is predefined or preconfigured in the second codeword or that is obtained according to a default rule.

In this implementation, if the number of the first PTRS ports corresponding to the first codeword is less than M, the terminal may determine, based on the DCI, the first DMRS port corresponding to the first PTRS port. The second codeword corresponds to the R second PTRS ports, and the second DMRS ports respectively associated with the R second PTRS ports are the DMRS ports that are predefined or preconfigured or that are obtained according to the default rule.

In still another possible implementation, N>1, a first DMRS port associated with at least one first PTRS port is determined based on the DCI, and DMRS ports associated with remaining N-1 PTRS ports are preset ports.

In still another possible implementation, M=4, N=3, R=1, and a first DMRS port associated with one of three first PTRS ports is determined based on the DCI, first DMRS ports associated with the other two of the three first PTRS ports are preset ports, and a number of first DMRS ports associated with each of the other two of the three first PTRS ports is 1; or M=4, N=2, R=2, and a first DMRS port associated with each of two first PTRS ports is determined based on the DCI.

In still another possible implementation, the second DMRS port is a DMRS port with a smallest port number in the second codeword, or the second DMRS port is a DMRS port with a largest port number in the second codeword, or a DMRS port with a smallest port number in the second codeword may be used as a candidate DMRS port of the first PTRS port, or a DMRS port with a largest port number in the second codeword may be used as a candidate DMRS port of the first PTRS port.

In still another possible implementation, the codeword indication information includes a modulation and coding scheme MCS corresponding to each of a plurality of codewords, and the first codeword is a codeword corresponding to a highest MCS in the plurality of codewords.

In this implementation, if the MCS is the highest, channel quality is good. At least one first PTRS port corresponding to the codeword corresponding to the highest MCS in the plurality of codewords is determined, and the PTRS signal is transmitted based on the first DMRS port associated with each of the at least one first PTRS port, so that reliability of the PTRS signal can be improved.

In still another possible implementation, the DCI further includes at least one piece of the following information: a rank of an uplink physical uplink shared channel PUSCH and a TPMI. The method further includes: The terminal determines, based on the rank of the uplink PUSCH and/or the TPMI, the at least one first PTRS port corresponding to the first codeword.

In still another possible implementation, the TPMI corresponds to one precoding matrix, the precoding matrix includes X PUSCH/SRS ports and Y data layers, each data layer corresponds to one DMRS port, and X is greater than 4 and/or Y is greater than 4.

In still another possible implementation, the X PUSCH/SRS ports are reported by the terminal or configured by the network device, and the X PUSCH/SRS ports are associated with the M PTRS ports according to a predefined rule.

In still another possible implementation, the first codeword further corresponds to at least one antenna coherence group.

In still another possible implementation, M is greater than or equal to 2, and the number of first PTRS ports is less than or equal to a number of antenna coherence groups.

According to a second aspect, a communication method is provided. The method includes: A network device transmits codeword indication information, where the codeword indication information indicates a first codeword, and the first codeword corresponds to at least one first phase tracking reference signal PTRS port; the network device transmits downlink control information DCI, where the DCI indicates an association between the at least one first phase tracking reference signal PTRS port and at least one first DMRS port, and the at least one first DMRS port is a DMRS port corresponding to one or more layers in the first codeword; and the network device receives at least one PTRS signal through the at least one first PTRS port based on the first DMRS port associated with each of the at least one first PTRS port.

In this aspect, an association between a PTRS port and a DMRS port can be accurately determined. This improves communication reliability.

For example, the codeword indication information and the DCI may be independent information, or the codeword indication information and the DCI may be in same first information.

In a possible implementation, the method further includes: The network device receives M PTRS ports reported and supported by a terminal; or the network device transmits first information, where the first information is used to configure the M PTRS ports, and M is a positive integer.

In another possible implementation, the number of the at least one first PTRS port is M.

In still another possible implementation, M> 1, a first DMRS port associated with at least one first PTRS port is determined based on the DCI, and DMRS ports associated with remaining M-1 PTRS ports are preset ports.

In still another possible implementation, M=2, a first DMRS port associated with one of two first PTRS ports is determined based on the DCI, and a first DMRS port associated with the other one of the two first PTRS ports is a preset port.

In still another possible implementation, a number of first DMRS ports associated with the other one of the two first PTRS ports is 1.

In still another possible implementation, the first codeword corresponds to N first PTRS ports, N<M, a second codeword corresponds to R second PTRS ports, R=M-N, and N and R are positive integers.

In still another possible implementation, N>1, a first DMRS port associated with at least one first PTRS port is determined based on the DCI, and DMRS ports associated with remaining N-1 PTRS ports are preset ports.

In still another possible implementation, M=4, N=3, R=1, and a first DMRS port associated with one of three first PTRS ports is determined based on the DCI, first DMRS ports associated with the other two of the three first PTRS ports are preset ports, and a number of first DMRS ports associated with each of the other two of the three first PTRS ports is 1; or M=4, N=2, R=2, and a first DMRS port associated with each of two first PTRS ports is determined based on the DCI.

In still another possible implementation, a second DMRS port is a DMRS port with a smallest port number in the second codeword.

In still another possible implementation, the codeword indication information includes a modulation and coding scheme MCS corresponding to each of a plurality of codewords, and the first codeword is a codeword corresponding to a highest MCS in the plurality of codewords.

In still another possible implementation, the DCI further includes at least one piece of the following information: a rank of an uplink physical uplink shared channel PUSCH and a TPMI. The TPMI corresponds to one precoding matrix, the precoding matrix includes X PUSCH/SRS ports and Y data layers, each data layer corresponds to one DMRS port, and X is greater than 4 and/or Y is greater than 4.

In still another possible implementation, the X PUSCH/SRS ports are reported by the terminal or configured by the network device, and the X PUSCH/SRS ports are associated with the M PTRS ports according to a predefined rule.

In still another possible implementation, the first codeword further corresponds to at least one antenna coherence group.

In still another possible implementation, M is greater than or equal to 2, and the number of first PTRS ports is less than or equal to a number of antenna coherence groups.

According to a third aspect, a communication method is provided. The method includes: A terminal receives downlink control information DCI, where the DCI indicates an association between at least one phase tracking reference signal PTRS port and at least one demodulation reference signal DMRS port, each of the at least one PTRS port corresponds to a plurality of antenna coherence groups, and each of the plurality of antenna coherence groups corresponds to a plurality of physical uplink shared channel PUSCH ports, or each of the plurality of antenna coherence groups corresponds to a plurality of sounding reference signal SRS ports; the terminal determines, from the at least one DMRS port based on the DCI, a DMRS port associated with each of the at least one PTRS port; and the terminal transmits at least one PTRS signal through the at least one first PTRS port based on the DMRS port associated with each of the at least one PTRS port.

In this aspect, an association between a PTRS port and a DMRS port and an association between the PTRS port and PUSCH/SRS ports can be accurately determined. This improves communication reliability.

In a possible implementation, the method further includes: The terminal reports M PTRS ports supported by the terminal; or the terminal receives first information from a network device, where the first information is used to configure the M PTRS ports, and M is a positive integer.

In another possible implementation, the DCI further includes at least one piece of the following information: a rank of an uplink physical uplink shared channel PUSCH and a TPMI. The method further includes: The terminal determines the at least one first PTRS port based on the rank of the uplink PUSCH and/or the TPMI.

In still another possible implementation, the TPMI corresponds to one precoding matrix, the precoding matrix includes X PUSCH/SRS ports and Y data layers, each data layer corresponds to one DMRS port, and X is greater than 4 and/or Y is greater than 4.

In still another possible implementation, the X PUSCH/SRS ports are reported by the terminal or configured by the network device, and the X PUSCH/SRS ports are associated with the M PTRS ports according to a predefined rule.

In still another possible implementation, there are four antenna coherence groups, there are two PTRS ports, one PTRS port corresponds to a first antenna coherence group and a second antenna coherence group, and the other PTRS port corresponds to a third antenna coherence group and a fourth antenna coherence group. Each of the four antenna coherence groups corresponds to two PUSCH ports, or each of the four antenna coherence groups corresponds to two SRS ports.

In still another possible implementation, the method further includes: The terminal receives codeword indication information, where the codeword indication information indicates a first codeword, and the first codeword corresponds to at least one first PTRS port in the M PTRS ports; the terminal determines, from the at least one first DMRS port based on the codeword indication information and the DCI, a first DMRS port associated with each of the at least one first PTRS port; and the terminal transmits the at least one PTRS signal based on the first DMRS port associated with each of the at least one first PTRS port.

For example, the codeword indication information and the DCI may be independent information, or the codeword indication information and the DCI may be in first information. The terminal determines, from the at least one first DMRS port based on the first information, the first DMRS port associated with each of the at least one first PTRS port.

In still another possible implementation, the method further includes: The terminal determines a number of the at least one first PTRS port corresponding to the first codeword, where the number of the at least one first PTRS port is less than or equal to M.

In still another possible implementation, the number of the at least one first PTRS port is M.

In still another possible implementation, M=2, a first DMRS port associated with one first PTRS port is determined based on the DCI, and a first DMRS port associated with the other first PTRS port is a preset port.

In still another possible implementation, the first codeword corresponds to N first PTRS ports, N<M, a second codeword corresponds to R second PTRS ports, R=M-N, and N and R are positive integers. The terminal determines second DMRS ports respectively associated with the R second PTRS ports, where the second DMRS port is a DMRS port that is predefined or preconfigured in the second codeword or that is obtained according to a default rule.

In still another possible implementation, the second DMRS port is a DMRS port with a smallest port number in the second codeword, or the second DMRS port is a DMRS port with a largest port number in the second codeword, or a DMRS port with a smallest port number in the second codeword may be used as a candidate DMRS port of the first PTRS port, or a DMRS port with a largest port number in the second codeword may be used as a candidate DMRS port of the first PTRS port.

In still another possible implementation, the codeword indication information includes a modulation and coding scheme MCS corresponding to each of a plurality of codewords, and the first codeword is a codeword corresponding to a highest MCS in the plurality of codewords.

In still another possible implementation, the first codeword further corresponds to at least one antenna coherence group.

According to a fourth aspect, a communication method is provided. The method includes: A network device transmits downlink control information DCI, where the DCI indicates an association between at least one phase tracking reference signal PTRS port and at least one demodulation reference signal DMRS port, each of the at least one PTRS port corresponds to a plurality of antenna coherence groups, and each of the plurality of antenna coherence groups corresponds to a plurality of physical uplink shared channel PUSCH ports, or each of the plurality of antenna coherence groups corresponds to a plurality of sounding reference signal SRS ports; and the network device receives at least one PTRS signal through the at least one first PTRS port based on the DMRS port associated with each of the at least one PTRS port.

In this aspect, an association between a PTRS port and a DMRS port and an association between the PTRS port and PUSCH/SRS ports can be accurately determined. This improves communication reliability.

In a possible implementation, the method further includes: The network device receives M PTRS ports reported and supported by a terminal; or the network device transmits first information, where the first information is used to configure the M PTRS ports, and M is a positive integer.

In another possible implementation, the DCI further includes at least one piece of the following information: a rank of an uplink physical uplink shared channel PUSCH and a TPMI. The TPMI corresponds to one precoding matrix, the precoding matrix includes X PUSCH/SRS ports and Y data layers, each data layer corresponds to one DMRS port, and X is greater than 4 and/or Y is greater than 4.

In still another possible implementation, the X PUSCH/SRS ports are reported by the terminal or configured by the network device, and the X PUSCH/SRS ports are associated with the M PTRS ports according to a predefined rule.

In still another possible implementation, the method further includes: The network device transmits codeword indication information, where the codeword indication information indicates a first codeword, the first codeword corresponds to at least one first phase tracking reference signal PTRS port, the DCI indicates an association between the at least one first phase tracking reference signal PTRS port and at least one first DMRS port, and the at least one first DMRS port is a DMRS port corresponding to one or more layers in the first codeword; and the network device receives the at least one PTRS signal based on the first DMRS port associated with each of the at least one first PTRS port.

For example, the codeword indication information and the DCI may be independent information, or the codeword indication information and the DCI may be in same first information.

In still another possible implementation, the number of the at least one first PTRS port is M.

In still another possible implementation, the first codeword corresponds to N first PTRS ports, N<M, a second codeword corresponds to R second PTRS ports, R=M-N, and N and R are positive integers.

In still another possible implementation, the codeword indication information includes a modulation and coding scheme MCS corresponding to each of a plurality of codewords, and the first codeword is a codeword corresponding to a highest MCS in the plurality of codewords.

In still another possible implementation, the first codeword further corresponds to at least one antenna coherence group.

In still another possible implementation, M is greater than or equal to 2, and the number of first PTRS ports is less than or equal to a number of antenna coherence groups.

In still another possible implementation, the method further includes: The network device transmits codeword indication information to the terminal, where the codeword indication information indicates a first codeword, and the first codeword corresponds to at least one first PTRS port in the M PTRS ports; and the network device receives the at least one PTRS signal based on a first DMRS port associated with each of the at least one first PTRS port.

According to a fifth aspect, a communication apparatus is provided. The communication apparatus may implement the method in the first aspect. For example, the communication apparatus may be a terminal or a chip system in a terminal. The foregoing method may be implemented by software, hardware, or hardware executing corresponding software.

In a possible implementation, the apparatus includes a transceiver unit and a processing unit. The transceiver unit is configured to receive codeword indication information, where the codeword indication information indicates a first codeword, and the first codeword corresponds to at least one first PTRS port. The transceiver unit is further configured to receive DCI, where the DCI indicates an association between the at least one first phase tracking reference signal PTRS port and at least one first DMRS port, and the at least one first DMRS port is a DMRS port corresponding to one or more layers in the first codeword. The processing unit is configured to determine, from the at least one first DMRS port based on the codeword indication information and the DCI, the first DMRS port associated with each of the at least one first PTRS port. The transceiver unit is further configured to transmit at least one PTRS signal through the at least one first PTRS port based on the first DMRS port associated with each of the at least one first PTRS port.

For example, the codeword indication information and the DCI may be independent information, or the codeword indication information and the DCI may be in first information. The terminal determines, from the at least one first DMRS port based on the first information, the first DMRS port associated with each of the at least one first PTRS port.

Optionally, the transceiver unit is further configured to report M PTRS ports supported by the terminal; or the transceiver unit is further configured to receive first information from a network device, where the first information is used to configure the M PTRS ports, and M is a positive integer; and the processing unit is further configured to determine a number of the at least one first PTRS port corresponding to the first codeword, where the number of the at least one first PTRS port is less than or equal to M.

For example, the transceiver unit is further configured to receive second information from the network device, where the second information is used to configure Q PTRS ports, Q is a positive integer, and Q is less than or equal to M.

Optionally, the number of the at least one first PTRS port is M.

Optionally, M> 1, a first DMRS port associated with at least one first PTRS port is determined based on the DCI, and DMRS ports associated with remaining M-1 PTRS ports are preset ports.

Optionally, M=2, a first DMRS port associated with one of two first PTRS ports is determined based on the DCI, and a first DMRS port associated with the other one of the two first PTRS ports is a preset port.

Optionally, a number of first DMRS ports associated with the other one of the two first PTRS ports is 1.

Optionally, the first codeword corresponds to N first PTRS ports, N<M, a second codeword corresponds to R second PTRS ports, R=M-N, and N and R are positive integers. The processing unit is further configured to determine second DMRS ports respectively associated with the R second PTRS ports, where the second DMRS port is a DMRS port that is predefined or preconfigured in the second codeword or that is obtained according to a default rule.

Optionally, N> 1, a first DMRS port associated with at least one first PTRS port is determined based on the DCI, and DMRS ports associated with remaining N-1 PTRS ports are preset ports.

Optionally, M=4, N=3, R=1, and a first DMRS port associated with one of three first PTRS ports is determined based on the DCI, first DMRS ports associated with the other two of the three first PTRS ports are preset ports, and a number of first DMRS ports associated with each of the other two of the three first PTRS ports is 1; or M=4, N=2, R=2, and a first DMRS port associated with each of two first PTRS ports is determined based on the DCI.

Optionally, the second DMRS port is a DMRS port with a smallest port number in the second codeword, or the second DMRS port is a DMRS port with a largest port number in the second codeword, or a DMRS port with a smallest port number in the second codeword may be used as a candidate DMRS port of the first PTRS port, or a DMRS port with a largest port number in the second codeword may be used as a candidate DMRS port of the first PTRS port.

Optionally, the codeword indication information includes a modulation and coding scheme MCS corresponding to each of a plurality of codewords, and the first codeword is a codeword corresponding to a highest MCS in the plurality of codewords.

Optionally, the DCI further includes at least one piece of the following information: a rank of an uplink physical uplink shared channel PUSCH and a TPMI. The processing unit is further configured to determine, based on the rank of the uplink PUSCH and/or the TPMI, the at least one first PTRS port corresponding to the first codeword.

Optionally, the TPMI corresponds to one precoding matrix, the precoding matrix includes X PUSCH/SRS ports and Y data layers, each data layer corresponds to one DMRS port, and X is greater than 4 and/or Y is greater than 4.

Optionally, the X PUSCH/SRS ports are reported by the terminal or configured by the network device, and the X PUSCH/SRS ports are associated with the M PTRS ports according to a predefined rule.

Optionally, the first codeword further corresponds to at least one antenna coherence group.

Optionally, M is greater than or equal to 2, and the number of first PTRS ports is less than or equal to a number of antenna coherence groups.

According to a sixth aspect, a communication apparatus is provided. The communication apparatus may implement the method in the second aspect. For example, the communication apparatus may be a network device or a chip system in a network device. The foregoing method may be implemented by software, hardware, or hardware executing corresponding software.

In a possible implementation, the apparatus includes a transceiver unit, and may further include a processing unit. The transceiver unit is configured to transmit codeword indication information, where the codeword indication information indicates a first codeword, and the first codeword corresponds to at least one first phase tracking reference signal PTRS port. The transceiver unit is further configured to transmit downlink control information DCI, where the DCI indicates an association between the at least one first phase tracking reference signal PTRS port and at least one first DMRS port, and the at least one first DMRS port is a DMRS port corresponding to one or more layers in the first codeword. The transceiver unit is further configured to receive at least one PTRS signal through the at least one first PTRS port based on the first DMRS port associated with each of the at least one first PTRS port.

For example, the codeword indication information and the DCI may be independent information, or the codeword indication information and the DCI may be in same first information.

Optionally, the transceiver unit is further configured to receive M PTRS ports reported and supported by a terminal; or the transceiver unit is further configured to transmit first information, where the first information is used to configure the M PTRS ports, and M is a positive integer.

Optionally, the number of the at least one first PTRS port is M.

Optionally, M>1, a first DMRS port associated with at least one first PTRS port is determined based on the DCI, and DMRS ports associated with remaining M-1 PTRS ports are preset ports.

Optionally, M=2, a first DMRS port associated with one of two first PTRS ports is determined based on the DCI, and a first DMRS port associated with the other one of the two first PTRS ports is a preset port.

Optionally, a number of first DMRS ports associated with the other one of the two first PTRS ports is 1.

Optionally, the first codeword corresponds to N first PTRS ports, N<M, a second codeword corresponds to R second PTRS ports, R=M-N, and N and R are positive integers.

Optionally, N> 1, a first DMRS port associated with at least one first PTRS port is determined based on the DCI, and DMRS ports associated with remaining N-1 PTRS ports are preset ports.

Optionally, M=4, N=3, R=1, and a first DMRS port associated with one of three first PTRS ports is determined based on the DCI, first DMRS ports associated with the other two of the three first PTRS ports are preset ports, and a number of first DMRS ports associated with each of the other two of the three first PTRS ports is 1; or M=4, N=2, R=2, and a first DMRS port associated with each of two first PTRS ports is determined based on the DCI.

Optionally, a second DMRS port is a DMRS port with a smallest port number in the second codeword.

Optionally, the codeword indication information includes a modulation and coding scheme MCS corresponding to each of a plurality of codewords, and the first codeword is a codeword corresponding to a highest MCS in the plurality of codewords.

Optionally, the DCI further includes at least one piece of the following information: a rank of an uplink physical uplink shared channel PUSCH and a TPMI. The TPMI corresponds to one precoding matrix, the precoding matrix includes X PUSCH/SRS ports and Y data layers, each data layer corresponds to one DMRS port, and X is greater than 4 and/or Y is greater than 4.

Optionally, the X PUSCH/SRS ports are reported by the terminal or configured by the network device, and the X PUSCH/SRS ports are associated with the M PTRS ports according to a predefined rule.

Optionally, the first codeword further corresponds to at least one antenna coherence group.

Optionally, M is greater than or equal to 2, and the number of first PTRS ports is less than or equal to a number of antenna coherence groups.

According to a seventh aspect, a communication apparatus is provided. The communication apparatus may implement the method in the third aspect. For example, the communication apparatus may be a terminal or a chip system in a terminal. The foregoing method may be implemented by software, hardware, or hardware executing corresponding software.

In a possible implementation, the apparatus includes a transceiver unit and a processing unit. The transceiver unit is configured to receive downlink control information DCI, where the DCI indicates an association between at least one phase tracking reference signal PTRS port and at least one demodulation reference signal DMRS port, each of the at least one PTRS port corresponds to a plurality of antenna coherence groups, and each of the plurality of antenna coherence groups corresponds to a plurality of physical uplink shared channel PUSCH ports, or each of the plurality of antenna coherence groups corresponds to a plurality of sounding reference signal SRS ports. The processing unit is configured to determine, from the at least one DMRS port based on the DCI, a DMRS port associated with each of the at least one PTRS port. The transceiver unit is further configured to transmit at least one PTRS signal through the at least one first PTRS port based on the DMRS port associated with each of the at least one PTRS port.

Optionally, the transceiver unit is further configured to report M PTRS ports supported by the terminal; or the transceiver unit is further configured to receive first information from a network device, where the first information is used to configure the M PTRS ports, and M is a positive integer.

Optionally, the DCI further includes at least one piece of the following information: a rank of an uplink physical uplink shared channel PUSCH and a TPMI. The processing unit is further configured to determine the at least one first PTRS port based on the rank of the uplink PUSCH and/or the TPMI.

Optionally, the TPMI corresponds to one precoding matrix, the precoding matrix includes X PUSCH/SRS ports and Y data layers, each data layer corresponds to one DMRS port, and X is greater than 4 and/or Y is greater than 4.

Optionally, the X PUSCH/SRS ports are reported by the terminal or configured by the network device, and the X PUSCH/SRS ports are associated with the M PTRS ports according to a predefined rule.

Optionally, there are four antenna coherence groups, there are two PTRS ports, one PTRS port corresponds to a first antenna coherence group and a second antenna coherence group, and the other PTRS port corresponds to a third antenna coherence group and a fourth antenna coherence group. Each of the four antenna coherence groups corresponds to two PUSCH ports, or each of the four antenna coherence groups corresponds to two SRS ports.

Optionally, the transceiver unit is further configured to receive codeword indication information, where the codeword indication information indicates a first codeword, and the first codeword corresponds to at least one first PTRS port in the M PTRS ports. The processing unit is further configured to determine, from the at least one first DMRS port based on the codeword indication information and the DCI, a first DMRS port associated with each of the at least one first PTRS port. The transceiver unit is further configured to transmit the at least one PTRS signal based on the first DMRS port associated with each of the at least one first PTRS port.

For example, the codeword indication information and the DCI may be independent information, or the codeword indication information and the DCI may be in first information. The terminal determines, from the at least one first DMRS port based on the first information, the first DMRS port associated with each of the at least one first PTRS port.

Optionally, the processing unit is further configured to determine a number of the at least one first PTRS port corresponding to the first codeword, where the number of the at least one first PTRS port is less than or equal to M.

Optionally, the number of the at least one first PTRS port is M.

Optionally, M=2, a first DMRS port associated with one first PTRS port is determined based on the DCI, and a first DMRS port associated with the other first PTRS port is a preset port.

Optionally, the first codeword corresponds to N first PTRS ports, N<M, a second codeword corresponds to R second PTRS ports, R=M-N, and N and R are positive integers. The terminal determines second DMRS ports respectively associated with the R second PTRS ports, where the second DMRS port is a DMRS port that is predefined or preconfigured in the second codeword or that is obtained according to a default rule.

Optionally, the second DMRS port is a DMRS port with a smallest port number in the second codeword, or the second DMRS port is a DMRS port with a largest port number in the second codeword, or a DMRS port with a smallest port number in the second codeword may be used as a candidate DMRS port of the first PTRS port, or a DMRS port with a largest port number in the second codeword may be used as a candidate DMRS port of the first PTRS port.

Optionally, the codeword indication information includes a modulation and coding scheme MCS corresponding to each of a plurality of codewords, and the first codeword is a codeword corresponding to a highest MCS in the plurality of codewords.

Optionally, the first codeword further corresponds to at least one antenna coherence group.

According to an eighth aspect, a communication apparatus is provided. The communication apparatus may implement the method in the fourth aspect. For example, the communication apparatus may be a network device or a chip system in a network device. The foregoing method may be implemented by software, hardware, or hardware executing corresponding software.

In a possible implementation, the apparatus includes a transceiver unit, and may further include a processing unit. The transceiver unit is configured to transmit downlink control information DCI, where the DCI indicates an association between at least one phase tracking reference signal PTRS port and at least one demodulation reference signal DMRS port, each of the at least one PTRS port corresponds to a plurality of antenna coherence groups, and each of the plurality of antenna coherence groups corresponds to a plurality of physical uplink shared channel PUSCH ports, or each of the plurality of antenna coherence groups corresponds to a plurality of sounding reference signal SRS ports. The transceiver unit is further configured to receive at least one PTRS signal through the at least one first PTRS port based on the DMRS port associated with each of the at least one PTRS port.

Optionally, the transceiver unit is further configured to receive M PTRS ports reported and supported by a terminal; or the transceiver unit is further configured to transmit first information, where the first information is used to configure the M PTRS ports, and M is a positive integer.

Optionally, the DCI further includes at least one piece of the following information: a rank of an uplink physical uplink shared channel PUSCH and a TPMI. The TPMI corresponds to one precoding matrix, the precoding matrix includes X PUSCH/SRS ports and Y data layers, each data layer corresponds to one DMRS port, and X is greater than 4 and/or Y is greater than 4.

Optionally, the X PUSCH/SRS ports are reported by the terminal or configured by the network device, and the X PUSCH/SRS ports are associated with the M PTRS ports according to a predefined rule.

Optionally, the transceiver unit is further configured to transmit codeword indication information, where the codeword indication information indicates a first codeword, the first codeword corresponds to at least one first phase tracking reference signal PTRS port, the DCI indicates an association between the at least one first phase tracking reference signal PTRS port and at least one first DMRS port, and the at least one first DMRS port is a DMRS port corresponding to one or more layers in the first codeword. The transceiver unit is further configured to receive the at least one PTRS signal based on the first DMRS port associated with each of the at least one first PTRS port.

For example, the codeword indication information and the DCI may be independent information, or the codeword indication information and the DCI may be in same first information.

Optionally, the number of the at least one first PTRS port is M.

Optionally, the first codeword corresponds to N first PTRS ports, $N<M$, a second codeword corresponds to R second PTRS ports, $R=M-N$, and N and R are positive integers.

Optionally, the codeword indication information includes a modulation and coding scheme MCS corresponding to each of a plurality of codewords, and the first codeword is a codeword corresponding to a highest MCS in the plurality of codewords.

Optionally, the first codeword further corresponds to at least one antenna coherence group.

Optionally, M is greater than or equal to 2, and the number of first PTRS ports is less than or equal to a number of antenna coherence groups.

Optionally, the transceiver unit is further configured to transmit codeword indication information to the terminal, where the codeword indication information indicates a first codeword, and the first codeword corresponds to at least one first PTRS port in the M PTRS ports. The transceiver unit is further configured to receive the at least one PTRS signal based on a first DMRS port associated with each of the at least one first PTRS port.

In another possible implementation, the communication apparatus includes a processor coupled to a memory. The processor is configured to support the apparatus in performing a corresponding function in the foregoing communication method. The memory is configured to be coupled to the processor, and the memory stores a computer program (or computer-executable instructions) and/or data required for the apparatus. Optionally, the communication apparatus may further include a communication interface, configured to support communication between the apparatus and another network element, for example, transmitting or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

In another possible implementation, the communication apparatus includes a processor and a transceiver apparatus. The processor is coupled to the transceiver apparatus, and the processor is configured to execute a computer program or instructions to control the transceiver apparatus to receive and transmit information; and when the processor executes the computer program or the instructions, the processor is further configured to implement the foregoing method by using a logic circuit or by executing code instructions. The transceiver apparatus may be a transceiver, a transceiver circuit, an interface circuit, or an input/output interface, and is configured to: receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

When the communication apparatus is a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

With reference to any one of the first aspect to the eighth aspect or the implementations of the first aspect to the eighth aspect, in still another possible implementation, the codeword indication information includes a modulation and coding scheme MCS corresponding to each of two codewords, and the first codeword is a preset codeword when MCSs corresponding to the two codewords are equal.

With reference to any one of the first aspect to the eighth aspect or the implementations of the first aspect to the eighth aspect, in still another possible implementation, the two codewords are a codeword 0 and a codeword 1, and the preset codeword is the codeword 0.

With reference to any one of the first aspect to the eighth aspect or the implementations of the first aspect to the eighth aspect, in still another possible implementation, the codeword indication information includes a modulation and coding scheme MCS corresponding to each of two codewords, and when MCSs corresponding to the two codewords are equal, a number of PTRS ports associated with a DMRS port included in the first codeword is greater than a number of PTRS ports associated with a DMRS port included in the other codeword in the two codewords.

With reference to any one of the first aspect to the eighth aspect or the implementations of the first aspect to the eighth aspect, in still another possible implementation, the codeword indication information includes a modulation and coding scheme MCS corresponding to each of two codewords, and when MCSs corresponding to the two codewords are equal, the first codeword is a codeword with a large number of PTRS ports associated with DMRS ports included in the two codewords. With reference to any one of the first aspect to the eighth aspect or the implementations of the first aspect to the eighth aspect, in still another possible implementation, when MCSs corresponding to the two codewords are equal, and numbers of PTRS ports associated with DMRS ports included in the two codewords are also equal, the first codeword is a preset codeword.

With reference to any one of the first aspect to the eighth aspect or the implementations of the first aspect to the eighth aspect, in still another possible implementation, the two codewords are a codeword 0 and a codeword 1, and the preset codeword is the codeword 0.

With reference to any one of the first aspect to the eighth aspect or the implementations of the first aspect to the eighth aspect, in still another possible implementation, the codeword indication information includes a modulation and coding scheme MCS corresponding to each of two codewords, and when MCSs corresponding to the two codewords are equal, if a DMRS port corresponding to a layer included in a codeword 0 in the two codewords is used as a candidate DMRS port of the first PTRS port, the number of first PTRS ports is M0; or if a DMRS port corresponding to a layer included in the codeword 1 is used as a candidate DMRS port of the first PTRS port, the number of first PTRS ports is M1. If M1>M0, the first codeword is the codeword 1; or if M1≤M0, the first codeword is the codeword 0.

According to a ninth aspect, a communication system is provided. The communication system includes the communication apparatus according to the fifth aspect and the communication apparatus according to the sixth aspect.

According to a tenth aspect, a communication system is provided. The communication system includes the communication apparatus according to the seventh aspect and the communication apparatus according to the eighth aspect.

According to an eleventh aspect, a computer-readable storage medium is provided. The computer-readable storage medium stores a computer program or instructions. When the program or the instructions are executed by a processor, the method according to any one of the first aspect, the second aspect, the third aspect, and the fourth aspect, or the implementations of the first aspect, the second aspect, the third aspect, and the fourth aspect is performed.

According to a twelfth aspect, a computer program product is provided. When the computer program product is executed on a computing device, the method according to any one of the first aspect, the second aspect, the third aspect, and the fourth aspect, or the implementations of the first aspect, the second aspect, the third aspect, and the fourth aspect is performed.

According to a thirteenth aspect, a circuit is provided. The circuit is coupled to a memory, and the circuit is configured to perform the method according to any one of the first aspect, the second aspect, the third aspect, and the fourth aspect, or the implementations of the first aspect, the second aspect, the third aspect, and the fourth aspect. The circuit may include a chip circuit.

## BRIEF DESCRIPTION OF DRAWINGS

FIG. 1 is a diagram of a communication system according to this application;

FIG. 2 is a diagram of a configuration type of a DMRS;

FIG. 3 is a diagram of performing frequency division duplex-orthogonal cover code capacity expansion on a DMRS port;

FIG. 4 is a schematic flowchart of a communication method according to an embodiment of this application;

FIG. 5a is an example diagram of an association between a PTRS port and a PUSCH port according to an embodiment of this application;

FIG. 5b is another example diagram of an association between a PTRS port and a PUSCH port according to an embodiment of this application;

FIG. 6a is still another example diagram of an association between a PTRS port and a PUSCH port according to an embodiment of this application;

FIG. 6b is still another example diagram of an association between a PTRS port and a PUSCH port according to an embodiment of this application;
FIG. 7 is still another example diagram of an association between a PTRS port and a PUSCH port according to an embodiment of this application;
FIG. 8 is a schematic flowchart of another communication method according to an embodiment of this application;
FIG. 9a is an example diagram of a PTRS-DMRS association in a case in which there are eight streams and two PTRS ports according to an embodiment of this application;
FIG. 9b is another example diagram of a PTRS-DMRS association in a case in which there are eight streams and two PTRS ports according to an embodiment of this application;
FIG. 9c is still another example diagram of a PTRS-DMRS association in a case in which there are eight streams and two PTRS ports according to an embodiment of this application;
FIG. 10 is an example diagram of a PTRS-DMRS association in a case in which there are six streams according to an embodiment of this application;
FIG. 11 is an example diagram of a PTRS-DMRS association in a case in which there are four streams according to an embodiment of this application;
FIG. 12a is an example diagram of a PTRS-DMRS association in a case in which there are eight streams and four PTRS ports according to an embodiment of this application;
FIG. 12b is another example diagram of a PTRS-DMRS association in a case in which there are eight streams and four PTRS ports according to an embodiment of this application;
FIG. 13 is a schematic flowchart of still another communication method according to an embodiment of this application;
FIG. 14a is still another example diagram of a PTRS-DMRS association according to an embodiment of this application;
FIG. 14b is still another example diagram of a PTRS-DMRS association according to an embodiment of this application;
FIG. 14c is still another example diagram of a PTRS-DMRS association according to an embodiment of this application;
FIG. 15 is a diagram of a structure of a communication apparatus according to an embodiment of this application;
FIG. 16 is a diagram of a simplified structure of a terminal according to an embodiment of this application;
FIG. 17 is a diagram of a simplified structure of a network device according to an embodiment of this application; and
FIG. 18 is a diagram of a structure of another communication apparatus according to an embodiment of this application.

## DESCRIPTION OF EMBODIMENTS

The following describes embodiments of this application with reference to the accompanying drawings in embodiments of this application.

The technical solutions provided in this application may be applied to various communication systems such as a long term evolution (long term evolution, LTE) system, a 5th generation (5th generation, 5G) communication system (or referred to as a new radio (new radio, NR) system), and another future communication system like a 6th generation (6th generation, 6G) communication system. Optionally, the technical solutions provided in this application may be further applied to an internet of things (internet of things, IoT) system, a narrowband internet of things (narrowband internet of things, NB-IoT) system, and the like.

FIG. 1 is a diagram of a communication system according to this application. The communication system includes at least one network device and at least one terminal. In FIG. 1, one network device and a plurality of terminals (user equipment (user equipment, UE) 1 to UE 5 are used as examples in the figure) constitute a communication system. In the communication system, all of the UE 1 to the UE 5 may communicate with the network device. A link environment of the communication system includes uplink transmission, downlink transmission, and side-link (side-link) transmission. Information transmitted on a link includes actually transmitted data information and control information that indicates or that is used to schedule actual data. In addition, the UE 3, the UE 4, and the UE 5 may alternatively constitute a communication system. A link transmission environment of the communication system is consistent with that described above. Specific information exchange depends on a network configuration manner.

The network device may be a device that can communicate with the terminal. The network device may be any device with a wireless transceiver function. The network device includes but is not limited to a base station like a NodeB (NodeB), an evolved base station like an evolved NodeB (eNodeB), a base station in a 5th generation (the 5th generation, 5G) communication system, a base station or a network device in a future communication system, an access node, a wireless relay node, a wireless backhaul node in a Wi-Fi system, and the like. Alternatively, the network device may be a radio controller in a cloud radio access network (cloud radio access network, CRAN) scenario. The network device may alternatively be a small cell, a transmission node (transmission reference point, TRP), or the like. A specific technology and a specific device form that are used by the network device are not limited in embodiments of this application.

Alternatively, the network device may be an access node, a wireless relay node, a wireless backhaul node, or the like in a wireless local area network (wireless fidelity, Wi-Fi) system. Alternatively, the network device may be a radio controller in a cloud radio access network (cloud radio access network, CRAN) scenario.

For ease of description, the following describes the network device and the like in this application by using a base station as an example. In some deployments of the base station, the base station may include a central unit (central unit, CU), a distributed unit (distributed unit, DU), and the like. In some other deployments of the base station, the CU may be further divided into a CU-control plane (control plane, CP), a CU-user plane (user plane, UP), and the like. In some other deployments of the base station, the base station may alternatively be an open radio access network (open radio access network, ORAN) architecture or the like. A specific deployment manner of the base station is not limited in this application.

The terminal is a device with a wireless transceiver function, and may be deployed on land, including an indoor or outdoor device, or a hand-held, wearable, or vehicle-mounted device; may be deployed on water, for example, on a ship; or may be deployed in the air, for example, on aircraft, a balloon, and a satellite. The terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device may also be referred to as user equipment, an access terminal device, a UE unit, a mobile station, a remote station, a remote terminal device, a mobile device, a terminal (terminal), a wireless communication device, a UE agent, a UE apparatus, or the like.

Optionally, in the communication system shown in FIG. 1, terminals may further communicate with each other by using a device-to-device (device-to-device, D2D) technology, a vehicle-to-everything (vehicle-to-everything, V2X) technology, a machine-to-machine (machine-to-machine, M2M) technology, or the like. A method for indicating a DMRS port between the terminals is not limited in this application.

For example, the terms "system" and "network" in embodiments of this application may be interchangeably used.

The following describes concepts that may be used in embodiments of this application.

DMRS:

The DMRS is used to estimate an equivalent channel matrix through which a data channel (for example, a physical uplink shared channel (physical uplink shared channel, PUSCH) or a physical downlink shared channel (physical downlink shared channel, PDSCH)) or a control channel (for example, a physical uplink control channel (physical uplink control channel, PUCCH) or a physical downlink control channel (physical downlink control channel, PDCCH)) passes, to be used for data detection and demodulation. A PUSCH is used as an example. Same precoding is usually performed on a DMRS and a transmitted data signal, to ensure that the DMRS and data pass through a same equivalent channel. It is assumed that a DMRS vector transmitted by a transmitter is s, a transmitted data symbol vector is x, and a same precoding operation (multiplied by a same precoding matrix P) is performed on the DMRS and the data. A corresponding received signal vector of a receiver may be represented as follows:

Data:

$$y = HPx + n = \widetilde{H}x + n \quad \text{Formula 1;}$$

and

DMRS:

$$r = HPs + n = \widetilde{H}s + n \quad \text{Formula 2.}$$

It can be learned that equivalent channels through which both the data signal and a reference signal pass are $\tilde{H}$. The receiver may obtain estimation of the equivalent channel $\tilde{H}$ based on the known DMRS vector s according to a channel estimation algorithm (for example, least squares (least squares, LS) channel estimation or minimum mean square error (minimum mean square error, MMSE) channel estimation). MIMO equalization and subsequent demodulation of the data signal may be completed based on the equivalent channel.

The DMRS is used to estimate the equivalent channel $\tilde{H}$, and a dimension of the DMRS is $N_R \times R$, where $N_R$ is a number of receive antennas, and $R$ is a number of transport streams (also referred to as a number of transport layers, a number of spatial layers, or a rank (rank)). Generally, one DMRS port corresponds to one spatial layer. One DMRS port corresponds to one group of DMRS symbols or one group of DMRS sequences. The DMRS symbol includes a plurality of DMRS symbol elements, which are correspondingly mapped to corresponding time-frequency resources for transmission. For MIMO transmission in which a number of transport streams is $R$, a corresponding number of DMRS ports is $R$. To ensure channel estimation quality, different DMRS ports are usually orthogonal ports. DMRS symbols corresponding to the different DMRS ports are orthogonal in at least one of frequency domain, time-frequency domain, or code domain.

In some scenarios of this application, the "number of transport layers" and the "rank" indicate a same meaning, and may be used interchangeably.

In some scenarios of this application, an antenna port and the DMRS port indicate a same meaning, and may be used interchangeably.

There is a DMRS time-frequency resource mapping manner in an NR protocol.

Because the DMRS occupies an additional time-frequency resource, DMRS overheads need to be reduced as much as possible. To reduce mutual interference, DMRS resources corresponding to a plurality of DMRS ports are usually mapped to preset time-frequency resources in a frequency division multiplexing (frequency division multiplexing, FDM), time division multiplexing (time division multiplexing, TDM), or code division multiplexing (code division multiplexing, CDM) manner. Currently, 5G NR supports two DMRS resource mapping types. A type 1 (Type 1) DMRS may support a maximum of eight orthogonal ports. A type 2 (Type 2) DMRS may support a maximum of 12 orthogonal ports. For one DMRS port, to perform channel estimation on different time-frequency resources and ensure channel estimation quality, a plurality of DMRS symbols need to be transmitted on a plurality of time-frequency resources. The DMRS may occupy at least one orthogonal frequency division multiplexing (orthogonal frequency division multiplexing, OFDM) symbol in time domain, and bandwidth occupied in frequency domain is the same as scheduled bandwidth of a scheduled data signal. A plurality of DMRS symbols corresponding to one port correspond to one reference signal sequence, and the reference signal sequence includes a plurality of reference signal sequence elements. A DMRS reference signal sequence may be a gold sequence. For example, the DMRS reference signal sequence is the gold sequence. An $n^{th}$ element $r(n)$ in the reference signal sequence may be generated according to the following formula:

$$r(n)=\frac{1}{\sqrt{2}}\left(1-2\cdot c(2n)\right)+j\frac{1}{\sqrt{2}}\left(1-2\cdot c(2n+1)\right) \qquad \text{Formula 3.}$$

A pseudo-random sequence $c(n)$ may be a gold sequence whose sequence length is 31. For a sequence $c(n)$ whose output length is $M_{PN}$, $n$ = 0,1,..., $M_{PN}$ -1, which may be defined as follows:

$$\begin{aligned} c(n) &= \left(x_1(n+N_C)+x_2(n+N_C)\right)\bmod 2 \\ x_1(n+31) &= \left(x_1(n+3)+x_1(n)\right)\bmod 2 \\ x_2(n+31) &= \left(x_2(n+3)+x_2(n+2)+x_2(n+1)+x_2(n)\right)\bmod 2 \end{aligned} \qquad \text{Formula 4.}$$

Herein, $N_C$ = 1600. A first m-sequence $x_1(n)$ may be initialized to $x_1(0)$ = 1, $x_1(n)$ = 0, $n$ = 1,2,...,30 . A second m-sequence $x_2(n)$ is initialized by a parameter $c_{init}$. $c_{init}$ may be defined as follows:

$$c_{\text{init}}=\left(2^{17}\left(N_{\text{symb}}^{\text{slot}}n_{\text{s,f}}^{\mu}+l+1\right)\left(2N_{\text{ID}}^{\bar{n}_{\text{SCID}}^{\bar{\lambda}}}+1\right)+2^{17}\left\lfloor\frac{\bar{\lambda}}{2}\right\rfloor+2N_{\text{ID}}^{\bar{n}_{\text{SCID}}^{\bar{\lambda}}}+\bar{n}_{\text{SCID}}^{\bar{\lambda}}\right)\bmod 2^{31}.$$

Herein, $l$ indicates an index of an OFDM symbol included in one slot, $n_{\text{s,f}}^{\mu}$ indicates an index of a slot in one system frame, and $N_{\text{ID}}^{0}, N_{\text{ID}}^{1} \in \{0,1,\ldots,65535\}$ may be configured by using higher layer signaling. $N_{\text{ID}}^{\bar{n}_{\text{SCID}}^{\bar{\lambda}}}$ is related to a cell identity (identity, ID), and may be usually equal to the cell ID, that is, $N_{\text{ID}}^{\bar{n}_{\text{SCID}}^{\bar{\lambda}}} = N_{\text{ID}}^{\text{cell}}$. $\bar{n}_{\text{SCID}}^{\bar{\lambda}}$ is an initialization parameter whose value may be 0 or 1. λ indicates an index of a code division multiplexing group corresponding to the DMRS port.

According to a preset time-frequency resource mapping rule, a DMRS reference signal sequence corresponding to a port is multiplied by a corresponding mask sequence and then mapped to a corresponding time-frequency resource. In a current NR protocol, two types of DMRS configuration manners are defined, and includes a type 1 DMRS and a type 2 DMRS.

For a port $p$, according to the following rule, an $m^{th}$ reference sequence element $r(m)$ in a corresponding reference signal sequence is mapped to a resource element (resource element, RE) whose index is $(k,l)_{p,\mu}$. The RE whose index is $(k,l)_{p,\mu}$ corresponds to an OFDM symbol whose index is $l$ in a slot in time domain, and corresponds to a subcarrier whose index is $k$ in frequency domain. The mapping rule meets the following:

$$a_{k.l}^{(p,\mu)} = \beta_{PDSCH}^{DMRS} w_f(k') w_t(l') r(2n + k')(1) \quad \text{Formula 5.}$$

Herein, $k = \begin{cases} 4n + 2k' + \Delta, & \text{configuration type 1} \\ 6n + k' + \Delta, & \text{configuration type 2} \end{cases}$;

$k' = 0,1$;
$l = \bar{l} + l'$;
$n = 0,1, ...$; and
$l' = 0,1$.

Herein, $\mu$ is a subcarrier spacing parameter, $a_{k.l}^{(p,\mu)}$ is a DMRS signal symbol that corresponds to the port $p$ and that is mapped to the RE whose index is $(k,l)_{p,\mu}$, and $\bar{l}$ is a symbol index of a start OFDM symbol occupied by the DMRS signal symbol or a symbol index of a reference OFDM symbol. $\beta_{PDSCH}^{DMRS}$ is a power scaling factor, $w_t(l')$ is a time domain mask element corresponding to an OFDM symbol whose index is $l'$, $w_f(k')$ is a frequency domain mask element corresponding to a subcarrier whose index is $k'$, $m = 2n + k'$, and $\Delta$ is a subcarrier offset factor.

In a configuration type 1 (Type 1 DMRS) mapping rule, values of $w_f(k')$ , $w_t(l')$, and $\Delta$ that correspond to the DMRS port $p$ may be determined according to Table 1.

Table 1 Type 1 DMRS parameter values

| $p$ | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

The type 1 DMRS may support a maximum of eight orthogonal ports (1000 to 1007), p indicates a DMRS port number, $\lambda$ indicates an index of a code division multiplexing group corresponding to the DMRS port, $\Delta$ is the subcarrier offset factor, $w_t(l')$ is the time domain mask element corresponding to the OFDM symbol whose index is $l'$, and $w_f(k')$ is the frequency domain mask element corresponding to the subcarrier whose index is $k'$.

In a configuration type 2 (Type 2 DMRS) mapping rule, values of $w_f(k')$, $w_t(l')$, and $\Delta$ that correspond to the DMRS port $p$ may be determined according to Table 2.

Table 2 Type 2 DMRS parameter values

| $p$ | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |

(continued)

| p | λ | Δ | $w_f(k')$ | | $w_t(l')$ | |
|---|---|---|---|---|---|---|
| | | | $k'$ = 0 | $k'$ = 1 | $l'$ = 0 | $l'$ = 1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

The type 2 DMRS may support a maximum of 12 orthogonal ports (1000 to 1011), $\lambda$ is an index of a code division multiplexing group to which the port *p* belongs, and DMRS ports in a same code division multiplexing group occupy a same time-frequency resource. According to the formula (1), for the type 1, time-frequency resource mapping manners of a single-symbol DMRS and a dual-symbol DMRS are shown in a first picture and a second picture from the left of FIG. 2.

As shown in the first picture from the left of FIG. 2, the single-symbol DMRS (corresponding to $l'$ = 0) supports a maximum of four ports, and a DMRS resource occupies one OFDM symbol. The four DMRS ports are divided into two code division multiplexing groups (CDM groups). A CDM group 0 includes a port 0 and a port 1; and a CDM group 1 includes a port 2 and a port 3. Frequency division multiplexing is performed between the CDM group 0 and the CDM group 1 (mapped to different frequency domain resources). DMRS ports included in the CMD group are mapped to a same time-frequency resource. Reference signals corresponding to the DMRS ports included in the CMD group are distinguished by using orthogonal cover codes (orthogonal cover codes, OCCs), to ensure orthogonality of the DMRS ports in the CDM group. This suppresses interference between DMRSs transmitted on different antenna ports. Specifically, the port 0 and the port 1 are in a same RE, and resource mapping is performed in a comb manner in frequency domain. To be specific, adjacent frequency domain resources occupied by the port 0 and the port 1 are separated by one subcarrier. For one DMRS port, two adjacent occupied REs correspond to one OCC codeword sequence whose length is 2. For example, for a subcarrier 0 and a subcarrier 2, a group of OCC codeword sequences (+1+1 and +1-1) whose lengths are 2 are used for the port 0 and the port 1. Similarly, the port 2 and the port 3 are in a same RE, and are mapped, in a comb manner in frequency domain, to REs that are not occupied by the port 0 and the port 1. For a subcarrier 1 and a subcarrier 3, a group of OCC codeword sequences (+1+1 and +1-1) whose lengths are 2 are used for the port 2 and the port 3.

As shown in the second picture from the left of FIG. 2, the dual-symbol DMRS supports a maximum of eight ports. The eight DMRS ports are divided into two code division multiplexing groups. A CDM group 0 includes a port 0, a port 1, a port 4, and a port 5; and a CDM group 1 includes a port 2, a port 3, a port 6, and a port 7. Frequency division multiplexing is performed between the CDM group 0 and the CDM group 1. Reference signals corresponding to DMRS ports included in the CMD group are distinguished by using OCCs. Specifically, the port 0, the port 1, the port 4, and the port 5 are in a same RE, and resource mapping is performed in a comb manner in frequency domain. To be specific, adjacent frequency domain resources occupied by the port 0, the port 1, the port 4, and the port 5 are separated by one subcarrier. For one DMRS port, two adjacent occupied subcarriers and two OFDM symbols correspond to one OCC codeword sequence whose length is 4. For example, for a subcarrier 0 and a subcarrier 2 corresponding to an OFDM symbol 1 and an OFDM symbol 2, a group of OCC codes (+1+1+1+1/+1+1-1-1/+1-1+1-1/+1-1-1+1) whose lengths are 4 are used for the port 0, the port 1, the port 4, and the port 5. Similarly, the port 2, the port 3, the port 6, and the port 7 are in a same RE, and are mapped, in a comb manner in frequency domain, to subcarriers that are not occupied by the port 0, the port 1, the port 4, and the port 5. For a subcarrier 1 and a subcarrier 3 corresponding to the OFDM symbol 1 and the OFDM symbol 2, a group of OCC codes (+1+1+1+1/+1+1-1-1/+1-1+1-1/+1-1-1+1) whose lengths are 4 are used for the port 2, the port 3, the port 6, and the port 7.

For the configuration type (configuration type) 2, time-frequency resource mapping manners of a single-symbol DMRS and a dual-symbol DMRS are shown in a third picture and a fourth picture from the left of FIG. 2. As shown in the third picture from the left of FIG. 2, the single-symbol type 2 DMRS supports a maximum of six ports. The six DMRS ports are divided into three code division multiplexing groups, frequency division multiplexing is performed between the CDM groups, and orthogonality of reference signals corresponding to DMRS ports included in the CDM is ensured by using OCCs. A CDM group 0 includes a port 0 and a port 1; a CDM group 1 includes a port 2 and a port 3; and a CDM group 2 includes a port 4 and a port 5. Frequency division multiplexing is performed between the CDM groups (mapped to different frequency domain resources). The reference signals corresponding to the DMRS ports included in the CMD group are mapped to a same time-frequency resource. The reference signals corresponding to the DMRS ports included in the CMD group are distinguished by using the OCCs. For one DMRS port, a DMRS reference signal corresponding to the DMRS port is mapped, in frequency domain, to a plurality of resource sub-blocks including two consecutive subcarriers, and adjacent resource sub-blocks are separated by four subcarriers in frequency domain. Specifically, the port 0 and the port 1 are in a same RE, and resource mapping is performed in a comb manner. For example, a frequency domain resource granularity is one resource block (resource block, RB). The port 0 and the port 1 occupy a subcarrier 0, a subcarrier 1, a subcarrier 6, and a subcarrier 7. The port 2 and the port 3 occupy a subcarrier 2, a subcarrier 3, a subcarrier 8, and a subcarrier 9. The port 4 and the port 5 occupy a subcarrier 4, a subcarrier 5, a subcarrier 10, and a subcarrier 11. Two DMRS ports included in one CDM group correspond, in two adjacent subcarriers, to OCC codeword sequences (+1+1 and +1-1) whose lengths are 2.

As shown in the fourth picture from the left of FIG. 2, the dual-symbol type 2 DMRS supports a maximum of 12 ports. The 12 DMRS ports are divided into three CDM groups, frequency division multiplexing is performed between the CDM groups, and orthogonality of reference signals corresponding to DMRS ports included in the CDM is ensured by using OCCs. A CDM group 0 includes a port 0, a port 1, a port 6, and a port 7; a CDM group 1 includes a port 2, a port 3, a port 8, and a port 9; and a CDM group 2 includes a port 4, a port 5, a port 10, and a port 11. Frequency division multiplexing is performed between the CDM groups (mapped to different frequency domain resources). The reference signals corresponding to the DMRS ports included in the CMD group are mapped to a same time-frequency resource. The reference signals corresponding to the DMRS ports included in the CMD group are distinguished by using the OCCs. For one DMRS port, a DMRS reference signal corresponding to the DMRS port is mapped, in frequency domain, to a plurality of resource sub-blocks including two consecutive subcarriers, and adjacent resource sub-blocks are separated by four subcarriers in frequency domain. Specifically, ports included in one CDM group are in a same RE, and resource mapping is performed in a comb manner in frequency domain. For example, a frequency domain resource granularity is 1 RB. The port 0, the port 1, the port 6, and the port 7 occupy a subcarrier 0, a subcarrier 1, a subcarrier 6, and a subcarrier 7 that correspond to an OFDM symbol 1 and an OFDM symbol 2. The port 2, the port 3, the port 8, and the port 9 occupy a subcarrier 2, a subcarrier 3, a subcarrier 8, and a subcarrier 9 that correspond to the OFDM symbol 1 and the OFDM symbol 2. The port 4, the port 5, the port 10, and the port 11 occupy a subcarrier 4, a subcarrier 5, a subcarrier 10, and a subcarrier 11 that correspond to the OFDM symbol 1 and the OFDM symbol 2. Four DMRS ports included in one CDM group correspond, in two adjacent subcarriers corresponding to two OFDM symbols, to OCC codeword sequences (+1+1+1+1/+1+1-1-1/+1-1+1-1/+1-1-1+1) whose lengths are 4.

As wireless communication devices are deployed more densely in the future, a number of terminals further increases. This imposes a higher requirement on a number of MIMO transport streams. In addition, with continuous evolution of a massive multiple-input multiple-output (massive MIMO) system subsequently, a number of transmit/receive antennas further increases (a number of transmit antennas of a network device supports 128 transmit antennas (transmission antennas, T) or 256 T, and a number of receive antennas of a terminal supports eight receive antennas (receiving antennas, R)), and channel information is obtained more accurately, so that a larger number of transport streams can be further supported to improve spectral efficiency of the MIMO system. Therefore, more DMRS ports are needed to support the larger number of transport streams (more than 12 streams) in terms of the foregoing aspects. As a number of transport streams increases, a higher requirement is imposed on accuracy of channel estimation. However, currently, a maximum of 12 orthogonal ports cannot ensure good transmission performance of more than 12 streams.

A simplest method for expanding an existing number of orthogonal DMRS ports is to increase a time-frequency resource occupied by a DMRS. This method can ensure that a number of DMRS symbols corresponding to each DMRS port remains unchanged. However, multiplication of DMRS overheads also reduces spectral efficiency of the system by multiple times. In another method, DMRS resources corresponding to more orthogonal DMRS ports are multiplexed when a same time-frequency resource (overhead) is ensured. To avoid increasing additional time-frequency resource overheads, based on an existing NR DMRS port, a new DMRS port is further introduced through code division multiplexing enhancement (by increasing a number of DMRS sequences on a same time-frequency resource). This is an effective technical solution.

Code division multiplexing is an effective method for introducing more orthogonal DMRS ports on a same time-frequency resource. Corresponding to an existing NR DMRS design criterion, a possible code division multiplexing implementation method is described below. A single-symbol type 2 DMRS is used as an example herein. For another DMRS configuration type, frequency division duplex-orthogonal cover code (frequency division-orthogonal cover code, FD-OCC) capacity expansion may also be performed in the following manner. A pattern corresponding to the expansion manner is shown in FIG. 3.

As shown in FIG. 3, a left picture shows DMRS port configuration in an existing NR protocol. An upper left table in the figure shows identifiers (identifiers, IDs) of subcarriers (subcarriers 0 to 11) occupied by DMRSs and corresponding port indexes. A lower left figure describes a corresponding DMRS mask design manner by using a port P0 and a port P1 as an example. The DMRS ports P0 and P1 are used as an example. Identifiers of frequency domain subcarriers occupied in one resource block (resource block, RB) are {0, 1, 6, 7}, a mask sequence corresponding to the port P0 is {+1, +1, +1, +1}, and a mask sequence corresponding to the port P1 is {+1, -1, +1, -1}. The port P1 and the port P0 occupy a same time-frequency resource, and are transmitted on the same time-frequency resource through code division orthogonality. The mask sequences herein are corresponding frequency domain mask sequences in Table 1.

Corresponding to the existing solution on the left, an upper table on the right and a lower figure on the right provide a new DMRS FD-OCC capacity expansion solution. On a same time-frequency resource, DMRS ports P0, P1, P6, and P7 that belong to a same CDM group 0 in the figure are used as an example herein. Corresponding to the same CDM group, compared with the DMRS ports in the foregoing existing solution, for the DMRS ports in this solution, an additional group of ports (two ports: P6 and P7) are multiplexed on the same time-frequency resource through code division multiplexing, and mask sequences corresponding to identifiers {0, 1, 6, 7} of subcarriers are {+1, +1, -1, -1} and {+1, -1, -1, +1}. Multiplexing manners of other CDM groups are the same as the multiplexing manner of the CDM group 0. According to the technical means, a total number of DMRS ports multiplexed on the same time-frequency resource can be doubled.

According to the capacity expansion method, a single-symbol/dual-symbol DMRS configuration type and a type 1/2 DMRS configuration type may be obtained through natural expansion by using a same sequence and in a same mapping manner. The following table 3 to 6 list DMRS ports and time-frequency resource mapping that correspond to the foregoing capacity expansion method.

For example, a sequence used in the capacity expansion method is an interference randomization sequence.

Table 3 Parameter values corresponding to different DMRS ports (Type 1)

| ***p*** | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1008 | 0 | 0 | +1 | +j | +1 | +j |
| 1009 | 0 | 0 | +1 | -j | +1 | +j |
| 1010 | 1 | 1 | +1 | +j | +1 | +j |
| 1011 | 1 | 1 | +1 | -j | +1 | +j |
| 1012 | 0 | 0 | +1 | +j | +1 | -j |
| 1013 | 0 | 0 | +1 | -j | +1 | -j |
| 1014 | 1 | 1 | +1 | +j | +1 | -j |
| 1015 | 1 | 1 | +1 | -j | +1 | -j |

Table 4 Parameter values corresponding to different DMRS ports (Type 2)

| ***p*** | $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1012 | 0 | 0 | +1 | +j | +1 | +j |
| 1013 | 0 | 0 | +1 | -j | +1 | +j |
| 1014 | 1 | 2 | +1 | +j | +1 | +j |
| 1015 | 1 | 2 | +1 | -j | +1 | +j |
| 1016 | 2 | 4 | +1 | +j | +1 | +j |
| 1017 | 2 | 4 | +1 | -j | +1 | +j |
| 1018 | 0 | 0 | +1 | +j | +1 | -j |
| 1019 | 0 | 0 | +1 | -j | +1 | -j |
| 1020 | 1 | 2 | +1 | +j | +1 | -j |
| 1021 | 1 | 2 | +1 | -j | +1 | -j |
| 1022 | 2 | 4 | +1 | +j | +1 | -j |

(continued)

| *p* | $\lambda$ | Δ | $w_f(k')$ | | $w_t(l')$ | |
|---|---|---|---|---|---|---|
| | | | *k'* = 0 | *k'* = 1 | *l'* = 0 | *l'* = 1 |
| 1023 | 2 | 4 | +1 | -j | +1 | -j |

For example, another sequence used in the capacity expansion method is a Walsh sequence.

Table 5 Parameter values corresponding to different DMRS ports (Type 1)

| *p* | $\lambda$ | Δ | $w_f(k')$ | | $w_t(l')$ | |
|---|---|---|---|---|---|---|
| | | | *k'* = 0 | *k'* = 1 | *l'* = 0 | *l'* = 1 |
| 1008 | 0 | 0 | +1 | +1 | +1 | +1 |
| 1009 | 0 | 0 | +1 | -1 | +1 | +1 |
| 1010 | 1 | 1 | +1 | +1 | +1 | +1 |
| 1011 | 1 | 1 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 1 | +1 | +1 | +1 | -1 |
| 1015 | 1 | 1 | +1 | -1 | +1 | -1 |

Table 6 Parameter values corresponding to different DMRS ports (Type 2)

| *p* | $\lambda$ | Δ | $w_f(k')$ | | $w_t(l')$ | |
|---|---|---|---|---|---|---|
| | | | *k* = 0 | *k'* = 1 | *l'* = 0 | *l'* = 1 |
| 1012 | 0 | 0 | +1 | +1 | +1 | +1 |
| 1013 | 0 | 0 | +1 | -1 | +1 | +1 |
| 1014 | 1 | 2 | +1 | +1 | +1 | +1 |
| 1015 | 1 | 2 | +1 | -1 | +1 | +1 |
| 1016 | 2 | 4 | +1 | +1 | +1 | +1 |
| 1017 | 2 | 4 | +1 | -1 | +1 | +1 |
| 1018 | 0 | 0 | +1 | +1 | +1 | -1 |
| 1019 | 0 | 0 | +1 | -1 | +1 | -1 |
| 1020 | 1 | 2 | +1 | +1 | +1 | -1 |
| 1021 | 1 | 2 | +1 | -1 | +1 | -1 |
| 1022 | 2 | 4 | +1 | +1 | +1 | -1 |
| 1023 | 2 | 4 | +1 | -1 | +1 | -1 |

There is an association between a PTRS port and a DMRS port. A time-frequency resource position for transmitting a PTRS signal on the PTRS port may be determined based on the associated DMRS port. The PTRS signal and a DMRS signal correspond to a same base sequence, that is, only corresponding $r(2n + k')$ in a DMRS signal generation formula (namely, the foregoing formula 5) is included, and time-frequency masks $w_f(k')$ and $w_t(l')$ are not included.

Specifically, time-frequency resource mapping of the PTRS port is as follows:

$$a_{k,l}^{(p,\mu)} = \beta_{\text{PT-RS},i} r_k \qquad \text{Formula 6.}$$

Herein, $l$ is a time domain position corresponding to the PTRS signal, $k$ is a frequency domain position corresponding to the PTRS signal, $p$ is a port number, $\mu$ is a subcarrier spacing, $\beta_{PT\text{-}RS,i}$ is a power coefficient, and $r_k$ is a base sequence.

A value of the time domain position $l$ corresponding to the PTRS signal is related to a parameter like a time density (time density) $L_{PT\text{-}RS}$. Details are not described in this application.

A formula for calculating the value of the frequency domain position $k$ corresponding to the PTRS signal is as follows:

$$k = k_{ref}^{RE} + (iK_{PT-RS} + k_{ref}^{RB})N_{sc}^{RB} \quad \text{Formula 7.}$$

If $N_{RB} mod K_{PT\text{-}RS} = 0$, $k_{ref}^{RB} = n_{RNTI} mod K_{PT-RS}$.

If $N_{RB} mod K_{PT\text{-}RS} \neq 0$, $k_{ref}^{RB} = n_{RNTI} mod (N_{RB} mod K_{PT-RS})$.

Herein, i=0, 1, 2... (is an offset index of an RB in which the PTRS exists). $k_{\text{ref}}^{\text{RE}}$ is a subcarrier offset between the PTRS port and a DMRS port associated with the PTRS port in an RB in which each PTRS port exists, and $k_{\text{ref}}^{\text{RE}}$ is configured as shown in Table 7.

Table 7 The parameter $k_{\text{ref}}^{\text{RE}}$

| DM-RS antenna port $p$ | $k_{\text{ref}}^{\text{RE}}$ DM-RS configuration type 1 | | | | DM-RS configuration type 2 | | | |
|---|---|---|---|---|---|---|---|---|
| | *Resource element offset* | | | | *Resource element offset* | | | |
| | offset00 | offset01 | offset10 | offset11 | offset00 | offset01 | offset10 | offset11 |
| 1000 | 0 | 2 | 6 | 8 | 0 | 1 | 6 | 7 |
| 1001 | 2 | 4 | 8 | 10 | 1 | 6 | 7 | 0 |
| 1002 | 1 | 3 | 7 | 9 | 2 | 3 | 8 | 9 |
| 1003 | 3 | 5 | 9 | 11 | 3 | 8 | 9 | 2 |
| 1004 | - | - | - | - | 4 | 5 | 10 | 11 |
| 1005 | - | - | - | - | 5 | 10 | 11 | 4 |

Candidate DMRS ports that may be associated with the PTRS port and that are specified in a current NR protocol are shown in Table 7. For a type 1 DMRS, candidate DMRS ports are 1000, 1001, 1002, and 1003. For a type 2 DMRS, candidate DMRS ports are 1000, 1001, 1002, 1003, 1004, and 1005.

For each DMRS configuration type, any one of the following subcarrier offsets: offset00, offset01, offset10, and offset11 may be configured by using higher layer signaling.

According to Table 7, if a configured subcarrier offset is offset00, a frequency domain start subcarrier corresponding to the PTRS port is the same as a frequency domain start subcarrier corresponding to an associated DMRS port in a transmit RB (in other words, a subcarrier offset is 0). If a value of another subcarrier offset, for example, offset01, is configured, there is an offset of two subcarriers between a frequency domain start subcarrier corresponds to the PTRS port and a frequency domain start subcarrier corresponding to an associated DMRS port in a transmit RB. The rest can be deduced by analogy.

Any one of subcarrier offsets: offset01, offset10, and offset11 may be configured by using a resource element offset (resourceElementOffset) field in a higher layer parameter "phase tracking reference signal-downlink configuration (PTRS-DownlinkConfig)". If there is no resourceElementOffset field in the higher layer parameter PTRS-DownlinkConfig, the subcarrier offset is "offset00" by default.

In the foregoing formula for calculating the value of the frequency domain position $k$ corresponding to the PTRS,

$n_{RNTI}$ is a value of a radio network temporary identifier (radio network temporary identifier, RNTI) corresponding to a DMRS port currently scheduled by using DCI.

$N_{RB}$ is a number of currently scheduled RBs.
$K_{PT\text{-}RS} \in \{2,4\}$ is a frequency density (frequency density) of the PTRS in a unit of RB.

Corresponding to the time density $L_{PT\text{-}RS}$ in the time-frequency resource occupied by the PTRS port, a value range of the time density defined in the NR protocol is shown in the following Table 8.

Table 8 Time density of PT-RS as a function of scheduled bandwidth

| Scheduled MCS | Time density |
|---|---|
| $I_{MCS}$<ptrs-$MCS_1$ | PT-RS is not present |
| ptrs-MCS1 ≤$I_{MCS}$<ptrs-MCS2 | 4 |
| ptrs-MCS2 ≤$I_{MCS}$<ptrs-MCS3 | 2 |
| ptrs-MCS3 ≤$I_{MCS}$<ptrs-MCS4 | 1 |

Herein, $I_{MCS}$ is a currently scheduled MCS, ptrs-MCS1~4 is an MCS threshold range configured by a higher layer, and $L_{PT\text{-}RS}$ is a density of the PTRS in time domain, and indicates a symbol spacing at which the PTRS appears in one slot (slot). If a value is 1, the PTRS is transmitted on each time-domain OFDM symbol.

Corresponding to the frequency density $K_{PT\text{-}RS}$ in the time-frequency resource occupied by the PTRS port, a value range of the frequency density defined in the NR protocol is shown in the following Table 9.

Table 9 Frequency density of PT-RS as a function of scheduled bandwidth

| Scheduled bandwidth | Frequency density |
|---|---|
| $N_{RB}$<$N_{RB0}$ | PT-RS is not present |
| $N_{RB0}$≤$N_{RB}$<$N_{RB1}$ | 2 |
| $N_{RB1}$≤$N_{RB}$ | 4 |

Herein, $N_{RB}$ is a number of currently scheduled RBs, $N_{RB0\sim1}$ is an RB threshold range configured by a higher layer, and $K_{PT\text{-}RS}$ is a density of the PTRS in frequency domain, and indicates an RB spacing at which the PTRS appears in bandwidth in one time of scheduling. If a value is 2, the PTRS is transmitted once on every two frequency-domain RBs.

The following describes a transmission time-frequency resource corresponding to a PTRS port 0 by using, as an example, a DMRS port obtained after FD-OCC capacity expansion is performed for a single-symbol type 2 DMRS configuration type, as shown in Table 10.

Table 10 Example association between a PTRS port and a DMRS port

| Subcarrier/Symbol | 2 | 3 | 4 | 5 | 6 | 7 | 8 | 9 | 10 |
|---|---|---|---|---|---|---|---|---|---|
| 0 | 0 1 12 13 | PTRS 0 | | PTRS 0 | | PTRS 0 | | PTRS 0 | |
| 1 | 0 1 12 13 | | | | | | | | |
| 2 | 2 3 14 15 | | | | | | | | |
| 3 | 2 3 14 15 | | | | | | | | |
| 4 | 4 5 16 17 | | | | | | | | |
| 5 | 4 5 16 17 | | | | | | | | |
| 6 | 0 1 12 13 | | | | | | | | |
| 7 | 0 1 12 13 | | | | | | | | |
| 8 | 2 3 14 15 | | | | | | | | |
| 9 | 2 3 14 15 | | | | | | | | |
| 10 | 4 5 16 17 | | | | | | | | |
| 11 | 4 5 16 17 | | | | | | | | |
| 12 | 0 1 12 13 | | | | | | | | |

(continued)

| Subcarrier/Symbol | 2 | 3 | 4 | 5 | 6 | 7 | 8 | 9 | 10 |
|---|---|---|---|---|---|---|---|---|---|
| 13 | 0 1 12 13 | | | | | | | | |
| 14 | 2 3 14 15 | | | | | | | | |
| 15 | 2 3 14 15 | | | | | | | | |
| 16 | 4 5 16 17 | | | | | | | | |
| 17 | 4 5 16 17 | | | | | | | | |
| 18 | 0 1 12 13 | | | | | | | | |
| 19 | 0 1 12 13 | | | | | | | | |
| 20 | 2 3 14 15 | | | | | | | | |
| 21 | 2 3 14 15 | | | | | | | | |
| 22 | 4 5 16 17 | | | | | | | | |
| 23 | 4 5 16 17 | | | | | | | | |
| 24 | 0 1 12 13 | PTRS 0 | | PTRS 0 | | PTRS 0 | | PTRS 0 | |
| 25 | 0 1 12 13 | | | | | | | | |
| 26 | 2 3 14 15 | | | | | | | | |
| 27 | 2 3 14 15 | | | | | | | | |
| 28 | 4 5 16 17 | | | | | | | | |
| 29 | 4 5 16 17 | | | | | | | | |
| 30 | 0 1 12 13 | | | | | | | | |
| 31 | 0 1 12 13 | | | | | | | | |
| 32 | 2 3 14 15 | | | | | | | | |
| 33 | 2 3 14 15 | | | | | | | | |
| 34 | 4 5 16 17 | | | | | | | | |
| 35 | 4 5 16 17 | | | | | | | | |

In Table 10, the PTRS port is associated with a DMRS port 1000, a frequency density of the PTRS is 2 RBs (1 RB=12 REs), a time density of the PTRS is 2 OFDM symbols, and a configured subcarrier offset corresponding to the DMRS port associated with the PTRS port is offset00. In this case, a time-frequency position of the PTRS port 0 is shown in Table 10.

For the association between the PTRS port and the DMRS port, a method for indicating the association is further defined in an NR standard as follows.

A phase tracking reference signal-demodulation reference signal association (*PTRS-DMRS association*) field in the DCI may indicate a PTRS-DMRS association. There are two possibilities for the indication, that is, 0 bits or 2 bits.

When the *PTRS-DMRS association* field is 0 bits, it indicates that the *PTRS-DMRS association* field is not present. Alternatively, when a maximum rank (*maxRank*) is 1, because no PTRS port is configured or there is only one candidate DMRS port, there is no need to perform DMRS port association on the PTRS port.

When the *PTRS-DMRS association* field is 2 bits, a table for selecting a maximum number of PTRS ports configured based on the *PTRS-DMRS association* field is as follows.

Table 11 PTRS-DMRS association corresponding to PTRS port 0

| Value | DMRS port |
|---|---|
| 0 | $1^{st}$ scheduled DMRS port |
| 1 | $2^{nd}$ scheduled DMRS port |
| 2 | $3^{rd}$ scheduled DMRS port |

(continued)

| Value | DMRS port |
|---|---|
| 3 | 4th scheduled DMRS port |

Table 11 corresponds to configuration in which a number of PTRS ports is 1 (namely, the PTRS port 0), and the *PTRS-DMRS association* field indicates one of a maximum of four candidate DMRS ports (namely, scheduled DMRS ports). In this case, an index of the DMRS port associated with the PTRS port 0 is determined, and a PTRS sequence and a time-frequency resource mapping manner are determined based on the index of the DMRS port and according to the foregoing PTRS time-frequency resource mapping rule.

Similarly, the following Table 12 corresponds to configuration in which a number of PTRS ports is 2 (namely, a PTRS port 0 and a PTRS port 1).

Table 12 PTRS-DMRS association for uplink PTRS ports 0 and 1

| Value of an MSB | DMRS port | | Value of an LSB | DMRS port |
|---|---|---|---|---|
| 0 | 1st DMRS port which shares PTRS port 0 | | 0 | 1st DMRS port which shares PTRS port 1 |
| 1 | 2nd DMRS port which shares PTRS port 0 | | 1 | 2nd DMRS port which shares PTRS port 1 |

A most significant bit (most significant bit, MSB) of the *PTRS-DMRS association* field indicates a DMRS port that shares the PTRS port 0, and a least significant bit (least significant bit, LSB) of the *PTRS-DMRS association* field indicates a DMRS port that shares the PTRS port 1.

Alternatively, an MSB of the *PTRS-DMRS association* field may indicate a DMRS port that shares the PTRS port 1, and an LSB of the *PTRS-DMRS association* field may indicate a DMRS port that shares the PTRS port 0.

In this application, a concept of an antenna coherence group is additionally introduced to further describe the association between the PTRS port and the DMRS port. It should be first noted that, according to an existing NR protocol, a scenario of the configuration in which a number of PTRS ports is 2 usually occurs in partial-coherent (partial-coherent) and non-coherent (non-coherent) uplink precoding matrix transmission (UL Codebook based transmission) modes; and correspondingly, a scenario of the configuration in which a number of PTRS ports is 1 usually occurs in a full-coherent (full-coherent) uplink precoding matrix transmission mode.

Herein, a physical meaning of the antenna coherence group is briefly described by using the following precoding matrix.

Full coherence means that a same data stream can be transmitted through all antenna ports.

Partial coherence means that a same data stream can be transmitted through some antenna ports.

Non-coherence means that only one data stream can be transmitted through each antenna port.

The following Table 13 is used as an example. A transmission precoding matrix index (transmission precoding matrix index, TPMI) set corresponds to four-stream uplink transmission of the terminal with four transmit antennas (namely, four-transmit antenna four-stream). A precoding matrix corresponding to a precoding matrix 0 (namely, a TPMI index is 0) may be understood as non-coherent transmission, and precoding matrices corresponding to a precoding matrix 1 (namely, a TPMI index is 1) and a precoding matrix 2 (namely, a TPMI index is 2) may be understood as partial-coherent transmission, and precoding matrices corresponding to a precoding matrix 3 (namely, a TPMI index is 3) and a precoding matrix 4 (namely, a TPMI index is 4) may be understood as full-coherent transmission. In this example, it may be intuitively understood that, for a four-transmit antenna four-stream uplink precoding matrix, one row of the precoding matrix corresponds to one PUSCH antenna port/sounding reference signal (sounding reference signal, SRS) port, and one column of the precoding matrix corresponds to one uplink transmission stream (which may also be understood as one DMRS port).

Table 13 Precoding matrix W using four antenna ports for four-stream transmission

| TPMI index | *W* (ordered from left to right in increasing order of TPMI index) | | | |
|---|---|---|---|---|
| 0-3 | $\frac{1}{2}\begin{bmatrix}1&0&0&0\\0&1&0&0\\0&0&1&0\\0&0&0&1\end{bmatrix}$ | $\frac{1}{2\sqrt{2}}\begin{bmatrix}1&1&0&0\\0&0&1&1\\1&-1&0&0\\0&0&1&-1\end{bmatrix}$ | $\frac{1}{2\sqrt{2}}\begin{bmatrix}1&1&0&0\\0&0&1&1\\j&-j&0&0\\0&0&j&-j\end{bmatrix}$ | $\frac{1}{4}\begin{bmatrix}1&1&1&1\\1&-1&1&-1\\1&1&-1&-1\\1&-1&-1&1\end{bmatrix}$ |
| 4 | $\frac{1}{4}\begin{bmatrix}1&1&1&1\\1&-1&1&-1\\j&j&-j&-j\\j&-j&-j&j\end{bmatrix}$ | - | - | - |

Corresponding to the PTRS, for partial-coherent and non-coherent uplink precoding matrix transmission, a number of actually transmitted PTRS ports depends on an uplink TPMI form and a maximum number of streams.

For partial-coherent and non-coherent antenna configuration, a PUSCH port 0 and a PUSCH port 2 share the PTRS port 0, and a PUSCH port 1 and a PUSCH port 3 share the PTRS port 1 (it may be understood that those determine mapping of a PUSCH port to a PTRS port and a PUSCH port on which a PTRS is transmitted). In addition, the PTRS port 0 is associated with an 'x'$^{th}$ uplink stream, and the PTRS port 1 is associated with a 'y'$^{th}$ uplink stream, where x and y are determined (indicated by DCI) according to Table 12.

Currently, a single terminal supports a maximum of four PUSCH/SRS ports and a maximum of four streams for uplink transmission. For a case in which a maximum of eight PUSCH/SRS ports are supported and/or a maximum of eight streams for uplink transmission are supported, there is no corresponding solution for determining the association between the PTRS port and the DMRS port in a current protocol.

In view of this, this application provides a communication solution. DCI indicates an association between at least one PTRS port and at least one DMRS port, and an association between the at least one PTRS port and at least one PUSCH/SRS port is predefined, so that the association between the PTRS port and each of the DMRS port and the PUSCH/SRS port can be accurately determined. This improves communication reliability.

FIG. 4 is a schematic flowchart of a communication method according to an embodiment of this application. For example, the method may include the following steps.

S401: A network device transmits radio resource control (radio resource control, RRC) signaling.

Correspondingly, a terminal receives the RRC signaling.

For example, an uplink PTRS signal may be configured by using a phase tracking reference signal-uplink configuration (PTRS-UplinkConfig) information element in the RRC signaling.

The RRC signaling may be used to configure a maximum number of uplink PTRS ports. For example, the maximum number of uplink PTRS ports may be configured by using a higher layer parameter maxNrofPorts in the PTRS-UplinkConfig information element.

It is assumed that a number of PUSCH ports shared by one PTRS port is greater than or equal to a number of PUSCH ports corresponding to one stream. It may be understood that one data stream is transmitted on a maximum of four PUSCH ports when Ng=2. In this case, one PTRS port may correspond to at least four PUSCH ports, that is, a maximum number of PTRS ports is less than or equal to 2. One data stream is transmitted on a maximum of two PUSCH ports when Ng=4. In this case, a maximum number of PTRS ports is less than or equal to 4.

Therefore, a relationship between Ng and a number of PTRS ports may be obtained as follows:

a maximum number of uplink PTRS ports is 1 when Ng=1;
a maximum number of uplink PTRS ports is 2 when Ng=2; or
a maximum number of uplink PTRS ports is 4 when Ng=4.

The network device may configure a number of Ng by using the RRC signaling, or the terminal may report a number of Ng. For example, the number of Ng is 1, 2, or 4.

The network device may configure the maximum number of uplink PTRS ports by using higher layer signaling (for example, the RRC signaling). For example, the network device may transmit first information, where the first information is used to configure a maximum of Q uplink PTRS ports, and $Q \leq M$. The first information is higher layer signaling such as the RRC signaling. In the foregoing eight-transmit antenna eight-stream scenario, M may be 1 when Ng=1; M may be 2 when Ng=2; or M may be 4 when Ng=4. For example, the network device configures "n1" when the maximum number of uplink PTRS ports is 1; the network device configures "n1" and "n2" or "n2" when the maximum number of uplink PTRS ports is 2; or the network device configures "n1", "n2", and "n4" or "n4" when the maximum number of uplink PTRS ports is 4.

Alternatively, the terminal may report a supported maximum number of uplink PTRS ports. For example, the supported maximum number of uplink PTRS ports reported by the terminal is M, where M is a positive integer.

For example, the terminal reports the supported maximum number of uplink PTRS ports. The terminal reports "n1" when the maximum number of PTRS ports is 1; the terminal reports "n1" and "n2" or "n2" when the maximum number of PTRS ports is 2; or the terminal reports "n1", "n2", and "n4" or "n4" when the maximum number of PTRS ports is 4.

The RRC signaling may be further used to configure a current PTRS port of the terminal.

The RRC signaling may be further used to configure a subcarrier offset between a PTRS port and a DMRS port associated with the PTRS port. The subcarrier offset may be any one of offset00, offset01, offset10, and offset11 in Table 7. For example, any one of subcarrier offsets: offset01, offset10, and offset11 may be configured by using a resource element offset (resourceElementOffset) field in a higher layer parameter "phase tracking reference signal-downlink configuration (PTRS-DownlinkConfig)". If there is no resourceElementOffset field in the higher layer parameter PTRS-DownlinkConfig, the subcarrier offset is "offset00" by default.

The RRC signaling may be further used to configure one or more RB threshold ranges. As shown in Table 8, the RRC signaling is used to configure the following RB threshold range: $N_{RB0\sim1}$. For example, an RRC field may be frequencyDensity, and a value of the RRC field may be two values in integers {1...276}:

SEQUENCE(SIZE(2))OF INTEGER(1...276) OPTIONAL, --Need S

The RRC signaling may be further used to configure one or more MCS threshold ranges. As shown in Table 9, the RRC signaling is used to configure the following MCS threshold range: ptrs-MCS1~4.

For example, the RRC field may be timeDensity, and
a value of the RRC field may be three values in integers {0...29}:

SEQUENCE(SIZE(3))OF INTEGER(1...29) OPTIONAL, --Need S

In this embodiment, each of at least one PTRS port corresponds to one or more Ng groups. Each Ng in the one or more Ng groups corresponds to one or more PUSCH ports, or each Ng in the one or more Ng groups corresponds to one or more SRS ports. A correspondence between Ng and an SRS port is similar to a correspondence between Ng and a PUSCH port. In this embodiment, the correspondence between Ng and the PUSCH port is used as an example for description. The network device may transmit, to the terminal, at least one piece of the following information: a rank of an uplink PUSCH and a TPMI. The terminal may determine the precoding matrix based on the rank of the uplink PUSCH and the TPMI, to determine the at least one PTRS port. The precoding matrix includes X PUSCH ports and Y data layers. Each data layer corresponds to one DMRS port, where X is greater than 4; or X is greater than 4 and Y is greater than 4. The X PUSCH ports are reported by the terminal or configured by the network device, and the X PUSCH ports are associated with the M PTRS ports according to a predefined rule. When Y is greater than 4, PUSCH transmission may correspond to two codewords. It is assumed that indexes of a maximum of eight data layers are 0 to 7. A codeword-to-data layer mapping rule is shown in the following table.

| Number of data layers/Value of Y | Indexes of data layers corresponding to a codeword 0 | Indexes of data layers corresponding to a codeword 1 |
|---|---|---|
| 5 | 0, 1 | 2, 3, 4 |
| 6 | 0, 1, 2 | 3, 4, 5 |
| 7 | 0, 1, 2 | 3, 4, 5, 6 |
| 8 | 0, 1, 2, 3 | 4, 5, 6, 7 |

It may be understood from the foregoing table that one codeword corresponds to a plurality of data layers, and each data layer corresponds to one codeword. In addition, each data layer corresponds to one DMRS port. It may also be understood that one codeword corresponds to a plurality of DMRS ports, and each DMRS port corresponds to one codeword. In other words, "the first DMRS port is a DMRS port corresponding to the first codeword" in claim 1 may be understood as that the terminal device may determine, by using the TPMI and through codeword-to-data layer mapping, a DMRS port corresponding to each codeword, and may determine the first DMRS port corresponding to the first codeword. Similarly, the terminal may determine a second DMRS port corresponding to a second codeword.

For example, when Ng=1, the maximum number of PTRS ports supported by the terminal/configured by the network device is 1, and the network device may configure one PTRS port (a PTRS port 0) for the terminal by using higher layer signaling. In this case, the PTRS port 0 may be associated with PUSCH ports 0 to 7 according to the predefined rule.

For example, when Ng=2, the network device configures or predefines as follows: Ng0 corresponds to PUSCH ports 0 to 3, and Ng1 corresponds to PUSCH ports 4 to 7. In this embodiment, descriptions of a correspondence between Ng and PUSCH ports are merely an example, and the correspondence is not limited. The maximum number of PTRS ports supported by the terminal/configured by the network device is 2, and the network device may configure one PTRS port (a PTRS port 0) for the terminal. In this case, according to the predefined rule, the PTRS port 0 may be associated with PUSCH ports 0 to 7, and the PTRS port 0 corresponds to two Ng. Alternatively, the network device may configure two PTRS ports (a PTRS port 0 and a PTRS port 1) for the terminal. In addition, as shown in FIG. 5a, PUSCH ports 0 to 3 correspond to one Ng, and PUSCH ports 4 to 7 correspond to the other Ng. In this case, according to the predefined rule, the PTRS port 0 may be associated with the PUSCH ports 0 to 3, and the PTRS port 1 may be associated with the PUSCH ports 4 to 7, where one PTRS port corresponds to one Ng.

When Ng=2, the network device may alternatively configure or predefine that Ng0 corresponds to PUSCH ports 0, 2, 4, and 6, and Ng1 corresponds to PUSCH ports 1, 3, 5, and 7. In this embodiment, descriptions of a correspondence between Ng and PUSCH ports are merely an example, and the correspondence is not limited. The maximum number of PTRS ports supported by the terminal/configured by the network device is 2, and the network device may configure one PTRS port (a PTRS port 0) for the terminal. In this case, according to the predefined rule, the PTRS port 0 may be associated with PUSCH ports 0 to 7, and the PTRS port 0 corresponds to two Ng. Alternatively, the network device may configure two PTRS ports (a PTRS port 0 and a PTRS port 1) for the terminal. In addition, as shown in FIG. 5b, PUSCH ports 0, 2, 4, and 6 correspond to one Ng, and PUSCH ports 1, 3, 5, and 7 correspond to the other Ng. In this case, according to the predefined rule, the PTRS port 0 may be associated with the PUSCH ports 0, 2, 4, and 6, and the PTRS port 1 may be associated with the PUSCH ports 1, 3, 5, and 7, where one PTRS port corresponds to one Ng.

When Ng=4, the maximum number of PTRS ports supported by the terminal/configured by the network device is 4, and the network device may configure one, two, three, or four PTRS ports for the terminal. When the network device configures one, two, or three PTRS ports for the terminal, one PTRS port may correspond to a plurality of Ng.

For example, as shown in FIG. 6a, Ng=4. PUSCH ports 0 and 1 belong to Ng0, PUSCH ports 2 and 3 belong to Ng1, PUSCH ports 4 and 5 belong to Ng2, and PUSCH ports 6 and 7 belong to Ng4. The network device configures four PTRS ports for the terminal, where one PTRS port corresponds to one Ng. In this case, according to the predefined rule, a PTRS port p0 corresponds to the PUSCH ports 0 and 1, a PTRS port p1 corresponds to the PUSCH ports 2 and 3, a PTRS port p2 corresponds to the PUSCH ports 4 and 5, and a PTRS port p3 corresponds to the PUSCH ports 6 and 7.

For example, as shown in FIG. 6b, Ng=4. PUSCH ports 0 and 4 belong to Ng0, PUSCH ports 1 and 5 belong to Ng1, PUSCH ports 2 and 6 belong to Ng2, and PUSCH ports 3 and 7 belong to Ng4. The network device configures four PTRS ports for the terminal, where one PTRS port corresponds to one Ng. In this case, according to the predefined rule, a PTRS port p0 corresponds to the PUSCH ports 0 and 4, a PTRS port p1 corresponds to the PUSCH ports 1 and 5, a PTRS port p2 corresponds to the PUSCH ports 2 and 6, and a PTRS port p3 corresponds to the PUSCH ports 3 and 7.

For another example, as shown in FIG. 6b, Ng=4. PUSCH ports 0 and 4 belong to Ng0, PUSCH ports 1 and 5 belong to Ng1, PUSCH ports 2 and 6 belong to Ng2, and PUSCH ports 3 and 7 belong to Ng4. The network device configures two PTRS ports for the terminal, where one PTRS port corresponds to two Ng. In this case, according to the predefined rule, a PTRS port p0 corresponds to the PUSCH ports 0, 2, 4, and 6, and a PTRS port p1 corresponds to the PUSCH ports 1, 3, 5 and 7.

For another example, as shown in FIG. 7, Ng=4. PUSCH ports 0 and 1 belong to Ng0, PUSCH ports 2 and 3 belong to Ng1, PUSCH ports 4 and 5 belong to Ng2, and PUSCH ports 6 and 7 belong to Ng4. The network device configures two PTRS ports for the terminal, where one PTRS port corresponds to two Ng. In this case, according to the predefined rule, a PTRS port p0 corresponds to the PUSCH ports 0 to 3, and a PTRS port p1 corresponds to the PUSCH ports 4 to 6.

It can be learned that, in this embodiment, one PTRS port may correspond to one or more Ng, where each Ng corresponds to a plurality of PUSCH ports. However, in the conventional technology, that is, in a four-transmit antenna four-stream scenario, for non-coherent transmission, one PTRS port corresponds to two Ng, where one Ng corresponds to one PUSCH port; for partial-coherent transmission, one PTRS port corresponds to one Ng, where one Ng corresponds to two PUSCH ports; and for full-coherent transmission, one PTRS port corresponds to one Ng, where one Ng corresponds to four PUSCH ports.

For example, for a correspondence between a PTRS port and a PUSCH port, an association between the PTRS port and the PUSCH port may alternatively be directly established. For example, a PTRS port 0 corresponds to PUSCH ports 0, 1, 4, and 5, and a PTRS port 1 corresponds to PUSCH ports 2, 3, 6, and 7. In this case, the PTRS port 0 may be associated with a DMRS port corresponding to a data layer transmitted on the PUSCH ports 0, 1, 4, and 5, and the PTRS port 1 may be associated with a DMRS port corresponding to a data layer transmitted on the PUSCH ports 2, 3, 6, and 7. Further, the data layer transmitted on the PUSCH ports 0, 1, 4, and 5 may correspond to a codeword 0, and the data layer transmitted on the PUSCH ports 2, 3, 6, and 7 may correspond to a codeword 1. In this case, the PTRS port 0 may correspond to the codeword 0, and the PTRS port may correspond to the codeword 1. In other words, corresponding to claims 4 and 5, the first codeword corresponds to the first PTRS port, and the second codeword corresponds to the second PTRS port.

For example, the data layer transmitted on the PUSCH ports 0, 1, 4, and 5 corresponds to the codeword 0, and the data layer transmitted on the PUSCH ports 2, 3, 6, and 7 corresponds to the codeword 1. In this case, the PTRS port 0 corresponds to the codeword 0, and the PTRS port may correspond to the codeword 1. In this case, a value of X is 0, and corresponds to PUSCH port indexes 0 to 7, and a maximum value of Y is 8, and corresponds to eight PUSCH transmission data layers. In this case, a value of a maximum number of layers that may be transmitted on the PUSCH ports 0, 1, 4, and 5 may be $L_1$, and a value of a maximum number of layers that may be transmitted on the PUSCH ports 2, 3, 6, and 7 may be $L_2$. It may be understood that maximum values of both L1 and L2 are 4. In addition, each PUSCH data layer corresponds to one DMRS port, that is, a maximum value of the DMRS port corresponding to the PUSCH ports 0, 1, 4, and 5 is $L_1$, and a maximum value of the DMRS port corresponding to the PUSCH ports 2, 3, 6, and 7 is $L_2$. It may also be understood that a maximum value of the DMRS port corresponding to the PTRS port 0 is $L_1$, and a maximum value of the DMRS port corresponding to the PTRS port 1 is $L_2$. In other words, a value of the first DMRS port shared by the first PTRS port in claim 10 is $L_1$, and a value of the second DMRS port shared by the second PTRS port is $L_2$.

It should be noted that the association between a PTRS port and a PUSCH port, the association between a PTRS port and a codeword, and a specific port number and codeword index are merely examples, and are not limited.

The foregoing describes the association between a PTRS port and a PUSCH port, and the association between a PTRS port and a PUSCH port may be determined according to the predefined rule. The following describes an association between a PTRS port and a DMRS port.

S402: The network device transmits DCI.

Correspondingly, the terminal receives the DCI.

This embodiment is applicable to a scenario in which there are more than four PUSCH/SRS ports in uplink, for example, there may be five to eight PUSCH/SRS ports. Alternatively, this embodiment is applicable to a scenario in which there are more than four PUSCH/SRS ports and more than four streams in uplink, for example, is applicable to a scenario in which there are any combination of five to eight PUSCH/SRS ports and five to eight streams.

For example, there are eight uplink PUSCH/SRS ports and eight streams (eight-transmit antenna eight-stream for short) in uplink. There are three candidate values of Ng: {1, 2, 4}. Corresponding to the foregoing definition of the antenna coherence group, it may be understood that when the value of Ng is {2, 4}, the antenna coherence group is partial coherence, and corresponds to the following precoding matrix forms.

When Ng=2, for example, the precoding matrix is:

$$\begin{bmatrix} 1 & 1 & 1 & 1 & 0 & 0 & 0 & 0 \\ 1 & 1 & 1 & 1 & 0 & 0 & 0 & 0 \\ 1 & 1 & 1 & 1 & 0 & 0 & 0 & 0 \\ 1 & 1 & 1 & 1 & 0 & 0 & 0 & 0 \\ 0 & 0 & 0 & 0 & 1 & 1 & 1 & 1 \\ 0 & 0 & 0 & 0 & 1 & 1 & 1 & 1 \\ 0 & 0 & 0 & 0 & 1 & 1 & 1 & 1 \\ 0 & 0 & 0 & 0 & 1 & 1 & 1 & 1 \end{bmatrix}$$

When Ng=2, the precoding matrix may alternatively be the precoding matrix shown in FIG. 5b. Herein, only the foregoing precoding matrix is used as an example for description.

When Ng=4, for example, the precoding matrix is:

$$\begin{bmatrix} 1 & 1 & 0 & 0 & 0 & 0 & 0 & 0 \\ 1 & 1 & 0 & 0 & 0 & 0 & 0 & 0 \\ 0 & 0 & 1 & 1 & 0 & 0 & 0 & 0 \\ 0 & 0 & 1 & 1 & 0 & 0 & 0 & 0 \\ 0 & 0 & 0 & 0 & 1 & 1 & 0 & 0 \\ 0 & 0 & 0 & 0 & 1 & 1 & 0 & 0 \\ 0 & 0 & 0 & 0 & 0 & 0 & 1 & 1 \\ 0 & 0 & 0 & 0 & 0 & 0 & 1 & 1 \end{bmatrix}$$

When Ng=4, the precoding matrix may alternatively be the precoding matrix shown in FIG. 6b. Herein, only the foregoing precoding matrix is used as an example for description.

For different Ng, current numbers of PTRS ports configured by the network device for the terminal are different, and associations between PTRS ports and DMRS ports are different.

For the foregoing examples, an association between a PTRS port and a DMRS port may be designed as follows. (1) When Ng=1 and a number of PTRS ports is 1, an association between a PTRS port and a DMRS port is shown in the following table.

Table 14 PTRS-DMRS association

| Value | DMRS port |
|---|---|
| 0 | 1st scheduled DMRS port |
| 1 | 2nd scheduled DMRS port |
| 2 | 3rd scheduled DMRS port |
| 3 | 4th scheduled DMRS port |
| 4 | 5th scheduled DMRS port |
| 5 | 6th scheduled DMRS port |
| 6 | 7th scheduled DMRS port |
| 7 | 8th scheduled DMRS port |

The network device transmits the DCI to the terminal, where the DCI indicates an association between at least one PTRS port and at least one DMRS port. Specifically, a *PTRS-DMRS association* field in the DCI indicates the association between the PTRS port and the DMRS port. For example, when a current number of PTRS ports configured by the network device for the terminal is 1, the *PTRS-DMRS association* field in the DCI may be 3 bits, and indicates any one of eight values.

(2) When Ng=2 and a number of PTRS ports is 2, an association between a PTRS port and a DMRS port is shown in the following table.

Table 15 PTRS-DMRS association

| Value of an MSB | DMRS port | | Value of an LSB | DMRS port |
|---|---|---|---|---|
| 0 | 1st scheduled DMRS port which shares PTRS port 0 | | 0 | 1st scheduled DMRS port which shares PTRS port 1 |
| 1 | 2nd scheduled DMRS port which shares PTRS port 0 | | 1 | 2nd scheduled DMRS port which shares PTRS port 1 |
| 2 | 3rd scheduled DMRS port which shares PTRS port 0 | | 2 | 3rd scheduled DMRS port which shares PTRS port 1 |
| 3 | 4th scheduled DMRS port which shares PTRS port 0 | | 3 | 4th scheduled DMRS port which shares PTRS port 1 |

When the number of PTRS ports is greater than 1, an MSB and an LSB of the *PTRS-DMRS association* field in the DCI need to be used for differentiation, to indicate DMRS ports associated with the PTRS port 0 and the PTRS port 1. For example, for the PTRS-DMRS association, the MSB of the *PTRS-DMRS association* field in the DCI indicates a DMRS port associated with the PTRS port 0, and the LSB of the *PTRS-DMRS association* field in the DCI indicates a DMRS port associated with the PTRS port 1. Alternatively, the LSB of the *PTRS-DMRS association* field in the DCI indicates a DMRS port associated with the PTRS port 0, and the MSB of the *PTRS-DMRS association* field in the DCI indicates a DMRS port associated with the PTRS port 1.

When Ng=2, the network device configures two PTRS ports (the PTRS port 0 and the PTRS port 1) for the terminal. In addition, as shown in FIG. 5a, PUSCH ports 0 to 3 correspond to one Ng, and PUSCH ports 4 to 7 correspond to the other Ng. In this case, according to the predefined rule, the PTRS port 0 may be associated with the PUSCH ports 0 to 3, and the PTRS port 1 may be associated with the PUSCH ports 4 to 7, where one PTRS port corresponds to one Ng. The *PTRS-DMRS association* field in the DCI includes an MSB and an LSB. The MSB indicates an association between the PTRS port 0 and a DMRS port, and the LSB indicates an association between the PTRS port 1 and a DMRS port. Both the MSB and the LSB are 2 bits.

(3) When Ng=4 and a number of PTRS ports is 4, it is assumed that two PUSCH ports share one PTRS port, a PTRS-DMRS association is shown in the following table:

Table 16 PTRS-DMRS association

| Value of an MSB | DMRS port | | Value of an LSB | DMRS port |
|---|---|---|---|---|
| 0 | 1st DMRS port which shares PTRS port 0 | | 0 | 1st DMRS port which shares PTRS port 1 |
| 1 | 2nd DMRS port which shares PTRS port 0 | | 1 | 2nd DMRS port which shares PTRS port 1 |
| Value of an MSB | DMRS port | | Value of an LSB | DMRS port |
| 0 | 1st DMRS port which shares PTRS port 2 | | 0 | 1st DMRS port which shares PTRS port 3 |
| 1 | 2nd DMRS port which shares PTRS port 2 | | 1 | 2nd DMRS port which shares PTRS port 3 |

When the number of PTRS ports is greater than 2, two MSBs and two LSBs of the *PTRS-DMRS association* field in the DCI need to be used for differentiation, to respectively indicate DMRS ports associated with the PTRS port 0, the PTRS port 1, the PTRS port 2, and the PTRS port 3. For example, for the PTRS-DMRS association, the first MSB of the *PTRS-DMRS association* field in the DCI indicates a DMRS port associated with the PTRS port 0, and the first LSB of the *PTRS-DMRS association* field in the DCI indicates a DMRS port associated with the PTRS port 1. The second MSB of the *PTRS-DMRS association* field in the DCI indicates a DMRS port associated with the PTRS port 2, and the second LSB of the *PTRS-DMRS association* field in the DCI indicates a DMRS port associated with the PTRS port 3.

Corresponding to the PTRS-DMRS association shown in Table 16, it may be understood that an association between a corresponding uplink precoding matrix form and a PTRS port is shown in FIG. 6a.

Specifically, when Ng=4, the network device configures four PTRS ports (a PTRS port 0, a PTRS port 1, a PTRS port 2, and a PTRS port 3) for the terminal. In addition, as shown in FIG. 6a, PUSCH ports 0 and 1 correspond to Ng0, PUSCH ports 2 and 3 correspond to Ng1, PUSCH ports 4 and 5 correspond to Ng2, and PUSCH ports 6 and 7 correspond to Ng3. In this case, according to the predefined rule, the PTRS port 0 may be associated with the PUSCH ports 0 and 1, the PTRS port 1 may be associated with the PUSCH ports 2 and 3, the PTRS port 2 may be associated with the PUSCH ports 4 and 5, and the PTRS port 3 may be associated with the PUSCH ports 6 and 7, where one PTRS port corresponds to one Ng. The *PTRS-DMRS association* field in the DCI includes two MSBs and two LSBs, where the first MSB indicates an association between the PTRS port 0 and a DMRS port, the first LSB indicates an association between the PTRS port 1 and a DMRS port, the second MSB indicates an association between the PTRS port 2 and a DMRS port, and the second LSB indicates an association between the PTRS port 3 and a DMRS port. Each MSB and each LSB are 1 bit.

When Ng=4, because there is a possibility that only two PTRS ports are defined in a standard, in a case in which there are a maximum of two PTRS ports, as shown in FIG. 7, an association between two groups of Ng may be newly added (or an association between a PUSCH port and a PTRS port is directly defined), so that a maximum of four PUSCH ports share one PTRS port. In this case, two PTRS ports may also be supported.

When Ng=4 and a number of PTRS ports is 2, a corresponding PTRS-DMRS association is shown in the following table.

Table 17 PTRS-DMRS association

| Value of an MSB | DMRS port | | Value of an LSB | DMRS port |
|---|---|---|---|---|
| 0 | 1st DMRS port which shares PTRS port 0 | | 0 | 1st DMRS port which shares PTRS port 1 |
| 1 | 2nd DMRS port which shares PTRS port 0 | | 1 | 2nd DMRS port which shares PTRS port 1 |
| 2 | 3rd DMRS port which shares PTRS port 0 | | 2 | 3rd DMRS port which shares PTRS port 1 |
| 3 | 4th DMRS port which shares PTRS port 0 | | 3 | 4th DMRS port which shares PTRS port 1 |

For an indication of the association between the PTRS port and the DMRS port, refer to the foregoing descriptions. Details are not described herein again.

S403: The terminal determines, from the at least one DMRS port based on the DCI, a DMRS port associated with each of the at least one PTRS port.

The terminal selects a corresponding association between a PTRS port and a DMRS port based on a current number of PTRS ports configured by the network device for the terminal and different Ng, and determines, from the association based on an indication of the DCI, the DMRS port associated with each of the at least one PTRS port.

For example, when Ng=1 and a number of PTRS ports is 1, after receiving the DCI, the terminal may determine, based on Table 14 and the DCI, a DMRS port associated with a current PTRS port. For example, for the type 1 DMRS, DMRS ports scheduled after expansion are {0, 1, 2, 3, 8, 9, 10, 11}. It is assumed that the DCI indicates "01", and a current number of PTRS ports configured by the network device for the terminal is the PTRS port 0. A DMRS port associated with the PTRS 0 is the 2nd scheduled DMRS port, namely, a DMRS port 1001.

For another example, when Ng=2 and a number of PTRS ports is 2, for the type 1 DMRS, DMRS ports scheduled after expansion are {0, 1, 2, 3, 8, 9, 10, 11}, and scheduled DMRS ports that share the PTRS port 0 are {0, 1, 2, 3}. After the terminal receives the DCI, it is assumed that an MSB in the DCI is "10", the terminal determines that a scheduled DMRS port associated with the PTRS port 0 is the 3rd scheduled DMRS port, namely, a DMRS port 1002. When scheduled DMRS ports that share the PTRS port 1 are {8, 9, 10, 11}, it is assumed that an LSB in the DCI is "01", the terminal determines that a scheduled DMRS port associated with the PTRS port 1 is the 2nd scheduled DMRS port, namely, a DMRS port 1009.

For another example, when Ng=4 and a number of PTRS ports is 4, for the type 1 DMRS, DMRS ports scheduled after expansion are {0, 1, 2, 3, 8, 9, 10, 11}, and scheduled DMRS ports that share the PTRS port 0 are {0, 1}. It is assumed that the first MSB in the DCI is "1", the terminal determines that a scheduled DMRS port associated with the PTRS port 0 is the 2nd scheduled DMRS port, namely, a DMRS port 1001. If scheduled DMRS ports that share the PTRS port 1 are {2, 3}, and it is assumed that the first LSB in the DCI is "0", the terminal determines that a scheduled DMRS port associated with the PTRS port 1 is the 1st scheduled DMRS port, namely, a DMRS port 1002. If scheduled DMRS ports that share the PTRS port 2 are {8, 9}, and it is assumed that the second MSB in the DCI is "1", the terminal determines that a scheduled DMRS port associated with the PTRS port 2 is the 2nd scheduled DMRS port, namely, a DMRS port 1009. If scheduled DMRS ports that share the PTRS port 3 are { 10, 11}, and it is assumed that the second LSB in the DCI is "0", the terminal determines that a scheduled DMRS port associated with the PTRS port 3 is the 1st scheduled DMRS port, namely, a DMRS port 1010.

Further, the terminal may further determine a time-frequency resource position of the PTRS signal and a PTRS signal sequence based on at least one of an index of the determined DMRS port, a currently scheduled MCS, and a number of currently scheduled RBs.

Specifically, the network device may configure the MCS currently scheduled by the terminal, and the terminal may determine a time density of the PTRS signal based on the currently scheduled MCS and according to Table 8. Further, a time domain position $l$ corresponding to the PTRS signal is determined based on the time density of the PTRS signal and a value formula of the time domain position $l$ corresponding to the PTRS signal.

The network device may configure a number of RBs currently scheduled by the terminal, and the terminal may determine a frequency density of the PTRS signal based on the number of currently scheduled RBs and according to Table 9. Further, the frequency domain position k corresponding to the PTRS signal is determined based on the frequency density of the PTRS signal and according to a value formula (Formula 7) of the frequency domain position k corresponding to the PTRS signal.

The terminal further determines the time-frequency resource position of the PTRS signal based on the time domain position $l$ and the frequency domain position $k$ that correspond to the PTRS signal and according to the formula 6.

The PTRS signal and a DMRS signal correspond to a same base sequence, that is, only corresponding $r(2n + k')$ in a DMRS signal generation formula (namely, the foregoing formula 5) is included, and time-frequency masks $w_f(k')$ and $w_t(l')$ are not included.

A formula of mapping between a time-frequency resource and a sequence of the PTRS signal may continue to use that in the foregoing descriptions. However, a difference from an existing protocol lies in that a possible design of a table of an index of a candidate DMRS port is described below after a DMRS port is expanded.

Table 18 The parameter $k_{\mathrm{ref}}^{\mathrm{RE}}$

| DM-RS antenna port $p$ | $k_{\mathrm{ref}}^{\mathrm{RE}}$ DM-RS configuration type 1 | | | | DM-RS configuration type 2 | | | |
|---|---|---|---|---|---|---|---|---|
| | *Resource element offset* | | | | *Resource element offset* | | | |
| | offset00 | offset01 | offset10 | offset11 | offset00 | offset01 | offset10 | offset11 |
| 1000 | 0 | 2 | 6 | 8 | 0 | 1 | 6 | 7 |
| 1001 | 2 | 4 | 8 | 10 | 1 | 6 | 7 | 0 |
| 1002 | 1 | 3 | 7 | 9 | 2 | 3 | 8 | 9 |

(continued)

| Table 18 The parameter $k_{\mathrm{ref}}^{\mathrm{RE}}$ | | | | | | | | |
|---|---|---|---|---|---|---|---|---|
| DM-RS antenna port *p* | $k_{\mathrm{ref}}^{\mathrm{RE}}$ DM-RS configuration type 1 | | | | DM-RS configuration type 2 | | | |
| | *Resource element offset* | | | | *Resource element offset* | | | |
| | offset00 | offset01 | offset10 | offset11 | offset00 | offset01 | offset10 | offset11 |
| 1003 | 3 | 5 | 9 | 11 | 3 | 8 | 9 | 2 |
| 1004 | - | - | - | - | 4 | 5 | 10 | 11 |
| 1005 | - | - | - | - | 5 | 10 | 11 | 4 |
| 1008 | 6 | 8 | 0 | 2 | - | - | - | - |
| 1009 | 8 | 10 | 2 | 4 | - | - | - | - |
| 1010 | 7 | 9 | 1 | 3 | - | - | - | - |
| 1011 | 9 | 11 | 3 | 5 | - | - | - | - |
| 1012 | - | - | - | - | 6 | 7 | 0 | 1 |
| 1013 | - | - | - | - | 7 | 0 | 1 | 6 |
| 1014 | - | - | - | - | 8 | 9 | 2 | 3 |
| 1015 | - | - | - | - | 9 | 2 | 3 | 8 |
| 1016 | - | - | - | - | 10 | 11 | 4 | 5 |
| 1017 | - | - | - | - | 11 | 4 | 5 | 10 |

S404: The terminal transmits at least one PTRS signal through the at least one PTRS port based on the DMRS port associated with each of the at least one PTRS port.

The terminal determines a sequence of the at least one PTRS signal based on the DMRS port associated with each of the at least one PTRS port, and transmits the PTRS signal on the corresponding PTRS port after determining the time-frequency resource position of the at least one PTRS signal according to Table 7.

For example, the PTRS-DMRS association is used to determine the sequence and a time-frequency resource of the PTRS signal. A specific transmit behavior is still transmitting based on the sequence and the time-frequency resource that correspond to the PTRS port, and is unrelated to a DMRS port.

According to the communication method provided in this embodiment of this application, the DCI indicates the association between the at least one PTRS port and the at least one DMRS port, and the association between the at least one PTRS port and at least one PUSCH/SRS port is predefined, so that the association between the PTRS port and each of the DMRS port and the PUSCH/SRS port can be accurately determined. This improves communication reliability.

The association between the PTRS port and each of the DMRS port and the PUSCH/SRS port is described in the foregoing embodiment. In addition, a second codeword (codeword) may be introduced in a scenario in which there are more than four PUSCH/SRS ports and/or more than four streams in uplink. In this scenario, a manner of determining an association between a PTRS port and a DMRS port to improve communication reliability is described in the following embodiments.

It may be understood that a number of codewords is not limited in the embodiment shown in FIG. 4, and the second codeword may alternatively be introduced in the embodiment. Therefore, content in the following embodiments may also be described with reference to the embodiment shown in FIG. 4.

FIG. 8 is a schematic flowchart of another communication method according to an embodiment of this application. For example, the method may include the following steps.

S801: A network device transmits RRC signaling.

Correspondingly, a terminal receives the RRC signaling.

The RRC signaling is used to configure at least one piece of the following information: a maximum number of uplink PTRS ports, a current PTRS port of the terminal, a subcarrier offset between a PTRS port and a DMRS port, an MCS threshold range, an RB threshold range, a number of PUSCH ports, and an antenna coherence number. For a specific configuration method, refer to step S401 in the foregoing embodiment.

S802: The network device transmits codeword indication information.

Correspondingly, the terminal receives the codeword indication information.

For example, the network device may transmit DCI to the terminal, where the DCI includes at least one piece of the following information: a rank of an uplink PUSCH and a TPMI.

The terminal may determine a number of codewords based on the rank of the uplink PUSCH. For example, if the rank of the uplink PUSCH is less than or equal to 4, it is determined that one codeword is required; or if the rank of the uplink PUSCH is greater than 4 and less than or equal to 8, it is determined that two codewords are required.

The TPMI corresponds to one precoding matrix, the precoding matrix includes X PUSCH ports and Y data layers, each data layer corresponds to one DMRS port, and X is greater than 4, or X is greater than 4 and Y is greater than 4. The X PUSCH ports are reported by the terminal or configured by the network device, and the X PUSCH ports are associated with M PTRS ports according to a predefined rule. For example, if the network device configures eight PUSCH/SRS ports, and the DCI indicates five transport layers, the TPMI indicates a precoding matrix of eight rows and five columns.

In conclusion, the terminal may determine the precoding matrix based on the rank of the uplink PUSCH and the TPMI, to determine at least one PTRS port. Specifically, for an association between the PTRS port and PUSCH ports, refer to the descriptions in the foregoing embodiments.

This embodiment is applicable to a scenario in which there are more than four PUSCH/SRS ports and more than four streams in uplink. In the scenario in which there are more than four streams in uplink, the second codeword may be introduced.

In a scenario in which there are two or more codewords, in this embodiment, DMRS ports corresponding to one or more layers in one codeword (the first codeword) are considered as candidate DMRS ports associated with the PTRS port.

The network device transmits the codeword indication information to the terminal. The codeword indication information indicates the first codeword, and the codeword indication information includes an MCS corresponding to the first codeword. In addition, the codeword indication information may further include at least one piece of the following information: a new data indicator (new data indicator, NDI) and a redundancy version (redundancy version, RV).

For example, the network device may alternatively transmit a plurality of groups of codeword indication information to the terminal, where each group of codeword indication information includes an MCS corresponding to each codeword. After receiving the plurality of groups of codeword indication information, the terminal may select, as the first codeword from a plurality of codewords, a codeword corresponding to a highest MCS. If the MCS is the highest, quality of a PTRS signal transmitted based on the DMRS ports corresponding to the one or more layers in the codeword is optimal.

The following provides example descriptions by using an example in which there are eight streams and a number of PTRS ports is 2.

In an example, the terminal determines the precoding matrix based on the rank of the uplink PUSCH and the TPMI, as shown in FIG. 5a. Rows sequentially correspond to PUSCH ports 0 to 7, and columns sequentially correspond to a number of uplink transport layers/DMRS ports 0 to 7. The precoding matrix includes two Ng (Ng0 and Ng1) and two codewords (a CW 0 and a CW 1). The network device configures two PTRS ports (a PTRS port 0 and a PTRS port 1).

Corresponding to the precoding matrix, a number of Ng is 2. In this case, the terminal may report that a maximum number of uplink PTRS ports supported by the terminal is 1 or 2. Herein, an example in which the terminal may report that a maximum number M of uplink PTRS ports supported by the terminal is 2 is used. Alternatively, the network device may configure a maximum number of uplink PTRS ports as 2.

According to the predefined rule, the precoding matrix shown in FIG. 5a is used as an example, PUSCH ports 0 to 3 share the PTRS port 0, and PUSCH ports 4 to 7 share the PTRS port 1. Herein, it may be understood that, physically, phase noise corresponding to the PUSCH ports 0 to 3 is measured through the PTRS port 0, and phase noise corresponding to the PUSCH ports 4 to 7 is measured through the PTRS port 1. It may be understood that a PTRS-DMRS association may be obtained according to the association method in this embodiment when a number of PTRS ports is 2 and the precoding matrix shown in FIG. 5b is used.

In this example, it is assumed that an MCS corresponding to the CW 0 is higher than an MCS corresponding to the CW 1, that is, the first codeword is the CW 0.

There may be the following three cases for the first codeword.

In a first case, the first codeword CW 0 includes $0^{th}$ to $3^{rd}$ columns in a precoding matrix shown in FIG. 9a, and the second codeword CW 1 includes $4^{th}$ to $7^{th}$ columns in the precoding matrix shown in FIG. 9a. In this case, each codeword corresponds to one PTRS port based on the association between the PTRS port and the PUSCH ports. To be specific, the first codeword CW 0 corresponds to the PTRS port 0, and the second codeword CW 1 corresponds to the PTRS port 1. In this case, the PUSCH ports 0 to 3 transmitted at four layers in the first codeword CW 0 correspond to the PTRS port 0, and the PUSCH ports 4 to 7 transmitted at four layers in the second codeword CW 1 correspond to the PTRS port 1.

As shown in the following table, the network device preconfigures or the terminal prestores an association between the PTRS port 0 and each of four scheduled DMRS ports.

Table 19 PTRS-DMRS association

| Value | DMRS port |
|---|---|
| 0 | 1st scheduled DMRS port which shares PTRS port 0 |
| 1 | 2nd scheduled DMRS port which shares PTRS port 0 |
| 2 | 3rd scheduled DMRS port which shares PTRS port 0 |
| 3 | 4th scheduled DMRS port which shares PTRS port 0 |

The value is a value of a *PTRS-DMRS association* field in the DCI. The *PTRS-DMRS association* field may be 2 bits, and indicates a scheduled DMRS port associated with the PTRS port 0.

In a second case, the first codeword CW 0 includes 0th to 2nd columns and a 7th column in a precoding matrix shown in FIG. 9b, and the second codeword CW 1 includes 3rd to 6th columns in the precoding matrix shown in FIG. 9b. In this case, the two codewords each correspond to two PTRS ports based on the association between the PTRS port and the PUSCH ports. To be specific, the first codeword CW 0 corresponds to the PTRS port 0 and the PTRS port 1, and the second codeword CW 1 corresponds to the PTRS port 0 and the PTRS port 1. In this case, the PUSCH ports 0 to 2 transmitted at three layers in the first codeword CW 0 correspond to the PTRS port 0, and the PUSCH port 7 transmitted at the fourth layer in the first codeword CW 0 corresponds to the PTRS port 1; and the PUSCH port 3 transmitted at the first layer in the second codeword CW 1 corresponds to the PTRS port 0, and the PUSCH ports 4 to 6 transmitted at the second to fourth layers in the second codeword CW 1 correspond to the PTRS port 1.

In this case, for the PTRS port 1 corresponding to the PUSCH port 7 transmitted at the fourth layer in the first codeword CW 0, the PTRS port 1 is associated with a preset DMRS port, namely, a DMRS port 1011. For the PTRS port 0 corresponding to the PUSCH ports 0 to 2 transmitted at the three layers in the first codeword CW 0, as shown in the following table, the network device preconfigures or the terminal prestores an association between the PTRS port 0 and each of three scheduled DMRS ports.

Table 20 PTRS-DMRS association

| Value | DMRS port |
|---|---|
| 0 | 1st scheduled DMRS port which shares PTRS port 0 |
| 1 | 2nd scheduled DMRS port which shares PTRS port 0 |
| 2 | 3rd scheduled DMRS port which shares PTRS port 0 |
| 3 | Reserved |

The value is a value of a *PTRS-DMRS association* field in the DCI. The *PTRS-DMRS association* field may be 2 bits, and indicates a scheduled DMRS port associated with the PTRS port 0.

In a third case, the first codeword CW 0 includes 0th and 1st columns and 6th and 7th columns in a precoding matrix shown in FIG. 9c, and the second codeword CW 1 includes 2nd to 5th columns in the precoding matrix shown in FIG. 9c. In this case, the two codewords each correspond to two PTRS ports based on the association between the PTRS port and the PUSCH ports. To be specific, the first codeword CW 0 corresponds to the PTRS port 0 and the PTRS port 1, and the second codeword CW 1 corresponds to the PTRS port 0 and the PTRS port 1. In this case, the PUSCH ports 0 and 1 transmitted at the first and second layers in the first codeword CW 0 correspond to the PTRS port 0, and the PUSCH ports 6 and 7 transmitted at the third and fourth layers in the first codeword CW 0 correspond to the PTRS port 1; and the PUSCH ports 2 and 3 transmitted at the first and second layers in the second codeword CW 1 correspond to the PTRS port 0, and the PUSCH ports 4 to 6 transmitted at the third and fourth layers in the second codeword CW 1 correspond to the PTRS port 1.

In this case, for the PTRS port 0 corresponding to the PUSCH ports 0 and 1 transmitted at the first and second layers in the first codeword CW 0, and for the PTRS port 1 corresponding to the PUSCH ports 6 and 7 transmitted at the third and fourth layers in the first codeword CW 0, as shown in the following table, the network device preconfigures or the terminal prestores an association between the PTRS port 0 and each of two scheduled DMRS ports and an association between the PTRS port 1 and each of two scheduled DMRS ports.

Table 21 PTRS-DMRS association

| Value of an MSB | DMRS port | | Value of an LSB | DMRS port |
|---|---|---|---|---|
| 0 | 1st DMRS port which shares PTRS port 0 | | 0 | 1st DMRS port which shares PTRS port 1 |

(continued)

| Value of an MSB | DMRS port | | Value of an LSB | DMRS port |
|---|---|---|---|---|
| 1 | 2nd DMRS port which shares PTRS port 0 | | 1 | 2nd DMRS port which shares PTRS port 1 |

*A PTRS-DMRS association* field in the DCI includes an MSB and an LSB. The MSB indicates an association between the PTRS port 0 and a DMRS port, and the LSB indicates an association between the PTRS port 1 and a DMRS port. Both the MSB and the LSB are 1 bit.

In the foregoing three cases, it can be learned that, compared with those in an existing scenario in which there are four streams, indication overheads of the DCI do not increase in the scenario in which there are more than four streams, and therefore the indication overheads of the DCI are low.

The following provides example descriptions by using an example in which there are six streams.

In an example, the terminal determines the precoding matrix based on the rank of the uplink PUSCH and the TPMI, as shown in FIG. 10. Rows sequentially correspond to PUSCH ports 0 to 7, and columns sequentially correspond to a number of uplink transport layers/DMRS ports 0 to 5. It may be determined, based on the precoding matrix, that the precoding matrix includes two Ng (Ng0 and Ng1) and two codewords (a CW 0 and a CW 1). The network device configures two PTRS ports (a PTRS port 0 and a PTRS port 1).

Corresponding to the precoding matrix, a number of Ng is 2. In this case, the terminal may report that a maximum number of uplink PTRS ports supported by the terminal is 1 or 2. Herein, an example in which the terminal may report that a maximum number M of uplink PTRS ports supported by the terminal is 2 is used. Alternatively, the network device may configure a maximum number of uplink PTRS ports as 2.

According to the predefined rule, as shown in FIG. 10, PUSCH ports 0 to 3 share the PTRS port 0, and PUSCH ports 4 to 7 share the PTRS port 1. Herein, it may be understood that, physically, phase noise corresponding to the PUSCH ports 0 to 3 is measured through the PTRS port 0, and phase noise corresponding to the PUSCH ports 4 to 7 is measured through the PTRS port 1.

In this example, it is assumed that an MCS corresponding to the CW 0 is higher than an MCS corresponding to the CW 1, that is, the first codeword is the CW 0.

The first codeword CW 0 includes $0^{th}$ to $2^{nd}$ columns in a precoding matrix shown in FIG. 10, and the second codeword CW 1 includes $3^{rd}$ to $5^{th}$ columns in the precoding matrix shown in FIG. 10. In this case, each codeword corresponds to one PTRS port based on the association between the PTRS port and the PUSCH ports. To be specific, the first codeword CW 0 corresponds to the PTRS port 0, and the second codeword CW 1 corresponds to the PTRS port 1. In this case, the PUSCH ports 0 to 3 transmitted at three layers in the first codeword CW 0 correspond to the PTRS port 0, and the PUSCH ports 4 to 7 transmitted at three layers in the second codeword CW 1 correspond to the PTRS port 1.

As shown in the following table, the network device preconfigures or the terminal prestores an association between the PTRS port 0 and each of three scheduled DMRS ports.

Table 22 PTRS-DMRS association

| Value | DMRS port |
|---|---|
| 0 | 1st scheduled DMRS port which shares PTRS port 0 |
| 1 | 2nd scheduled DMRS port which shares PTRS port 0 |
| 2 | 3rd scheduled DMRS port which shares PTRS port 0 |
| 3 | Reserved |

The value is a value of a *PTRS-DMRS association* field in the DCI. The *PTRS-DMRS association* field may be 2 bits, and indicates a scheduled DMRS port associated with the PTRS port 0.

The following provides example descriptions by using an example in which there are four streams.

In an example, the terminal determines the precoding matrix based on the rank of the uplink PUSCH and the TPMI, as shown in FIG. 11. Rows sequentially correspond to PUSCH ports 0 to 7, and columns sequentially correspond to a number of uplink transport layers/DMRS ports 0 to 3. It may be determined, based on the precoding matrix, that the precoding matrix includes two Ng (Ng0 and Ng1) and one codeword (a CW 0). The network device configures two PTRS ports (a PTRS port 0 and a PTRS port 1).

Corresponding to the precoding matrix, a number of Ng is 2. In this case, the terminal may report that a maximum number of uplink PTRS ports supported by the terminal is 1 or 2. Alternatively, the network device may configure a maximum number of uplink PTRS ports as 1 or 2. Herein, an example in which the terminal may report that a maximum number of uplink PTRS ports supported by the terminal is 2 is used for description.

According to the predefined rule, as shown in FIG. 11, PUSCH ports 0 to 3 share the PTRS port 0, and PUSCH ports 4 to 7 share the PTRS port 1. Herein, it may be understood that, physically, phase noise corresponding to the PUSCH ports 0 to 3 is measured through the PTRS port 0, and phase noise corresponding to the PUSCH ports 4 to 7 is measured through the PTRS port 1.

The first codeword CW 0 includes $0^{th}$ to $3^{rd}$ columns in a precoding matrix shown in FIG. 11. In this case, the CW 0 corresponds to two PTRS ports based on the association between the PTRS port and the PUSCH ports, that is, the first codeword CW 0 corresponds to the PTRS port 0 and the PTRS port 1. In this case, the PUSCH ports 0 to 3 transmitted at two layers in the first codeword CW 0 correspond to the PTRS port 0, and the PUSCH ports 4 to 7 transmitted at the other two layers in the first codeword CW 0 correspond to the PTRS port 1.

As shown in the following table, the network device preconfigures or the terminal prestores an association between each of the PTRS port 0 and the PTRS port 1 and each of two scheduled DMRS ports.

Table 23 PTRS-DMRS association

| Value of an MSB | DMRS port | | Value of an LSB | DMRS port |
|---|---|---|---|---|
| 0 | $1^{st}$ DMRS port which shares PTRS port 0 | | 0 | $1^{st}$ DMRS port which shares PTRS port 1 |
| 1 | $2^{nd}$ DMRS port which shares PTRS port 0 | | 1 | $2^{nd}$ DMRS port which shares PTRS port 1 |

*A PTRS-DMRS association* field in the DCI includes an MSB and an LSB. The MSB indicates an association between the PTRS port 0 and a DMRS port, and the LSB indicates an association between the PTRS port 1 and a DMRS port. Both the MSB and the LSB are 1 bit.

The following provides example descriptions by using an example in which there are eight streams and a number of PTRS ports is 4.

In an example, the terminal determines the precoding matrix based on the rank of the uplink PUSCH and the TPMI, as shown in FIG. 6a. Rows sequentially correspond to PUSCH ports 0 to 7, and columns sequentially correspond to a number of uplink transport layers/DMRS ports 0 to 7. The precoding matrix includes four Ng (Ng0 to Ng3) and two codewords (a CW 0 and a CW 1). The network device configures four PTRS ports (a PTRS port 0 to a PTRS port 3).

Corresponding to the precoding matrix, a number of Ng is 4. In this case, the terminal may report that a maximum number of uplink PTRS ports supported by the terminal is 1, 2, 3, or 4. Herein, an example in which the terminal may report that a maximum number M of uplink PTRS ports supported by the terminal is 4 is used. Alternatively, the network device may configure a maximum number of uplink PTRS ports as 4.

According to a predefined rule, as shown in FIG. 6a, PUSCH ports 0 and 1 share the PTRS port 0, PUSCH ports 2 and 3 share the PTRS port 1, PUSCH ports 4 and 5 share the PTRS port 2, and PUSCH ports 6 and 7 share the PTRS port 3. Herein, it may be understood that, physically, phase noise corresponding to the PUSCH ports 0 and 1 is measured through the PTRS port 0, phase noise corresponding to the PUSCH ports 2 and 3 is measured through the PTRS port 1, phase noise corresponding to the PUSCH ports 4 and 5 is measured through the PTRS port 2, and phase noise corresponding to the PUSCH ports 6 and 7 is measured through the PTRS port 3.

In this example, it is assumed that an MCS corresponding to the CW 0 is higher than an MCS corresponding to the CW 1, that is, the first codeword is the CW 0.

There may be the following two cases for the first codeword.

In a first case, the first codeword CW 0 includes $0^{th}$ to $2^{nd}$ columns and a $7^{th}$ column in a precoding matrix shown in FIG. 12a, and the second codeword CW 1 includes $3^{rd}$ to $6^{th}$ columns in the precoding matrix shown in FIG. 12a. In this case, each codeword corresponds to three PTRS ports based on the association between the PTRS port and the PUSCH ports. To be specific, the first codeword CW 0 corresponds to the PTRS port 0, the PTRS port 1, and the PTRS port 3, and the second codeword CW 1 corresponds to the PTRS port 1 to the PTRS port 3. In this case, the PUSCH ports 0 and 1 transmitted at two layers in the first codeword CW 0 correspond to the PTRS port 0, the PUSCH port 2 transmitted at one layer in the first codeword CW 0 corresponds to the PTRS port 1, and the PUSCH port 7 transmitted at one layer in the first codeword CW 0 corresponds to the PTRS port 3; and the PUSCH port 3 transmitted at one layer in the second codeword CW 1 corresponds to the PTRS port 1, the PUSCH ports 4 and 5 transmitted at two layers in the second codeword CW 1 correspond to the PTRS port 2, and the PUSCH port 6 transmitted at one layer in the second codeword CW 1 corresponds to the PTRS port 3.

As shown in the following table, the network device preconfigures or the terminal prestores an association between the PTRS port 0 and each of two scheduled DMRS ports corresponding to two layers in the first codeword CW 0.

Table 24 PTRS-DMRS association

| Value | DMRS port |
|---|---|
| 0 | 1st scheduled DMRS port which shares PTRS port 0 |
| 1 | 2nd scheduled DMRS port which shares PTRS port 0 |

The value is a value of a *PTRS-DMRS association* field in the DCI. The *PTRS-DMRS association* field may be 1 bit, and indicates a scheduled DMRS port associated with the PTRS port 0.

For the PTRS port 1 corresponding to the PUSCH port 2 transmitted at the one layer in the first codeword CW 0, a DMRS port associated with the PTRS port 1 is a preset port.

For the PTRS port 3 corresponding to the PUSCH port 7 transmitted at the one layer in the first codeword CW 0, a DMRS port associated with the PTRS port 1 is a preset port.

In a second case, the first codeword CW 0 includes 0th to 3rd columns in a precoding matrix shown in FIG. 12b, and the second codeword CW 1 includes 4th to 7th columns in the precoding matrix shown in FIG. 12b. In this case, each codeword corresponds to two PTRS ports based on the association between the PTRS port and the PUSCH ports. To be specific, the first codeword CW 0 corresponds to the PTRS port 0 and the PTRS port 1, and the second codeword CW 1 corresponds to the PTRS port 2 and the PTRS port 3. In this case, the PUSCH ports 0 and 1 transmitted at two layers in the first codeword CW 0 correspond to the PTRS port 0, and the PUSCH ports 2 and 3 transmitted at two layers in the first codeword CW 0 corresponds to the PTRS port 1; and the PUSCH ports 4 and 5 transmitted at two layers in the second codeword CW 1 corresponds to the PTRS port 2, and the PUSCH ports 6 and 7 transmitted at two layers in the second codeword CW 1 correspond to the PTRS port 3.

As shown in the following table, the network device preconfigures or the terminal prestores an association between each of the PTRS port 0 and the PTRS port 1 and each of two scheduled DMRS ports.

Table 25 PTRS-DMRS association

| Value of an MSB | DMRS port | | Value of an LSB | DMRS port |
|---|---|---|---|---|
| 0 | 1st DMRS port which shares PTRS port 0 | | 0 | 1st DMRS port which shares PTRS port 1 |
| 1 | 2nd DMRS port which shares PTRS port 0 | | 1 | 2nd DMRS port which shares PTRS port 1 |

*A PTRS-DMRS association* field in the DCI includes an MSB and an LSB. The MSB indicates an association between the PTRS port 0 and a DMRS port, and the LSB indicates an association between the PTRS port 1 and a DMRS port. Both the MSB and the LSB are 1 bit.

S803: The network device transmits the DCI.

Correspondingly, the terminal receives the DCI.

The DCI indicates an association between at least one first PTRS port and at least one first DMRS port.

For example, in the first case in which there are eight streams and a number of PTRS ports is 2, with reference to Table 19, for example, for a single-symbol type 1 DMRS, if DMRS ports scheduled after expansion are {0, 1, 2, 3, 8, 9, 10, 11}, scheduled DMRS ports that share the PTRS port 0 are sequentially {0, 1, 2, 3}. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; if a value of the *PTRS-DMRS association* field is "10", the PTRS port 0 is associated with a DMRS port 1002; or if a value of the *PTRS-DMRS association* field is "11", the PTRS port 0 is associated with a DMRS port 1003.

For another example, for a single-symbol type 2 DMRS, if DMRS ports scheduled after expansion are {0, 1, 2, 3, 4, 5, 12, 13}, the *PTRS-DMRS association* field may be 2 bits, and indicates a scheduled DMRS port associated with the PTRS port 0. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; if a value of the *PTRS-DMRS association* field is "10", the PTRS port 0 is associated with a DMRS port 1002; or if a value of the *PTRS-DMRS association* field is "11", the PTRS port 0 is associated with a DMRS port 1003.

In addition, a DMRS port associated with the PTRS port 1 may be further determined. The DMRS port associated with the PTRS port 1 may be a predefined or preconfigured DMRS port.

For example, the DMRS port associated with the PTRS port 1 may be predefined as a DMRS port with a smallest port number in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 1 is a DMRS port 1008.

For another example, the association between the PTRS port and the DMRS port shown in Table 17 may be preconfigured. The MSB of the *PTRS-DMRS association* field may indicate the DMRS port associated with the PTRS port 0, and the LSB of the *PTRS-DMRS association* field may indicate the DMRS port associated with the PTRS port 1.

For another example, in the second case in which there are eight streams and a number of PTRS ports is 2, with reference to Table 20, for example, for a single-symbol type 1 DMRS, if DMRS ports scheduled after expansion are {0, 1, 2, 3, 8, 9, 10, 11}, scheduled DMRS ports that share the PTRS port 0 are sequentially {0, 1, 2}. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; or if a value of the *PTRS-DMRS association* field is "10", the PTRS port 0 is associated with a DMRS port 1002.

For another example, for a single-symbol type 2 DMRS, if DMRS ports scheduled after expansion are {0, 1, 2, 3, 4, 5, 12, 13}, the *PTRS-DMRS association* field may be 2 bits, and indicates a scheduled DMRS port associated with the PTRS port 0. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; if a value of the *PTRS-DMRS association* field is "10", the PTRS port 0 is associated with a DMRS port 1002; or if a value of the *PTRS-DMRS association* field is "11", the PTRS port 0 is associated with a DMRS port 1003. For the PTRS port 1 corresponding to the PUSCH port 7 transmitted at the fourth layer in the first codeword CW 0, the PTRS port 1 is associated with a preset DMRS port, namely, a DMRS port 1013.

In addition, a DMRS port associated with the PTRS port 1 may be further determined. The DMRS port associated with the PTRS port 1 may be a predefined or preconfigured DMRS port.

For example, the DMRS port associated with the PTRS port 1 may be predefined as a DMRS port with a smallest port number in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 1 is a DMRS port 1003.

For another example, in the third case in which there are eight streams and a number of PTRS ports is 2, with reference to Table 21, for example, for a single-symbol type 1 DMRS, if DMRS ports scheduled after expansion are {0, 1, 2, 3, 8, 9, 10, 11}, scheduled DMRS ports that share the PTRS port 0 are {0, 1}. If the MSB is "1", a scheduled DMRS port associated with the PTRS port 0 is the $2^{nd}$ scheduled DMRS port, namely, a DMRS port 1001. When scheduled DMRS ports that share the PTRS port 1 are {10, 11}, if the LSB is "0", a scheduled DMRS port associated with the PTRS port 1 is the $1^{st}$ scheduled DMRS port, namely, a DMRS port 1010.

In addition, a DMRS port associated with the PTRS port 0 corresponding to the PUSCH ports 2 and 3 transmitted at the first and second layers in the second codeword CW 1 may be further determined. The DMRS port associated with the PTRS port 0 may be a predefined or preconfigured DMRS port. For example, the DMRS port associated with the PTRS port 0 may be predefined as a DMRS port with a smallest port number at the first and second layers in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 0 is a DMRS port 1002.

A DMRS port associated with the PTRS port 1 corresponding to the PUSCH ports 4 to 6 transmitted at the third and fourth layers in the second codeword CW 1 may be further determined. The DMRS port associated with the PTRS port 1 may be a predefined or preconfigured DMRS port. For example, the DMRS port associated with the PTRS port 1 may be predefined as a DMRS port with a smallest port number at the third and fourth layers in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 1 is a DMRS port 1008.

In the case in which there are six streams, with reference to Table 22, for example, for a single-symbol type 1 DMRS, if DMRS ports scheduled after expansion are {0, 1, 2, 3, 8, 9}, scheduled DMRS ports that share the PTRS port 0 are sequentially {0, 1, 2}. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; or if a value of the *PTRS-DMRS association* field is "10", the PTRS port 0 is associated with a DMRS port 1002.

For another example, for a single-symbol type 2 DMRS, if DMRS ports scheduled after expansion are {0, 1, 2, 3, 4, 5}, the *PTRS-DMRS association* field may be 2 bits, and indicates a scheduled DMRS port associated with the PTRS port 0. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; or if a value of the *PTRS-DMRS association* field is "10", the PTRS port 0 is associated with a DMRS port 1002.

In addition, a DMRS port associated with the PTRS port 1 may be further determined. The DMRS port associated with the PTRS port 1 may be a predefined or preconfigured DMRS port.

For example, the DMRS port associated with the PTRS port 1 may be predefined as a DMRS port with a smallest port number in the second codeword CW 1. For example, for the single-symbol type 1 DMRS, if DMRS ports scheduled after expansion are {0, 1, 2, 3, 8, 9}, it may be determined that the DMRS port associated with the PTRS port 1 is a DMRS port 1003.

For example, in the case in which there are four streams, with reference to Table 23, for example, for a single-symbol type 1 DMRS, if scheduled DMRS ports are {0, 1, 2, 3}, scheduled DMRS ports that share the PTRS port 0 are {0, 1}. If the MSB is "1", a scheduled DMRS port associated with the PTRS port 0 is the 2nd scheduled DMRS port, namely, a DMRS port 1001. When scheduled DMRS ports that share the PTRS port 1 are {2, 3}, if the LSB is "0", a scheduled DMRS port associated with the PTRS port 1 is the 1st scheduled DMRS port, namely, a DMRS port 1002.

For example, in the first case in which there are eight streams and a number of PTRS ports is 4, with reference to Table 24, for example, for a single-symbol type 1 DMRS, if DMRS ports scheduled after expansion are {0, 1, 2, 3, 8, 9, 10, 11}, scheduled DMRS ports that share the PTRS port 0 are sequentially {0, 1}. If a value of the *PTRS-DMRS association* field is "0", the PTRS port 0 is associated with a DMRS port 1000; or if a value of the *PTRS-DMRS association* field is "1", the PTRS port 0 is associated with a DMRS port 1001.

For example, for a single-symbol type 2 DMRS, if DMRS ports scheduled after expansion are {0, 1, 2, 3, 4, 5, 12, 13}, scheduled DMRS ports that share the PTRS port 0 are sequentially {0, 1}. The *PTRS-DMRS association* field may be 1 bits, and indicates a scheduled DMRS port associated with the PTRS port 0. If a value of the *PTRS-DMRS association* field is "0", the PTRS port 0 is associated with a DMRS port 1000; or if a value of the *PTRS-DMRS association* field is "1", the PTRS port 0 is associated with a DMRS port 1001.

For the PTRS port 1 corresponding to the PUSCH port 2 transmitted at the one layer in the first codeword CW 0, a DMRS port associated with the PTRS port 1 is a preset port 1002.

For the PTRS port 3 corresponding to the PUSCH port 7 transmitted at the one layer in the first codeword CW 0, a DMRS port associated with the PTRS port 1 is a preset port 1011.

In addition, DMRS ports respectively associated with the PTRS port 1 to the PTRS port 3 that correspond to the second codeword CW 1 may be further determined. The DMRS ports respectively associated with the PTRS port 1 to the PTRS port 3 that correspond to the second codeword CW 1 may be DMRS ports that are predefined or preconfigured or that are obtained according to a default rule.

For another example, in the second case in which there are eight streams and a number of PTRS ports is 4, with reference to Table 25, for example, for a single-symbol type 1 DMRS, if DMRS ports scheduled after expansion are {0, 1, 2, 3, 8, 9, 10, 11}, scheduled DMRS ports that share the PTRS port 0 are {0, 1}. If the MSB is "0", a scheduled DMRS port associated with the PTRS port 0 is the 2nd scheduled DMRS port, namely, a DMRS port 1000. If the MSB is "1", a scheduled DMRS port associated with the PTRS port 0 is the 2nd scheduled DMRS port, namely, a DMRS port 1001. When scheduled DMRS ports that share the PTRS port 1 are {2, 3}, if the LSB is "0", a scheduled DMRS port associated with the PTRS port 1 is the 1st scheduled DMRS port, namely, a DMRS port 1002; or if the LSB is "1", a scheduled DMRS port associated with the PTRS port 1 is the 1st scheduled DMRS port, namely, a DMRS port 1003.

S804: The terminal determines, from the at least one first DMRS port based on the DCI, a first DMRS port associated with each of the at least one first PTRS port.

After receiving the DCI, the terminal obtains the rank of the uplink PUSCH and the TPMI in the DCI, and then determines the precoding matrix; and determines, based on the determined precoding matrix and the codeword indication information, the first codeword and the at least one first PTRS port corresponding to the first codeword. Then, the terminal determines, from at least one DMRS port based on the DCI, the first DMRS port associated with each of the at least one first PTRS port. For a specific example, refer to the foregoing descriptions.

Further, the terminal may further determine a time-frequency resource position of the PTRS signal and a PTRS signal sequence based on at least one of an index of the determined first DMRS port, a currently scheduled MCS, and a number of currently scheduled RBs.

Specifically, the network device may configure the MCS currently scheduled by the terminal, and the terminal may determine a time density of the PTRS signal based on the currently scheduled MCS and according to Table 8. Further, a time domain position $l$ corresponding to the PTRS signal is determined based on the time density of the PTRS signal and a value formula of the time domain position $l$ corresponding to the PTRS signal.

The network device may configure a number of RBs currently scheduled by the terminal, and the terminal may determine a frequency density of the PTRS signal based on the number of currently scheduled RBs and according to Table 9. Further, the frequency domain position k corresponding to the PTRS signal is determined based on the frequency density of the PTRS signal and according to a value formula (Formula 7) of the frequency domain position k corresponding to the PTRS signal.

The terminal further determines the time-frequency resource position of the PTRS signal based on the time domain position $l$ and the frequency domain position $k$ that correspond to the PTRS signal and according to the formula 6.

The PTRS signal and a DMRS signal correspond to a same base sequence, that is, only corresponding $r(2n + k')$ in a DMRS signal generation formula (namely, the foregoing formula 5) is included, and time-frequency masks $w_f(k')$ and $w_t(l')$ are not included.

For example, the codeword indication information and the DCI may be independent information, or the codeword indication information and the DCI may be in first information. The terminal determines, from the at least one first DMRS port based on the first information, the first DMRS port associated with each of the at least one first PTRS port.

S805: The terminal transmits at least one PTRS signal through the at least one first PTRS port based on the first DMRS port associated with each of the at least one first PTRS port.

Correspondingly, the network device receives the at least one PTRS signal.

The terminal transmits the PTRS signal on the corresponding first PTRS port based on the first DMRS port associated with each of the at least one first PTRS port. In addition, the terminal may further transmit the PTRS signal on a corresponding second PTRS port based on a second DMRS port associated with each of at least one second PTRS port.

For example, the PTRS-DMRS association is used to determine the sequence and a time-frequency resource of the PTRS signal. A specific transmit behavior is still transmitting based on the sequence and the time-frequency resource that correspond to the PTRS port, and is unrelated to a DMRS port.

According to the communication method provided in this embodiment of this application, the association between the PTRS port and the DMRS port can be accurately determined. This improves communication reliability.

FIG. 13 is a schematic flowchart of still another communication method according to an embodiment of this application. For example, the method may include the following steps.

S1301: A network device transmits RRC signaling.

Correspondingly, a terminal receives the RRC signaling.

The RRC signaling is used to configure at least one piece of the following information: an uplink PUSCH transmission mode (including a codebook-based transmission mode (Full/Partial/Non-coherent) and a non-codebook-based transmission mode), a maximum number of uplink PTRS ports, a current PTRS port of the terminal, a subcarrier offset between a PTRS port and a DMRS port, an MCS threshold range, an RB threshold range, a number of PUSCH ports, and a number of antenna coherence groups. For a specific configuration method, refer to step S401 in the foregoing embodiment.

For an uplink 8T terminal, there may be the following several cases for a number of PTRS ports.

Case (1): Ng=1, and a number of PTRS ports is 1;
case (2): Ng=2, and a number of PTRS ports is 1;
case (3): Ng=2, and a number of PTRS ports is 2;
case (4): Ng=4, and a number of PTRS ports is 2; or
case (5): Ng=4, and a number of PTRS ports is 4.

The following separately discusses, based on the foregoing five cases for the number of PTRS ports, a method for determining a PTRS-DMRS association when there are a maximum of eight ports. Certainly, this is not limited to 8T in this application, and may alternatively be 1T to 7T. The following uses 8T as an example for description. A case of another T is similarly determined according to the method. Corresponding to the foregoing three codebook-based uplink transmission modes, a PUSCH precoding matrix may be represented in the following forms.

TPMI forms corresponding to three PUSCH transmission modes are first described. In an uplink eight-antenna PUSCH transmission mode, a precoding matrix may be an Nt×NL matrix, where Nt is a number of transmit antennas, and NL is a number of uplink transport layers.

(1) Full-coherent transmission mode

An implementation of an eight-antenna eight-layer full-coherent codebook is described by using the following precoding matrix as an example.

$$\frac{1}{\sqrt{\sum_{x=1}^{Nt}\sum_{y=1}^{NL} a^2{}_{x,y}}}\begin{bmatrix} a_{1,1} & a_{2,1} & a_{3,1} & a_{4,1} & a_{5,1} & a_{6,1} & a_{7,1} & a_{8,1} \\ a_{1,2} & a_{2,2} & a_{3,2} & a_{4,2} & a_{5,2} & a_{6,2} & a_{7,2} & a_{8,2} \\ a_{1,3} & a_{2,3} & a_{3,3} & a_{4,3} & a_{5,3} & a_{6,3} & a_{7,3} & a_{8,3} \\ a_{1,4} & a_{2,4} & a_{3,4} & a_{4,4} & a_{5,4} & a_{6,4} & a_{7,4} & a_{8,4} \\ a_{1,5} & a_{2,5} & a_{3,5} & a_{4,5} & a_{5,5} & a_{6,5} & a_{7,5} & a_{8,5} \\ a_{1,6} & a_{2,6} & a_{3,6} & a_{4,6} & a_{5,6} & a_{6,6} & a_{7,6} & a_{8,6} \\ a_{1,7} & a_{2,7} & a_{3,7} & a_{4,7} & a_{5,7} & a_{6,7} & a_{7,7} & a_{8,7} \\ a_{1,8} & a_{2,8} & a_{3,8} & a_{4,8} & a_{5,8} & a_{6,8} & a_{7,8} & a_{8,8} \end{bmatrix}$$

An element in an $x^{th}$ row and a $y^{th}$ column in the precoding matrix is represented as $a_{x,y}$, $a_{x,y}$ herein may be a real number whose modulus is 1, and a specific value of $a_{x,y}$ is usually {1, -1, j, -j}; and $\frac{1}{\sqrt{\sum_{x=1}^{Nt}\sum_{y=1}^{NL} a^2{}_{x,y}}}$ is a power coefficient of the precoding matrix, and may be used to ensure that power of each PUSCH port is the same as power of each precoding matrix. There is no element 0 in the Nt×NL precoding matrix for the full-coherent codebook. In the following discussed codewords, an example in which a value of an element in the precoding matrix is 1 is usually used, and another value is not excluded herein.

(2) Partial-coherent transmission mode

$$\frac{1}{\sqrt{\sum_{x=1}^{Nt}\sum_{y=1}^{NL}a^2{}_{x,y}}}\begin{bmatrix} a_{1,1} & a_{2,1} & a_{3,1} & a_{4,1} & 0 & 0 & 0 & 0 \\ a_{1,2} & a_{2,2} & a_{3,2} & a_{4,2} & 0 & 0 & 0 & 0 \\ a_{1,3} & a_{2,3} & a_{3,3} & a_{4,3} & 0 & 0 & 0 & 0 \\ a_{1,4} & a_{2,4} & a_{3,4} & a_{4,4} & 0 & 0 & 0 & 0 \\ 0 & 0 & 0 & 0 & a_{5,5} & a_{6,5} & a_{7,5} & a_{8,5} \\ 0 & 0 & 0 & 0 & a_{5,6} & a_{6,6} & a_{7,6} & a_{8,6} \\ 0 & 0 & 0 & 0 & a_{5,7} & a_{6,7} & a_{7,7} & a_{8,7} \\ 0 & 0 & 0 & 0 & a_{5,8} & a_{6,8} & a_{7,8} & a_{8,8} \end{bmatrix}$$

An element in an x^th row and a y^th column in the precoding matrix is represented as $a_{x,y}$, $a_{x,y}$ herein may be a real number whose modulus is 1, and a specific value of $a_{x,y}$ is usually {1, -1, j, -j}; and $\frac{1}{\sqrt{\sum_{x=1}^{Nt}\sum_{y=1}^{NL}a^2{}_{x,y}}}$ is a power coefficient of the precoding matrix, and may be used to ensure that power of each PUSCH port is the same as power of each precoding matrix. There is no element 0 in the Nt×NL precoding matrix for a partial-coherent codebook, and there is an element whose value is 0 in the precoding matrix for the partial-coherent codebook. In the following discussed codewords, an example in which a value of an element in the precoding matrix is 1 is usually used, and another value is not excluded herein.

(3) Non-coherent transmission mode

$$\frac{1}{\sqrt{\sum_{x=1}^{Nt}\sum_{y=1}^{NL}a^2{}_{x,y}}}\begin{bmatrix} a_{1,1} & 0 & 0 & 0 & 0 & 0 & 0 & 0 \\ 0 & a_{2,2} & 0 & 0 & 0 & 0 & 0 & 0 \\ 0 & 0 & a_{3,3} & 0 & 0 & 0 & 0 & 0 \\ 0 & 0 & 0 & a_{4,4} & 0 & 0 & 0 & 0 \\ 0 & 0 & 0 & 0 & a_{5,5} & 0 & 0 & 0 \\ 0 & 0 & 0 & 0 & 0 & a_{6,6} & 0 & 0 \\ 0 & 0 & 0 & 0 & 0 & 0 & a_{7,7} & 0 \\ 0 & 0 & 0 & 0 & 0 & 0 & 0 & a_{8,8} \end{bmatrix}$$

An element in an x^th row and a y^th column in the precoding matrix is represented as $a_{x,y}$, $a_{x,y}$ herein may be a real number whose modulus is 1, and a specific value of $a_{x,y}$ is usually {1, -1, j, -j}; and $\frac{1}{\sqrt{\sum_{x=1}^{Nt}\sum_{y=1}^{NL}a^2{}_{x,y}}}$ is a power coefficient of the precoding matrix, and may be used to ensure that power of each PUSCH port is the same as power of each precoding matrix. There is an element whose value is 0 in the precoding matrix for a non-coherent codebook. In the following discussed codewords, an example in which a value of an element in the precoding matrix is 1 is usually used, and another value is not excluded herein.

For the full-coherent/partial-coherent/non-coherent codebook form, an order of columns in a same codeword is not limited.

In a scenario in which there are fewer than eight layers, a codebook is a subset of the foregoing codebooks.

The following provides example descriptions by using an example in which there are eight streams and a number of PTRS ports is 2.

In an example, the terminal determines a precoding matrix based on a rank of an uplink PUSCH and a TPMI, as shown in FIG. 5a. Rows sequentially correspond to PUSCH ports 0 to 7, and columns sequentially correspond to a number of uplink transport layers/DMRS ports 0 to 7. It should be noted that the DMRS ports 0 to 7 herein indicate a relative column order of the DMRS ports in the precoding matrix corresponding to the TPMI, in other words, correspond to $0^{th}$ to $7^{th}$ DMRS ports, and do not indicate specific DMRS port numbers indicated by DCI. The precoding matrix includes two Ng (Ng0 and Ng1) and two codewords (a CW 0 and a CW 1). The network device configures two PTRS ports (a PTRS port 0 and a PTRS port 1).

Corresponding to the precoding matrix, a number of Ng is 2. In this case, the terminal may report that a maximum number of uplink PTRS ports supported by the terminal is 1 or 2. Herein, an example in which the terminal may report that a maximum number M of uplink PTRS ports supported by the terminal is 2 is used. Alternatively, the network device may configure a maximum number of uplink PTRS ports as 2.

According to a predefined rule, the precoding matrix shown in FIG. 5a is used as an example, PUSCH ports 0 to 3 share the PTRS port 0, and PUSCH ports 4 to 7 share the PTRS port 1. Herein, it may be understood that, physically, phase noise corresponding to the PUSCH ports 0 to 3 is measured through the PTRS port 0, and phase noise corresponding to the PUSCH ports 4 to 7 is measured through the PTRS port 1. It may be understood that a PTRS-DMRS association may be obtained according to the association method in this embodiment when a number of PTRS ports is 2 and the precoding matrix shown in FIG. 5b is used.

In this example, it is assumed that an MCS corresponding to the CW 0 is higher than an MCS corresponding to the CW 1, that is, the first codeword is the CW 0.

There may be the following three cases for the first codeword.

In a first case, the first codeword CW 0 includes $0^{th}$ to $3^{rd}$ columns in a precoding matrix shown in FIG. 9a, and the second codeword CW 1 includes $4^{th}$ to $7^{th}$ columns in the precoding matrix shown in FIG. 9a. In this case, each codeword corresponds to one PTRS port based on the association between the PTRS port and the PUSCH ports. To be specific, the first codeword CW 0 corresponds to the PTRS port 0, and the second codeword CW 1 corresponds to the PTRS port 1. In this case, the PUSCH ports 0 to 3 transmitted at four layers in the first codeword CW 0 correspond to the PTRS port 0, and the PUSCH ports 4 to 7 transmitted at four layers in the second codeword CW 1 correspond to the PTRS port 1.

S1302: The network device transmits codeword indication information.

Correspondingly, the terminal receives the codeword indication information.

For example, the network device may transmit DCI to the terminal, where the DCI includes the codeword indication information. The DCI may further include the rank of the uplink PUSCH. It should be noted that the codeword indication information in the present invention may alternatively be transport block indication information, and meanings of the codeword indication information and the transport block indication information are equivalent.

The terminal may determine, based on the codeword indication information included in the DCI for scheduling uplink data for transmission, a number of codewords corresponding to PUSCH transmission. The codeword indication information herein may include at least one of an MCS of a second codeword, a new data indicator (new data indicator, NDI), and a redundancy version (redundancy version, RV). That is, if at least one of the foregoing three pieces of information corresponding to the second codeword exists, the terminal device may consider that the PUSCH transmission includes the second codeword.

The terminal may further determine a number of codewords based on the rank of the uplink PUSCH. For example, if the rank of the uplink PUSCH is less than or equal to 4, it is determined that one codeword is required; or if the rank of the uplink PUSCH is greater than 4 and less than or equal to 8, it is determined that two codewords are required.

The TPMI corresponds to one precoding matrix, the precoding matrix includes X PUSCH ports and Y data layers, each data layer corresponds to one DMRS port, and X is greater than 4, or X is greater than 4 and Y is greater than 4. The X PUSCH ports are reported by the terminal or configured by the network device, and the X PUSCH ports are associated with M PTRS ports according to the predefined rule. For example, if the network device configures eight PUSCH/SRS ports, and the DCI indicates five transport layers, the TPMI indicates a precoding matrix of eight rows and five columns.

In conclusion, the terminal may determine the precoding matrix based on the rank of the uplink PUSCH and the TPMI, to determine at least one PTRS port. Specifically, for an association between the PTRS port and PUSCH ports, refer to the descriptions in the foregoing embodiments.

For example, in a scenario in which a full-coherent PUSCH transmission capability is supported, a maximum number of PTRS ports supported by the terminal/configured by the network device is 1. In this case, Ng=1, and the network device may configure one PTRS port (the PTRS port 0) for the terminal by using higher layer signaling. In this case, the PTRS port 0 may be associated with the PUSCH ports 0 to 7 according to the predefined rule.

For example, when Ng=2, the network device configures or predefines as follows: Ng0 corresponds to PUSCH ports 0 to 3, and Ng1 corresponds to PUSCH ports 4 to 7. In this embodiment, descriptions of a correspondence between Ng and PUSCH ports are merely an example, and the correspondence is not limited. A maximum number of PTRS ports supported by the terminal/configured by the network device is 2. For current PUSCH transmission, the network device may configure two PTRS ports (the PTRS port 0 and the PTRS port 1) for the terminal. In addition, as shown in FIG. 5a, the PUSCH ports 0 to 3 correspond to one Ng, and the PUSCH ports 4 to 7 correspond to the other Ng. In this case, according to the predefined rule, the PUSCH ports 0 to 3 may share the PTRS port 0, and the PUSCH ports 4 to 7 may share the PTRS port 0, where one Ng shares one PTRS port. For current PUSCH transmission, the network device may alternatively configure one PTRS port (the PTRS port 0) for the terminal. In this case, according to the predefined rule, the PTRS port 0 may be associated with the PUSCH ports 0 to 7, and the PTRS port 0 corresponds to two Ng. Alternatively, for current PUSCH transmission, the network device may configure either of two PTRS ports (the PTRS port 0 or the PTRS port 1) for the terminal. When the PTRS port 0 is configured, the PUSCH ports 0 to 3 correspond to one Ng, and the PUSCH ports 0 to 3 may share the PTRS port 0; or when the PTRS port 1 is configured, the PUSCH ports 4 to 7 correspond to one Ng, and the PUSCH ports 4 to 7 may share the PTRS port 1.

When Ng=2, the network device may alternatively configure or predefine that Ng0 corresponds to PUSCH ports 0, 2, 4, and 6, and Ng1 corresponds to PUSCH ports 1, 3, 5, and 7. In this embodiment, descriptions of a correspondence between Ng and PUSCH ports are merely an example, and the correspondence is not limited. A maximum number of PTRS ports supported by the terminal/configured by the network device is 2. For current PUSCH transmission, the network device may configure two PTRS ports (the PTRS port 0 and the PTRS port 1) for the terminal. In addition, as shown in FIG. 5b, the PUSCH ports 0, 2, 4, and 6 correspond to one Ng, and the PUSCH ports 1, 3, 5, and 7 correspond to the other Ng. In this case, according to the predefined rule, the PUSCH ports 0, 2, 4, and 6 may share the PTRS port 0, and the PUSCH ports 1, 3, 5, and 7 may share the PTRS port 1, where one Ng shares one PTRS port. For current PUSCH transmission, the network device may alternatively configure one PTRS port (the PTRS port 0) for the terminal. In this case, according to the predefined rule, the PTRS port 0 may be associated with the PUSCH ports 0 to 7, and the PTRS port 0 corresponds to two Ng. Alternatively, for current PUSCH transmission, the network device may configure either of the two PTRS ports (the PTRS port 0 or the PTRS port 1) for the terminal. When the PTRS port 0 is configured, the PUSCH ports 0, 2, 4, and 6 correspond to one Ng, and the PUSCH ports 0, 2, 4, and 6 may share the PTRS port 0; or when the PTRS port 1 is configured, the PUSCH ports 1, 3, 5, and 7 correspond to one Ng, and the PUSCH ports 1, 3, 5, and 7 may share the PTRS port 1.

When Ng=4, a maximum number of PTRS ports supported by the terminal/configured by the network device is 4.

For example, as shown in FIG. 6a, Ng=4. PUSCH ports 0 and 1 belong to Ng0, PUSCH ports 2 and 3 belong to Ng1, PUSCH ports 4 and 5 belong to Ng2, and PUSCH ports 6 and 7 belong to Ng4. The network device configures four PTRS ports for the terminal, where one PTRS port corresponds to one Ng. In this case, for current PUSCH transmission, the PUSCH ports 0 and 1 share the PTRS port 0, the PUSCH ports 2 and 3 share the PTRS port 1, the PUSCH ports 4 and 5 share a PTRS port 2, and the PUSCH ports 6 and 7 share a PTRS port 3. For current PUSCH transmission, the network device may alternatively configure one PTRS port (the PTRS port 0) for the terminal. In this case, according to the predefined rule, the PTRS port 0 may be associated with the PUSCH ports 0 to 7, and the PTRS port 0 corresponds to four Ng. Alternatively, for current PUSCH transmission, the network device may configure any one of the four PTRS ports (the PTRS port 0, the PTRS port 1, the PTRS port 2, or the PTRS port 3) for the terminal. When the PTRS port 0 is configured, PUSCH ports 0 and 1 correspond to one Ng, and the PUSCH ports 0 and 1 may share the PTRS port 0; or when the PTRS port 1 is configured, PUSCH ports 2 and 3 correspond to one Ng, and the PUSCH ports 2 and 3 may share the PTRS port 1; or when the PTRS port 2 is configured, PUSCH ports 4 and 5 correspond to one Ng, and the PUSCH ports 4 and 5 may share the PTRS port 2; or when the PTRS port 3 is configured, PUSCH ports 6 and 7 correspond to one Ng, and the PUSCH ports 6 and 7 may share the PTRS port 3.

For another example, as shown in FIG. 6b, Ng=4, where PUSCH ports 0 and 4 belong to Ng0, PUSCH ports 1 and 5 belong to Ng1, PUSCH ports 2 and 6 belong to Ng2, and PUSCH ports 3 and 7 belong to Ng4. The network device configures four PTRS ports for the terminal, where one PTRS port corresponds to one Ng. In this case, for current PUSCH transmission, the PUSCH ports 0 and 4 share the PTRS port 0, the PUSCH ports 1 and 5 share the PTRS port 1, the PUSCH ports 2 and 6 share the PTRS port 2, and the PUSCH ports 3 and 7 share the PTRS port 3. For current PUSCH transmission, the network device may alternatively configure one PTRS port (the PTRS port 0) for the terminal. In this case, according to the predefined rule, the PTRS port 0 may be associated with the PUSCH ports 0 to 7, and the PTRS port 0 corresponds to four Ng. Alternatively, for current PUSCH transmission, the network device may configure any one of the four PTRS ports (the PTRS port 0, the PTRS port 1, the PTRS port 2, or the PTRS port 3) for the terminal. When the PTRS port 0 is configured, PUSCH ports 0 and 4 correspond to one Ng, and the PUSCH ports 0 and 4 may share the PTRS port 0; or when the PTRS port 1 is configured, PUSCH ports 1 and 5 correspond to one Ng, and the PUSCH ports 1 and 5 may share the PTRS port 1; or when the PTRS port 2 is configured, PUSCH ports 2 and 6 correspond to one Ng, and the PUSCH ports 2 and 6 may share the PTRS port 2; or when the PTRS port 3 is configured, PUSCH ports 3 and 7 correspond to one Ng, and the PUSCH ports 3 and 7 may share the PTRS port 3.

This embodiment is applicable to a scenario in which there are more than four PUSCH/SRS ports and/or more than four streams in uplink. In the scenario in which there are more than four streams in uplink, the second codeword may be introduced.

In a scenario in which there are two or more codewords, in this embodiment, a DMRS port corresponding to each of one or more PUSCH transport layers in one codeword (a first codeword) is considered as a candidate DMRS port that may be associated with a PTRS port.

The network device transmits the codeword indication information to the terminal. The codeword indication information indicates the first codeword, and the codeword indication information includes an MCS corresponding to the first codeword. In addition, the codeword indication information may further include at least one piece of the following information: a new data indicator (new data indicator, NDI) and a redundancy version (redundancy version, RV).

For example, the network device may alternatively transmit a plurality of groups of codeword indication information to the terminal, where each group of codeword indication information includes an MCS corresponding to each codeword. After receiving the plurality of groups of codeword indication information, the terminal may select, as the first codeword from a plurality of codewords, a codeword corresponding to a highest MCS. If the MCS is the highest, quality of a PTRS signal transmitted based on the DMRS ports corresponding to the one or more layers in the codeword is optimal.

For example, when MCSs indicated by two codewords are equal, a codeword corresponding to a first MCS included in the codeword indication information corresponding to the first codeword is referred to as a codeword 0. Alternatively, for example, when MCSs indicated by two codewords are equal, a codeword corresponding to a second MCS included in the codeword indication information corresponding to the first codeword is referred to as a codeword 1. That is, when MCSs indicated by two codewords are equal, a default codeword is preset as the first codeword (referred to as a preset rule 1).

In addition, for example, when MCSs are equal, the first codeword is determined based on a TPMI corresponding to current PUSCH transmission. A specific determining method is as follows: (1) receiving DCI, obtaining indication information of a TPMI from the DCI, and determining, by using codeword information and the TPMI that corresponds to the current PUSCH transmission, a number of PTRS ports included in each CW, where the codeword information herein is mainly predefined codeword-to-layer mapping (codeword-to-layer mapping) information or codeword-to-layer mapping information notified this time; and (2) determining, as the first codeword, a codeword including a large number of PTRS ports (referred to as a preset rule 2). For the preset rule 2, the following uses two examples for description.

Case (1): In a case of eight transmit antennas and five streams, a number of PTRS ports is 2, Ng=2, and a precoding matrix corresponding to an indicated TPMI is shown in FIG. 14a. Case (2): In a case of eight transmit antennas and five streams, a number of PTRS ports is 2, Ng=4, and a precoding matrix corresponding to an indicated TPMI is shown in FIG. 14b. Case (3): In a case of eight transmit antennas and five streams, a number of PTRS ports is 4, Ng=4, and a precoding matrix corresponding to an indicated TPMI is shown in FIG. 14c.

In the case (1), three layers (namely, $0^{th}$, $1^{st}$, and $4^{th}$ columns) in a PUSCH are transmitted through the antenna coherence group Ng0, where for the three layers transmitted through Ng0, the CW 0 includes two layers, and the CW 1 includes one layer. Two layers (namely, $2^{nd}$ and $3^{rd}$ columns) in the PUSCH are transmitted through the antenna coherence group Ng1, and corresponds to two layers in the CW 1. In this case, it is assumed that the PTRS port 0 is bound to uplink antenna ports (PUSCH Antenna ports) {0, 1, 2, 3} (namely, $0^{th}$ to $3^{rd}$ rows) in a predefined manner, that is, corresponds to uplink antenna ports included in Ng0. It is assumed that the PTRS port 1 is bound to uplink antenna ports {4, 5, 6, 7} (namely, $4^{th}$ to $7^{th}$ rows) in a predefined manner, that is, corresponds to uplink antenna ports included in Ng1. It can be learned from the TPMI and a CW-to-layer mapping relationship that

a PTRS port included ("included" herein may be further explained as being used as candidate DMRS ports) in layers ($0^{th}$ and $1^{st}$ columns in the TPMI) corresponding to the CW 0 is a PTRS port 0, and the CW 0 corresponds to a $1^{st}$ DMRS port and a $2^{nd}$ DMRS port. The 1st DMRS port and the $2^{nd}$ DMRS port may be used as candidate DMRS ports of the PTRS port 0.

PTRS ports included in layers ($2^{nd}$, $3^{rd}$, and $4^{th}$ columns in the TPMI) corresponding to the CW 1 are PTRS ports 0 and 1. DMRS ports corresponding to second and third layers may be used as candidate DMRS ports of the PTRS port 1, and a DMRS port corresponding to a fourth layer may be used as a candidate DMRS port of the PTRS port 0. The CW 1 corresponds to a $3^{rd}$ DMRS port, a $4^{th}$ DMRS port, and a $5^{th}$ DMRS port. The $3^{rd}$ DMRS port and the $4^{th}$ DMRS port may be used as candidate DMRS ports of the PTRS port 1, and the $5^{th}$ DMRS port may be used as a candidate DMRS port of the PTRS port 0.

In conclusion, for the CW 0 and the CW 1, if the first codeword is the CW 0, an indication of an association between the PTRS port 0 and a candidate DMRS port is resolved. If the first codeword is the CW 1, an indication of an association between the PTRS port 0 and a candidate DMRS port may be indicated, and an indication of an association between the PTRS port 1 and a candidate DMRS port may also be indicated.

In this way, when MCSs corresponding to two CWs are equal based on a definition of the preset rule 2, a CW whose corresponding DMRS port includes more PTRS ports is selected. In this case, the CW 1 is selected as the first codeword. A subsequent indication of an association between each PTRS port and a corresponding candidate DMRS port continues to be performed by using embodiment steps after the first codeword is selected.

In the case (2), two layers (namely, $0^{th}$ and $4^{th}$ columns) in a PUSCH are transmitted through the antenna coherence group Ng0, where for the two layers transmitted through Ng0, the CW 0 includes one layer, and the CW 1 includes one layer. One layer (namely, a $1^{st}$ column) in the PUSCH is transmitted through the antenna coherence group Ng1, and corresponds to one layer in the CW 0. One layer (namely, a $2^{nd}$ column) in the PUSCH is transmitted through the antenna coherence group Ng2, and corresponds to one layer in the CW 1. One layer (namely, a $3^{rd}$ column) in the PUSCH is transmitted through the antenna coherence group Ng3, and corresponds to one layer in the CW 1. In this case, it is assumed that the PTRS port 0 is bound to uplink antenna ports {0, 1, 2, 3} (namely, $0^{th}$ to $3^{rd}$ rows) in a predefined manner, that is, corresponds to uplink antenna ports included in Ng0 and Ng1. It is assumed that the PTRS port 1 is bound to uplink antenna ports {4, 5, 6, 7} (namely, $4^{th}$ to $7^{th}$ rows) in a predefined manner, that is, corresponds to uplink antenna ports included in Ng2 and Ng3. It can be learned from the TPMI and a CW-to-layer mapping relationship that
a PTRS port included ("included" herein may be further explained as being used as candidate DMRS ports) in layers ($0^{th}$ and $1^{st}$ columns in the TPMI) corresponding to the CW 0 is a PTRS port 0, and the CW 0 corresponds to a $1^{st}$ DMRS port and a $2^{nd}$ DMRS port. The $1^{st}$ DMRS port and the $2^{nd}$ DMRS port may be used as candidate DMRS ports of the PTRS port 0.

PTRS ports included in layers ($2^{nd}$, $3^{rd}$, and $4^{th}$ columns in the TPMI) corresponding to the CW 1 are PTRS ports 0 and 1. DMRS ports corresponding to second and third layers may be used as candidate DMRS ports of the PTRS port 1, and a DMRS port corresponding to a fourth layer may be used as a candidate DMRS port of the PTRS port 0. The CW 1 corresponds to a $3^{rd}$ DMRS port, a $4^{th}$ DMRS port, and a $5^{th}$ DMRS port. The $3^{rd}$ DMRS port and the $4^{th}$ DMRS port may be used as candidate DMRS ports of the PTRS port 1, and the $5^{th}$ DMRS port may be used as a candidate DMRS port of the PTRS port 0.

In conclusion, for the CW 0 and the CW 1, if the first codeword is the CW 0, an indication of an association between the PTRS port 0 and a candidate DMRS port is resolved. If the first codeword is the CW 1, an indication of an association between the PTRS port 0 and a candidate DMRS port may be indicated, and an indication of an association between the PTRS port 1 and a candidate DMRS port may also be indicated.

In this way, when MCSs corresponding to two CWs are equal based on a definition of the preset rule 2, a CW whose corresponding DMRS port includes more PTRS ports is selected. In this case, the CW 1 is selected as the first codeword. A subsequent indication of an association between each PTRS port and a corresponding candidate DMRS port continues to be performed by using embodiment steps after the first codeword is selected.

In the case (3), two layers (namely, $0^{th}$ and $4^{th}$ columns) in a PUSCH are transmitted through the antenna coherence group Ng0, where for the two layers transmitted through Ng0, the CW 0 includes one layer, and the CW 1 includes one layer. One layer (namely, a $1^{st}$ column) in the PUSCH is transmitted through the antenna coherence group Ng1, and corresponds to one layer in the CW 0. One layer (namely, a $2^{nd}$ column) in the PUSCH is transmitted through the antenna coherence group Ng2, and corresponds to one layer in the CW 1. One layer (namely, a $3^{rd}$ column) in the PUSCH is transmitted through the antenna coherence group Ng3, and corresponds to one layer in the CW 1. In this case, it is assumed that the PTRS port 0 is bound to uplink antenna ports {0, 1} (namely, $0^{th}$ and $1^{st}$ rows) in a predefined manner, that is, corresponds to uplink antenna ports included in Ng0. It is assumed that the PTRS port 1 is bound to uplink antenna ports {2, 3} in a predefined manner (namely, $2^{nd}$ and $3^{rd}$ rows), that is, corresponds to uplink antenna ports included in Ng1. It is assumed that the PTRS port 2 is bound to uplink antenna ports {4 and 5} (namely, $4^{th}$ and $5^{th}$ rows) in a predefined manner, that is, corresponds to uplink antenna ports included in Ng2. It is assumed that the PTRS port 3 is bound to uplink antenna ports {6, 7} (namely, $6^{th}$ and $7^{th}$ rows) in a predefined manner, that is, corresponds to uplink antenna ports included in Ng3. It can be learned from the TPMI and a CW-to-layer mapping relationship that

PTRS ports included ("included" herein may be further explained as being used as candidate DMRS ports) in layers ($0^{th}$ and $1^{st}$ columns in the TPMI) corresponding to the CW 0 are a PTRS port 0 and a PTRS port 1, and the CW 0 corresponds to a $1^{st}$ DMRS port and a $2^{nd}$ DMRS port. The $1^{st}$ DMRS port and the $2^{nd}$ DMRS port may be used as candidate DMRS ports of the PTRS port 0 and the PTRS port 1.

PTRS ports included in layers ($2^{nd}$, $3^{rd}$, and $4^{th}$ columns in the TPMI) corresponding to the CW 1 are PTRS ports 0, 2, and 3. A DMRS port corresponding to a second layer may be used as a candidate DMRS port of the PTRS port 2, a DMRS port corresponding to a third layer may be used as a candidate DMRS port of the PTRS port 3, and a DMRS port corresponding to a fourth layer may be used as a candidate DMRS port of the PTRS port 0. The CW 1 corresponds to a $3^{rd}$ DMRS port, a $4^{th}$ DMRS port, and a $5^{th}$ DMRS port. The $3^{rd}$ DMRS port may be used as a candidate DMRS port of the PTRS port 2, the $4^{th}$ DMRS port may be used as a candidate DMRS port of the PTRS port 3, and the $5^{th}$ DMRS port may be used as a candidate DMRS port of the PTRS port 0.

In conclusion, for the CW 0 and the CW 1, if the first codeword is the CW 0, an indication of an association between each of the PTRS ports 0 and 1 and a candidate DMRS port is resolved. If the first codeword is the CW 1, an indication of an association between the PTRS port 0 and a candidate DMRS port may be resolved, and an indication of an association between each of the PTRS ports 2 and 3 and a candidate DMRS port may also be resolved.

In this way, when MCSs corresponding to two CWs are equal based on a definition of the preset rule 2, a CW whose corresponding DMRS port includes more PTRS ports is selected. In this case, the CW 1 is selected as the first codeword. A subsequent indication of an association between each PTRS port and a corresponding candidate DMRS port continues to be performed by using embodiment steps after the first codeword is selected.

The following provides example descriptions by using an example in which there are eight streams and a number of PTRS ports is 2.

In an example, the terminal determines the precoding matrix based on a transport layer of the uplink PUSCH and the TPMI, as shown in FIG. 5a. Rows sequentially correspond to PUSCH ports 0 to 7, and columns sequentially correspond to a number of uplink transport layers/DMRS ports 0 to 7. The precoding matrix includes two Ng (Ng0 and Ng1) and two codewords (a CW 0 and a CW 1). The network device configures two PTRS ports (a PTRS port 0 and a PTRS port 1). It should be noted that the precoding matrix shown in FIG. 5a is an example for description, and a partial-coherent codeword form may be shown in (2) in step S1301, and corresponds to the TPMI form described in step S1301. All PTRS-DMRS association indication methods described in this embodiment may be supported. In addition, corresponding to all uplink PUSCH transmission modes and TPMI forms, in a scenario in which a number of PTRS ports is 2, a PTRS-DMRS port association indication may alternatively be performed by using a procedure corresponding to the embodiment.

Corresponding to the precoding matrix, a number of Ng is 2. In this case, the terminal may report that a maximum number of uplink PTRS ports supported by the terminal is 1 or 2. Herein, an example in which the terminal may report that a maximum number M of uplink PTRS ports supported by the terminal is 2 is used. Alternatively, the network device may configure a maximum number of uplink PTRS ports as 2.

According to a predefined rule, the precoding matrix shown in FIG. 5a is used as an example, PUSCH ports 0 to 3 share the PTRS port 0, and PUSCH ports 4 to 7 share the PTRS port 1. Herein, it may be understood that, physically, phase noise corresponding to the PUSCH ports 0 to 3 is measured through the PTRS port 0, and phase noise corresponding to the PUSCH ports 4 to 7 is measured through the PTRS port 1. It may be understood that a PTRS-DMRS association may be obtained according to the association method in this embodiment when a number of PTRS ports is 2 and the precoding matrix shown in FIG. 5b is used.

There may be the following three cases for the first codeword.

In a first case, the first codeword CW 0 includes $0^{th}$ to $3^{rd}$ columns in a precoding matrix shown in FIG. 9a, and the second codeword CW 1 includes $4^{th}$ to $7^{th}$ columns in the precoding matrix shown in FIG. 9a. In this case, each codeword corresponds to one PTRS port based on the association between the PTRS port and the PUSCH ports. To be specific, the first codeword CW 0 corresponds to the PTRS port 0, and the second codeword CW 1 corresponds to the PTRS port 1. In this case, the PUSCH ports 0 to 3 transmitted at four layers in the first codeword CW 0 correspond to the PTRS port 0, and the PUSCH ports 4 to 7 transmitted at four layers in the second codeword CW 1 correspond to the PTRS port 1.

As shown in the following table 26 or table 27, the network device preconfigures or the terminal prestores an association between the PTRS port 0 and each of a maximum of four scheduled DMRS ports corresponding to the first codeword.

Table 26 PTRS-DMRS association for UL PTRS port corresponding to the selected CW

| Value | DMRS port |
|---|---|
| 0 | $1^{st}$ scheduled DMRS port which shares PTRS port corresponding to the selected CW |
| 1 | $2^{nd}$ scheduled DMRS port which shares PTRS port corresponding to the selected CW |
| 2 | $3^{rd}$ scheduled DMRS port which shares PTRS port corresponding to the selected CW |
| 3 | $4^{th}$ scheduled DMRS port which shares PTRS port corresponding to the selected CW |

Table 27 PTRS-DMRS association for uplink PTRS port corresponding to the selected codeword

| Value | DMRS port |
|---|---|
| 0 | $1^{st}$ scheduled DMRS port which shares PTRS port corresponding to the selected codeword |
| 1 | $2^{nd}$ scheduled DMRS port which shares PTRS port corresponding to the selected codeword |
| 2 | $3^{rd}$ scheduled DMRS port which shares PTRS port corresponding to the selected codeword |
| 3 | $4^{th}$ scheduled DMRS port which shares PTRS port corresponding to the selected codeword |

The value is a value of a *PTRS-DMRS association* field in the DCI. The *PTRS-DMRS association* field may be 2 bits, and indicates a scheduled DMRS port associated with a PTRS port included in the first codeword (the selected codeword).

In a second case, the first codeword CW 0 includes $0^{th}$ to $2^{nd}$ columns and a $7^{th}$ column in a precoding matrix shown in FIG. 9b, and the second codeword CW 1 includes $3^{rd}$ to $6^{th}$ columns in the precoding matrix shown in FIG. 9b.

It should be noted that the precoding matrix shown in FIG. 9b is an example for description, and a partial-coherent codeword form may be shown in (2) in step S1301, and corresponds to the TPMI form described in step S1301. All PTRS-DMRS association indication methods described in this embodiment may be supported. In addition, corresponding to all uplink PUSCH transmission modes and TPMI forms, in a scenario in which a number of PTRS ports is 2, a PTRS-DMRS port association indication may alternatively be performed by using a procedure corresponding to the embodiment.

In this case, the two codewords each correspond to two PTRS ports based on the association between the PTRS port and the PUSCH ports. To be specific, the first codeword CW 0 corresponds to the PTRS port 0 and the PTRS port 1, and the second codeword CW 1 corresponds to the PTRS port 0 and the PTRS port 1. In this case, the PUSCH ports 0 to 2 transmitted at three layers in the first codeword CW 0 correspond to the PTRS port 0, and the PUSCH port 7 transmitted at the fourth layer in the first codeword CW 0 corresponds to the PTRS port 1; and the PUSCH port 3 transmitted at the first layer in the second codeword CW 1 corresponds to the PTRS port 0, and the PUSCH ports 4 to 6 transmitted at the second to fourth layers in the second codeword CW 1 correspond to the PTRS port 1.

In this case, for the PTRS port 1 corresponding to the PUSCH port 7 transmitted at the fourth layer in the first codeword CW 0, the PTRS port 1 is associated with a preset DMRS port, namely, a DMRS port 1011. For the PTRS port 0 corresponding to the PUSCH ports 0 to 2 transmitted at the three layers in the first codeword CW 0, as shown in the following table 28 or table 29, the network device preconfigures or the terminal prestores an association between the PTRS port 0 and each of three scheduled DMRS ports.

Table 28 PTRS-DMRS association for UL PTRS port corresponding to the selected CW

| Value | DMRS port |
|---|---|
| 0 | 1st scheduled DMRS port which shares PTRS port corresponding to the selected CW |
| 1 | 2nd scheduled DMRS port which shares PTRS port corresponding to the selected CW |
| 2 | 3rd scheduled DMRS port which shares PTRS port corresponding to the selected CW |
| 3 | Reserved |

Table 29 PTRS-DMRS association for uplink PTRS port corresponding to the selected codeword

| Value | DMRS port |
|---|---|
| 0 | 1st scheduled DMRS port which shares PTRS port corresponding to the selected codeword |
| 1 | 2nd scheduled DMRS port which shares PTRS port corresponding to the selected codeword |
| 2 | 3rd scheduled DMRS port which shares PTRS port corresponding to the selected codeword |
| 3 | Reserved |

In this scenario, when the table corresponds to four values, DCI signaling delivered by the network device may not indicate value=3.

The value is a value of a *PTRS-DMRS association* field in the DCI. The *PTRS-DMRS association* field may be 2 bits, and indicates a scheduled DMRS port associated with the PTRS port 0.

In a third case, the first codeword CW 0 includes 0th and 1st columns and 6th and 7th columns in a precoding matrix shown in FIG. 9c, and the second codeword CW 1 includes 2nd to 5th columns in the precoding matrix shown in FIG. 9c.

It should be noted that the precoding matrix shown in FIG. 9c is an example for description, and a partial-coherent codeword form may be shown in (2) in step S1301, and corresponds to the TPMI form described in step S1301. All PTRS-DMRS association indication methods described in this embodiment may be supported. In addition, corresponding to all uplink PUSCH transmission modes and TPMI forms, in a scenario in which a number of PTRS ports is 2, a PTRS-DMRS port association indication may alternatively be performed by using a procedure corresponding to the embodiment.

In this case, the two codewords each correspond to two PTRS ports based on the association between the PTRS port and the PUSCH ports. To be specific, the first codeword CW 0 corresponds to the PTRS port 0 and the PTRS port 1, and the second codeword CW 1 corresponds to the PTRS port 0 and the PTRS port 1. In this case, the PUSCH ports 0 and 1 transmitted at the first and second layers in the first codeword CW 0 correspond to the PTRS port 0, and the PUSCH ports 6 and 7 transmitted at the third and fourth layers in the first codeword CW 0 correspond to the PTRS port 1; and the PUSCH ports 2 and 3 transmitted at the first and second layers in the second codeword CW 1 correspond to the PTRS port 0, and the PUSCH ports 4 to 6 transmitted at the third and fourth layers in the second codeword CW 1 correspond to the PTRS port 1.

In this case, for the PTRS port 0 corresponding to the PUSCH ports 0 and 1 transmitted at the first and second layers in the first codeword CW 0, and for the PTRS port 1 corresponding to the PUSCH ports 6 and 7 transmitted at the third and fourth layers in the first codeword CW 0, as shown in the following table 30 or table 31, the network device preconfigures or the terminal prestores an association between the PTRS port 0 and each of two scheduled DMRS ports and an association between the PTRS port 1 and each of two scheduled DMRS ports.

Table 30 PTRS-DMRS association for UL PTRS ports 0 and 1

| Value of MSB | DMRS port | | Value of LSB | DMRS port |
|---|---|---|---|---|
| 0 | 1st DMRS port with the selected CW which shares PTRS port 0 | | 0 | 1st DMRS port with the selected CW which shares PTRS port 1 |
| 1 | 2nd DMRS port with the selected CW which shares PTRS port 0 | | 1 | 2nd DMRS port with the selected CW which shares PTRS port 1 |

Table 31 PTRS-DMRS association for uplink PTRS ports 0 and 1

| Value of MSB | DMRS port | | Value of LSB | DMRS port |
|---|---|---|---|---|
| 0 | 1st scheduled DMRS port which shares PTRS port corresponding to the selected codeword | | 0 | 1st scheduled DMRS port which shares PTRS port corresponding to the selected codeword |
| 1 | 2nd scheduled DMRS port which shares PTRS port corresponding to the selected codeword | | 1 | 2nd scheduled DMRS port which shares PTRS port corresponding to the selected codeword |

*A PTRS-DMRS association* field in the DCI includes an MSB and an LSB. The MSB indicates an association between the PTRS port 0 and a DMRS port, and the LSB indicates an association between the PTRS port 1 and a DMRS port. Both the MSB and the LSB are 1 bit.

In the foregoing three cases, it can be learned that, compared with those in an existing scenario in which there are four streams, indication overheads of the DCI do not increase in the scenario in which there are more than four streams, and therefore the indication overheads of the DCI are low.

This embodiment may be further applied to the full-coherent PUSCH transmission mode, as shown in Table 32 to Table 35.

The following provides example descriptions by using an example in which there are eight streams and a number of PTRS ports is 11.

In an example, the terminal determines the precoding matrix based on a transport layer of the uplink PUSCH and the TPMI, as shown in the full-coherent transmission mode in the part (1) in step S1301. Rows sequentially correspond to PUSCH ports 0 to 7, and columns sequentially correspond to a number of uplink transport layers/DMRS ports 0 to 7. The precoding matrix includes one Ng (Ng0) and two codewords (a CW 0 and a CW 1). The network device configures one PTRS port (a PTRS port 0). Corresponding to the precoding matrix, a number of Ng is 1. In this case, the terminal may report that a maximum number of uplink PTRS ports supported by the terminal is 1. Herein, an example in which the terminal may report that a maximum number M of uplink PTRS ports supported by the terminal is 1 is used.

According to a predefined rule, the precoding matrix shown in FIG. 5a is used as an example, and the PUSCH ports 0 to 7 share the PTRS port 0. Herein, it may be understood that, physically, phase noise corresponding to the PUSCH ports 0 to 7 is measured through the PTRS port 0. It may be understood that the PTRS-DMRS association may be obtained according to the association method in this embodiment when a number of PTRS ports is 1 and the precoding matrix shown in the partial full-coherent transmission mode in the part (1) in step S1301 is used.

This embodiment is applicable to a scenario in which there are more than four PUSCH/SRS ports and/or more than four streams in uplink. In the scenario in which there are more than four streams in uplink, the second codeword may be introduced.

In a scenario in which there are two or more codewords, in this embodiment, a DMRS port corresponding to each of one or more PUSCH transport layers in one codeword (a first codeword) is considered as a candidate DMRS port that may be associated with a PTRS port.

The network device transmits the codeword indication information to the terminal. The codeword indication information indicates the first codeword, and the codeword indication information includes an MCS corresponding to the first codeword. In addition, the codeword indication information may further include at least one piece of the following information: a new data indicator (new data indicator, NDI) and a redundancy version (redundancy version, RV).

For example, the network device may alternatively transmit a plurality of groups of codeword indication information to the terminal, where each group of codeword indication information includes an MCS corresponding to each codeword. After receiving the plurality of groups of codeword indication information, the terminal may select, as the first codeword from a plurality of codewords, a codeword corresponding to a highest MCS. If the MCS is the highest, quality of a PTRS signal transmitted based on the DMRS ports corresponding to the one or more layers in the codeword is optimal.

For example, when MCSs indicated by two codewords are equal, a codeword corresponding to a first MCS included in the codeword indication information corresponding to the first codeword is referred to as a codeword 0. Alternatively, for example, when MCSs indicated by two codewords are equal, a codeword corresponding to a second MCS included in the codeword indication information corresponding to the first codeword is referred to as a codeword 1. That is, when MCSs indicated by two codewords are equal, a default codeword is preset as the first codeword (referred to as a preset rule 1).

In addition, for example, when MCSs are equal, the first codeword is determined based on a TPMI corresponding to current PUSCH transmission. A specific determining method is as follows: (1) receiving DCI, obtaining indication information of a TPMI from the DCI, and determining, by using codeword information and the TPMI that corresponds to the current PUSCH transmission, a number of PTRS ports included in each CW, where the codeword information herein is mainly predefined codeword-to-layer mapping (codeword-to-layer mapping) information or codeword-to-layer mapping information notified this time; and (2) determining, as the first codeword, a codeword including a large number of PTRS ports (referred to as a preset rule 2).

For the full-coherent PUSCH transmission mode, a specific *PTRS-DMRS association* field in the DCI may be shown in Table 32 to Table 35.

Table 32 PTRS-DMRS association for UL PTRS port 0

| Value | DMRS port |
|---|---|
| 0 | 1st scheduled DMRS port with the CW with the higher MCS |
| 1 | 2nd scheduled DMRS port the CW with the higher MCS |
| 2 | 3rd scheduled DMRS port the CW with the higher MCS |
| 3 | 4th scheduled DMRS port the CW with the higher MCS |

Table 33 PTRS-DMRS association for uplink PTRS port 0

| Value | DMRS port |
|---|---|
| 0 | 1st scheduled DMRS port corresponding to the CW with the higher MCS |
| 1 | 2nd scheduled DMRS port corresponding to the CW with the higher MCS |
| 2 | 3rd scheduled DMRS port corresponding to the CW with the higher MCS |
| 3 | 4th scheduled DMRS port corresponding to the CW with the higher MCS |

Table 34 PTRS-DMRS association for UL PTRS port 0

| Value | DMRS port |
|---|---|
| 0 | 1st scheduled DMRS port corresponding to the selected CW |
| 1 | 2nd scheduled DMRS port corresponding to the selected CW |
| 2 | 3rd scheduled DMRS port corresponding to the selected CW |
| 3 | 4th scheduled DMRS port corresponding to the selected CW |

Table 35 PTRS-DMRS association for uplink PTRS port 0

| Value | DMRS port |
|---|---|
| 0 | 1st scheduled DMRS port corresponding to the selected CW |
| 1 | 2nd scheduled DMRS port corresponding to the selected CW |
| 2 | 3rd scheduled DMRS port corresponding to the selected CW |
| 3 | 4th scheduled DMRS port corresponding to the selected CW |

S1303: The network device transmits PTRS-DMRS association indication information.

Correspondingly, the terminal receives the PTRS-DMRS association indication information.

The PTRS-DMRS association indication information may be included in the DCI.

For example, in the first case in which there are eight streams and a number of PTRS ports is 2, with reference to Table 19, for example, for a single-symbol type 1 DMRS, if DMRS ports scheduled after expansion are {0, 1, 2, 3, 8, 9, 10, 11}, scheduled DMRS ports that share the PTRS port 0 are sequentially {0, 1, 2, 3}. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; if a value of the *PTRS-DMRS association* field is "10", the PTRS port 0 is associated with a DMRS port 1002; or if a value of the *PTRS-DMRS association* field is "11", the PTRS port 0 is associated with a DMRS port 1003.

For another example, for a single-symbol type 2 DMRS, if DMRS ports scheduled after expansion are {0, 1, 2, 3, 4, 5, 12, 13}, the *PTRS-DMRS association* field may be 2 bits, and indicates a scheduled DMRS port associated with the PTRS port 0. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; if a value of the *PTRS-DMRS association* field is "10", the PTRS port 0 is associated with a DMRS port 1002; or if a value of the *PTRS-DMRS association* field is "11", the PTRS port 0 is associated with a DMRS port 1003.

In addition, a DMRS port associated with the PTRS port 1 may be further determined. The DMRS port associated with the PTRS port 1 may be a predefined or preconfigured DMRS port.

For example, the DMRS port associated with the PTRS port 1 may be predefined as a DMRS port with a smallest port number in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 1 is a DMRS port 1008.

For another example, the association between the PTRS port and the DMRS port shown in Table 17 may be preconfigured. The MSB of the *PTRS-DMRS association* field may indicate the DMRS port associated with the PTRS port 0, and the LSB of the *PTRS-DMRS association* field may indicate the DMRS port associated with the PTRS port 1.

For another example, in the second case in which there are eight streams and a number of PTRS ports is 2, with reference to Table 20, for example, for a single-symbol type 1 DMRS, if DMRS ports scheduled after expansion are {0, 1, 2, 3, 8, 9, 10, 11}, scheduled DMRS ports that share the PTRS port 0 are sequentially {0, 1, 2}. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; or if a value of the *PTRS-DMRS association* field is "10", the PTRS port 0 is associated with a DMRS port 1002.

For another example, for a single-symbol type 2 DMRS, if DMRS ports scheduled after expansion are {0, 1, 2, 3, 4, 5, 12, 13}, the *PTRS-DMRS association* field may be 2 bits, and indicates a scheduled DMRS port associated with the PTRS port 0. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; if a value of the *PTRS-DMRS association* field is "10", the PTRS port 0 is associated with a DMRS port 1002; or if a value of the *PTRS-DMRS association* field is "11", the PTRS port 0 is associated with a DMRS port 1003. For the PTRS port 1 corresponding to the PUSCH port 7 transmitted at the fourth layer in the first codeword CW 0, the PTRS port 1 is associated with a preset DMRS port, namely, a DMRS port 1013.

In addition, a DMRS port associated with the PTRS port 1 may be further determined. The DMRS port associated with the PTRS port 1 may be a predefined or preconfigured DMRS port.

For example, the DMRS port associated with the PTRS port 1 may be predefined as a DMRS port with a smallest port number in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 1 is a DMRS port 1003.

For another example, in the third case in which there are eight streams and a number of PTRS ports is 2, with reference to Table 21, for example, for a single-symbol type 1 DMRS, if DMRS ports scheduled after expansion are {0, 1, 2, 3, 8, 9, 10, 11}, scheduled DMRS ports that share the PTRS port 0 are {0, 1}. If the MSB is "1", a scheduled DMRS port associated with the PTRS port 0 is the 2$^{nd}$ scheduled DMRS port, namely, a DMRS port 1001. When scheduled DMRS ports that share the PTRS port 1 are {10, 11}, if the LSB is "0", a scheduled DMRS port associated with the PTRS port 1 is the 1$^{st}$ scheduled DMRS port, namely, a DMRS port 1010.

In addition, a DMRS port associated with the PTRS port 0 corresponding to the PUSCH ports 2 and 3 transmitted at the first and second layers in the second codeword CW 1 may be further determined. The DMRS port associated with the PTRS port 0 may be a predefined or preconfigured DMRS port. For example, the DMRS port associated with the PTRS port 0 may be predefined as a DMRS port with a smallest port number at the first and second layers in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 0 is a DMRS port 1002.

A DMRS port associated with the PTRS port 1 corresponding to the PUSCH ports 4 to 6 transmitted at the third and fourth layers in the second codeword CW 1 may be further determined. The DMRS port associated with the PTRS port 1 may be a predefined or preconfigured DMRS port. For example, the DMRS port associated with the PTRS port 1 may be predefined as a DMRS port with a smallest port number at the third and fourth layers in the second codeword CW 1. For example, for the single-symbol type 1 DMRS, if DMRS ports scheduled after expansion are {0, 1, 2, 3, 8, 9, 10, 11}, it may be determined that the DMRS port associated with the PTRS port 1 is a DMRS port 1008.

In the case in which there are six streams, with reference to Table 22, for example, for a single-symbol type 1 DMRS, if DMRS ports scheduled after expansion are {0, 1, 2, 3, 8, 9}, scheduled DMRS ports that share the PTRS port 0 are sequentially {0, 1, 2}. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; or if a value of the *PTRS-DMRS association* field is "10", the PTRS port 0 is associated with a DMRS port 1002.

For another example, for a single-symbol type 2 DMRS, if DMRS ports scheduled after expansion are {0, 1, 2, 3, 4, 5}, the *PTRS-DMRS association* field may be 2 bits, and indicates a scheduled DMRS port associated with the PTRS port 0. If a value of the *PTRS-DMRS association* field is "00", the PTRS port 0 is associated with a DMRS port 1000; if a value of the *PTRS-DMRS association* field is "01", the PTRS port 0 is associated with a DMRS port 1001; or if a value of the *PTRS-DMRS association* field is "10", the PTRS port 0 is associated with a DMRS port 1002.

In addition, a DMRS port associated with the PTRS port 1 may be further determined. The DMRS port associated with the PTRS port 1 may be a predefined or preconfigured DMRS port.

For example, the DMRS port associated with the PTRS port 1 may be predefined as a DMRS port with a smallest port number in the second codeword CW 1. For example, for the single-symbol type 1 DMRS, if DMRS ports scheduled after expansion are {0, 1, 2, 3, 8, 9}, it may be determined that the DMRS port associated with the PTRS port 1 is a DMRS port 1003.

For example, in the case in which there are four streams, with reference to Table 23, for example, for a single-symbol type 1 DMRS, if scheduled DMRS ports are {0, 1, 2, 3}, scheduled DMRS ports that share the PTRS port 0 are {0, 1}. If the MSB is "1", a scheduled DMRS port associated with the PTRS port 0 is the $2^{nd}$ scheduled DMRS port, namely, a DMRS port 1001. When scheduled DMRS ports that share the PTRS port 1 are {2, 3}, if the LSB is "0", a scheduled DMRS port associated with the PTRS port 1 is the $1^{st}$ scheduled DMRS port, namely, a DMRS port 1002.

For example, in the first case in which there are eight streams and a number of PTRS ports is 4, with reference to Table 24, for example, for a single-symbol type 1 DMRS, if DMRS ports scheduled after expansion are {0, 1, 2, 3, 8, 9, 10, 11}, scheduled DMRS ports that share the PTRS port 0 are sequentially {0, 1}. If a value of the *PTRS-DMRS association* field is "0", the PTRS port 0 is associated with a DMRS port 1000; or if a value of the *PTRS-DMRS association* field is "1", the PTRS port 0 is associated with a DMRS port 1001.

For example, for a single-symbol type 2 DMRS, if DMRS ports scheduled after expansion are {0, 1, 2, 3, 4, 5, 12, 13}, scheduled DMRS ports that share the PTRS port 0 are sequentially {0, 1}. The *PTRS-DMRS association* field may be 1 bits, and indicates a scheduled DMRS port associated with the PTRS port 0. If a value of the *PTRS-DMRS association* field is "0", the PTRS port 0 is associated with a DMRS port 1000; or if a value of the *PTRS-DMRS association* field is "1", the PTRS port 0 is associated with a DMRS port 1001.

For the PTRS port 1 corresponding to the PUSCH port 2 transmitted at the one layer in the first codeword CW 0, a DMRS port associated with the PTRS port 1 is a preset port 1002.

For the PTRS port 3 corresponding to the PUSCH port 7 transmitted at the one layer in the first codeword CW 0, a DMRS port associated with the PTRS port 1 is a preset port 1011.

In addition, DMRS ports respectively associated with the PTRS port 1 to the PTRS port 3 that correspond to the second codeword CW 1 may be further determined. The DMRS ports respectively associated with the PTRS port 1 to the PTRS port 3 that correspond to the second codeword CW 1 may be DMRS ports that are predefined or preconfigured or that are obtained according to a default rule.

For another example, in the second case in which there are eight streams and a number of PTRS ports is 4, with reference to Table 25, for example, for a single-symbol type 1 DMRS, if DMRS ports scheduled after expansion are {0, 1, 2, 3, 8, 9, 10, 11}, scheduled DMRS ports that share the PTRS port 0 are {0, 1}. If the MSB is "0", a scheduled DMRS port associated with the PTRS port 0 is the $2^{nd}$ scheduled DMRS port, namely, a DMRS port 1000. If the MSB is "1", a scheduled DMRS port associated with the PTRS port 0 is the $2^{nd}$ scheduled DMRS port, namely, a DMRS port 1001. When scheduled DMRS ports that share the PTRS port 1 are {2, 3}, if the LSB is "0", a scheduled DMRS port associated with the PTRS port 1 is the $1^{st}$ scheduled DMRS port, namely, a DMRS port 1002; or if the LSB is "1", a scheduled DMRS port associated with the PTRS port 1 is the $1^{st}$ scheduled DMRS port, namely, a DMRS port 1003.

S1304: The terminal determines, from the at least one first DMRS port based on the DCI, a first DMRS port associated with each of the at least one first PTRS port.

After receiving the DCI, the terminal obtains the rank of the uplink PUSCH and the TPMI in the DCI, and then determines the precoding matrix; and determines, based on the determined precoding matrix and the codeword indication information, the first codeword and the at least one first PTRS port corresponding to the first codeword. Then, the terminal determines, from at least one DMRS port based on the DCI, the first DMRS port associated with each of the at least one first PTRS port. For a specific example, refer to the foregoing descriptions.

Further, the terminal may further determine a time-frequency resource position of the PTRS signal and a PTRS signal sequence based on at least one of an index of the determined first DMRS port, a currently scheduled MCS, and a number of currently scheduled RBs.

Specifically, the network device may configure the MCS currently scheduled by the terminal, and the terminal may determine a time density of the PTRS signal based on the currently scheduled MCS and according to Table 8. Further, a time domain position *l* corresponding to the PTRS signal is determined based on the time density of the PTRS signal and a value formula of the time domain position *l* corresponding to the PTRS signal.

The network device may configure a number of RBs currently scheduled by the terminal, and the terminal may determine a frequency density of the PTRS signal based on the number of currently scheduled RBs and according to Table 9. Further, the frequency domain position k corresponding to the PTRS signal is determined based on the frequency density of the PTRS signal and according to a value formula (Formula 7) of the frequency domain position k corresponding to the PTRS signal.

The terminal further determines the time-frequency resource position of the PTRS signal based on the time domain position *l* and the frequency domain position *k* that correspond to the PTRS signal and according to the formula 6.

The PTRS signal and a DMRS signal correspond to a same base sequence, that is, only corresponding $r(2n + k')$ in a DMRS signal generation formula (namely, the foregoing formula 5) is included, and time-frequency masks $w_f(k')$ and $w_t(l')$ are not included.

For example, the codeword indication information and the DCI may be independent information, or the codeword indication information and the DCI may be in first information. The terminal determines, from the at least one first DMRS port based on the first information, the first DMRS port associated with each of the at least one first PTRS port.

S1305: The terminal transmits at least one PTRS signal through the at least one first PTRS port based on the first DMRS port associated with each of the at least one first PTRS port.

Correspondingly, the network device receives the at least one PTRS signal.

The terminal transmits the PTRS signal on the corresponding first PTRS port based on the first DMRS port associated with each of the at least one first PTRS port. In addition, the terminal may further transmit the PTRS signal on a corresponding second PTRS port based on a second DMRS port associated with each of at least one second PTRS port.

For example, the PTRS-DMRS association is used to determine the sequence and a time-frequency resource of the PTRS signal. A specific transmit behavior is still transmitting based on the sequence and the time-frequency resource that correspond to the PTRS port, and is unrelated to a DMRS port.

According to the communication method provided in this embodiment of this application, the association between the PTRS port and the DMRS port can be accurately determined. This improves communication reliability.

It may be understood that, to implement the functions in the foregoing embodiments, the terminal and the network device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on a particular application scenario and a design constraint of the technical solutions.

FIG. 15 to FIG. 18 each are a diagram of a structure of a possible communication apparatus according to an embodiment of this application. These communication apparatuses may be configured to implement functions of the terminal or the network device in the foregoing method embodiments, and therefore can also implement beneficial effects of the foregoing method embodiments.

FIG. 15 is a diagram of a structure of a communication apparatus according to an embodiment of this application. The communication apparatus 1300 includes a transceiver unit 1301 and a processing unit 1302.

When the communication apparatus 1300 is configured to implement functions of the terminal in the method embodiment shown in FIG. 4, the transceiver unit 1301 is configured to perform operations of the terminal in steps S401, S402, and S404 in the embodiment shown in FIG. 4, and the processing unit 1302 is configured to perform step S403 in the embodiment shown in FIG. 4.

When the communication apparatus 1300 is configured to implement functions of the network device in the method embodiment shown in FIG. 4, the transceiver unit 1301 is configured to perform operations of the network device in steps S401, S402, and S404 in the embodiment shown in FIG. 4.

When the communication apparatus 1300 is configured to implement functions of the terminal in the method embodiment shown in FIG. 8, the transceiver unit 1301 is configured to perform operations of the terminal in steps S801 to S803 and S805 in the embodiment shown in FIG. 8, and the processing unit 1302 is configured to perform step S804 in the embodiment shown in FIG. 8.

When the communication apparatus 1300 is configured to implement functions of the network device in the method embodiment shown in FIG. 8, the transceiver unit 1301 is configured to perform operations of the network device in steps S801 to S803 and S805 in the embodiment shown in FIG. 8.

FIG. 16 is a diagram of a simplified structure of a terminal. For ease of understanding and convenience of figure illustration, an example in which the terminal is a mobile phone is used in FIG. 16. As shown in FIG. 16, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and transmit a radio frequency signal in a form of electromagnetic wave. An input/output apparatus like a touchscreen, a display, or a keyboard, is mainly configured to: receive data input by a user, and output data to the user. For example, some types of terminals may have no input/output apparatus.

When transmitting data, after performing baseband processing on to-be-transmitted data, the processor outputs a baseband signal to the radio frequency circuit. The radio frequency circuit transmits a radio frequency signal to the outside in the form of electromagnetic wave through the antenna after performing radio frequency processing on the baseband signal. When data is transmitted to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 16. An actual terminal product may include one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a receiving unit and a sending unit (or collectively referred to as a transceiver unit) of the terminal, and the processor that has a processing function is considered as a processing unit of the terminal. As shown in FIG. 16, the terminal includes a transceiver unit 1401 and a processing unit 1402. The transceiver unit 1401 may also be referred to as a receiver/transmitter (sender), a receiver/transmitter machine, a receiver/transmitter circuit, or the like. The processing unit 1402 may also be referred to as a processor, a processing board, a processing module, a processing apparatus, or the like. The transceiver unit 1401 is configured to implement a function of the transceiver unit 1301 in the embodiment shown in FIG. 15, and the processing unit 1402 is configured to implement a function of the processing unit 1302 in the embodiment shown in FIG. 15.

FIG. 17 is a diagram of a simplified structure of a network device. The network device includes a part for receiving/transmitting a radio frequency signal and performing conversion and a part 1502, and the part for receiving/-transmitting a radio frequency signal and performing conversion further includes a transceiver unit part 1501. The part for receiving/transmitting a radio frequency signal and performing conversion is mainly configured to: transmit/receive a radio frequency signal and perform conversion between a radio frequency signal and a baseband signal. The part 1502 is mainly configured to: perform baseband processing, control the network device, and the like. The transceiver unit 1501 may also be referred to as a receiver/transmitter (sender), a receiver/transmitter machine, a receiver/transmitter circuit, or the like. The part 1502 is usually a control center of the network device, may usually be referred to as a processing unit, and is configured to control the network device to perform steps performed by the network device in FIG. 4 or FIG. 8. For details, refer to the foregoing descriptions of the related parts. The transceiver unit 1501 may be configured to implement a function of the transceiver unit 1301 in the embodiment shown in FIG. 15, and the part 1502 is configured to implement a function of the processing unit 1302 in the embodiment shown in FIG. 15.

The part 1502 may include one or more boards. Each board may include one or more processors and one or more memories. The processor is configured to read and execute a program in the memory to implement a baseband processing function and control the network device. If there are a plurality of boards, the boards may be interconnected to improve a processing capability. In an optional implementation, a plurality of boards may share one or more processors, or a plurality of boards may share one or more memories, or a plurality of boards may simultaneously share one or more processors.

FIG. 18 is a diagram of a structure of another communication apparatus according to an embodiment of this application. The communication apparatus 1600 includes a processor 1601 and an interface circuit 1602. The processor 1601 and the interface circuit 1602 are coupled to each other. It may be understood that the interface circuit 1602 may be a transceiver or an input/output interface. Optionally, the communication apparatus 1600 may further include a memory 1603, configured to: store instructions executed by the processor 1601, or store input data required for running instructions by the processor 1601, or store data generated after the processor 1601 runs instructions.

When the communication apparatus 1600 is configured to implement the method shown in FIG. 4 or FIG. 8, the processor 1601 is configured to implement a function of the processing unit 1302, and the interface circuit 1602 is configured to implement a function of the transceiver unit 1301.

When the communication apparatus is a chip used in a terminal, the chip is configured to implement functions of the terminal in the foregoing method embodiments. The chip receives information from another module (for example, a radio frequency module or an antenna) in the terminal, where the information is transmitted by a network device or another device to the terminal. Alternatively, the chip transmits information to another module (for example, a radio frequency module or an antenna) in the terminal, where the information is transmitted by the terminal to a network device or another device.

When the communication apparatus is a chip used in the network device, the chip is configured to implement functions of the network device in the foregoing method embodiments. The chip receives information from another module (for example, a radio frequency module or an antenna) in the network device, where the information is transmitted by a terminal or another device to the network device. Alternatively, the chip transmits information to another module (for example, a radio frequency module or an antenna) in the network device, where the information is transmitted by the network device to a terminal or another device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a transistor logic device, a hardware component, or any combination thereof. The general-purpose processor may be a microprocessor or any regular processor.

According to the communication apparatus provided in embodiments of this application, an indication for DMRS ports of more than four streams is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a first node. Certainly, the processor and the storage medium may alternatively exist as discrete components in a terminal.

An embodiment of this application further provides a communication system, including the foregoing communication apparatus.

An embodiment of this application further provides a computer-readable storage medium, and the computer-readable storage medium stores a computer program or instructions. When the program or the instructions are executed by a processor, the methods in the foregoing embodiments are performed.

An embodiment of this application further provides a computer program product. When the computer program product is executed on a computing device, the methods in the foregoing embodiments are performed.

All or some of the foregoing embodiments may be implemented by using software, hardware, firmware, or any combination thereof. When software is used for implementation, all or some of embodiments may be implemented in a form of computer program product. The computer program product includes one or more computer programs or instructions. When the computer programs or the instructions are loaded and executed on a computer, all or some of procedures or functions in embodiments of this application are executed. The computer may be a general-purpose computer, a dedicated computer, a computer network, a network device, a terminal, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association between associated objects, and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:

   receiving, by a terminal, downlink control information DCI, wherein the DCI comprises an indication of a phase tracking reference signal-demodulation reference signal PTRS-DMRS association, the PTRS-DMRS association indicates an association between a first PTRS port and a first DMRS port, and the first DMRS port is a DMRS port corresponding to a first codeword; and the PTRS-DMRS association further indicates an association between a second PTRS port and a second DMRS port, and the second DMRS port is a DMRS port corresponding to a second codeword;
   transmitting, by the terminal, a first PTRS signal through the first PTRS port based on the first DMRS port associated with the first PTRS port; and
   transmitting, by the terminal, the second PTRS signal through the second PTRS port based on the second DMRS port associated with the second PTRS port.

2. The method according to claim 1, wherein the method further comprises:

   reporting, by the terminal, M PTRS ports supported by the terminal; or receiving, by the terminal, first information from a network device, wherein the first information is used to configure the M PTRS ports, and M is a positive integer; and
   a number of first PTRS ports is less than or equal to M, and a number of second PTRS ports is less than or equal to M.

3. The method according to claim 2, wherein a sum of the numbers of the first PTRS ports and the second PTRS ports is M.

4. The method according to any one of claims 1 to 3, wherein the method further comprises: receiving, by the terminal, codeword indication information, wherein the codeword indication information indicates the first codeword, and the first codeword corresponds to the first PTRS port.

5. The method according to claim 4, wherein the codeword indication information further indicates the second codeword, and the second codeword corresponds to the second PTRS port.

6. The method according to any one of claims 1 to 5, wherein the method further comprises:
   receiving, by the terminal, first transmission precoding matrix index TPMI indication information, wherein the first codeword corresponds to at least one uplink layer transmitted through a first antenna port group, the PTRS-DMRS association indicates that the first PTRS port is associated with a $1L_1^{th}$ layer in the at least one uplink layer transmitted through the first antenna port group, $L_1$ is an $L_1^{th}$ layer corresponding to the first PTRS port in a precoding matrix, and $L_1$ is an integer greater than or equal to 0.

7. The method according to claim 6, wherein the first antenna port group comprises PUSCH antenna ports {0, 1, 4, 5}.

8. The method according to any one of claims 1 to 7, wherein the method further comprises:
   receiving, by the terminal, second TPMI indication information, wherein the second codeword corresponds to at least one uplink layer transmitted through a second antenna port group, the PTRS-DMRS association indicates that the second PTRS port is associated with an $L_2^{th}$ layer in the at least one uplink layer transmitted through the second antenna port group, $L_2$ is an $L_2^{th}$ layer corresponding to the second PTRS port in a precoding matrix, and $L_2$ is an integer greater than or equal to 0.

9. The method according to claim 8, wherein the second antenna port group comprises PUSCH antenna ports {2, 3, 6, 7}.

10. A communication method, wherein the method comprises:

transmitting, by a network device, downlink control information DCI, wherein the DCI comprises an indication of a phase tracking reference signal-demodulation reference signal PTRS-DMRS association, the PTRS-DMRS association indicates an association between a first PTRS port and a first DMRS port, and the first DMRS port is a DMRS port corresponding to a first codeword; and the PTRS-DMRS association further indicates an association between a second PTRS port and a second DMRS port, and the second DMRS port is a DMRS port corresponding to a second codeword;
receiving, by the network device, a first PTRS signal through the first PTRS port based on the first DMRS port associated with the first PTRS port; and
receiving, by the network device, the second PTRS signal through the second PTRS port based on the second DMRS port associated with the second PTRS port.

**11.** The method according to claim 10, wherein the method further comprises:

receiving, by the network device, M PTRS ports reported and supported by the terminal; or transmitting first information, wherein the first information is used to configure the M PTRS ports, and M is a positive integer; and a number of first PTRS ports is less than or equal to M, and a number of second PTRS ports is less than or equal to M.

**12.** The method according to claim 11, wherein a sum of the numbers of the first PTRS ports and the second PTRS ports is M.

**13.** The method according to any one of claims 10 to 12, wherein the method further comprises: transmitting, by the network device, codeword indication information, wherein the codeword indication information indicates the first codeword, and the first codeword corresponds to the first PTRS port.

**14.** The method according to claim 13, wherein the codeword indication information further indicates the second codeword, and the second codeword corresponds to the second PTRS port.

**15.** The method according to any one of claims 10 to 14, wherein the method further comprises:
transmitting, by the network device, first transmission precoding matrix index TPMI indication information, wherein the first codeword corresponds to at least one uplink layer transmitted through a first antenna port group, the PTRS-DMRS association indicates that the first PTRS port is associated with a $1L_1^{th}$ layer in the at least one uplink layer transmitted through the first antenna port group, $L_1$ is an $L_1^{th}$ layer corresponding to the first PTRS port in a precoding matrix, and $L_1$ is an integer greater than or equal to 0.

**16.** The method according to claim 15, wherein the first antenna port group comprises PUSCH antenna ports {0, 1, 4, 5}.

**17.** The method according to any one of claims 10 to 16, wherein the method further comprises:
transmitting, by the network device, second TPMI indication information, wherein the second codeword corresponds to at least one uplink layer transmitted through a second antenna port group, the PTRS-DMRS association indicates that the second PTRS port is associated with an $L_2^{th}$ layer in the at least one uplink layer transmitted through the second antenna port group, $L_2$ is an $L_2^{th}$ layer corresponding to the second PTRS port in a precoding matrix, and $L_2$ is an integer greater than or equal to 0.

**18.** The method according to claim 17, wherein the second antenna port group comprises PUSCH antenna ports {2, 3, 6, 7}.

**19.** The method according to any one of claims 1 to 18, wherein the first PTRS port is a PTRS port 0, the second PTRS port is a PTRS port 1, the first DMRS port is a $1^{st}$, $2^{nd}$, $3^{rd}$, or $4^{th}$ DMRS port that shares the PTRS port 0, the second DMRS port is a $1^{st}$, $2^{nd}$, $3^{rd}$, or $4^{th}$ DMRS port that shares the PTRS port 1, and the PTRS-DMRS association comprises:

when a most significant bit is a first value, a DMRS port that shares the PTRS port 0 is the $1^{st}$ DMRS port;
when a most significant bit is a second value, a DMRS port that shares the PTRS port 0 is the $2^{nd}$ DMRS port;
when a most significant bit is a third value, a DMRS port that shares the PTRS port 0 is the $3^{rd}$ DMRS port;
when a most significant bit is a fourth value, a DMRS port that shares the PTRS port 0 is the $4^{th}$ DMRS port;
when a least significant bit is a first value, a DMRS port that shares the PTRS port 1 is the $1^{st}$ DMRS port;
when a least significant bit is a second value, a DMRS port that shares the PTRS port 1 is the $2^{nd}$ DMRS port;
when a least significant bit is a third value, a DMRS port that shares the PTRS port 1 is the $3^{rd}$ DMRS port; or

when a least significant bit is a fourth value, a DMRS port that shares the PTRS port 1 is the 4th DMRS port.

**20.** The method according to any one of claims 1 to 19, wherein the DCI further comprises at least one piece of the following information: a rank of an uplink physical uplink shared channel PUSCH and a TPMI; and
the method further comprises:
determining, by the terminal based on the rank of the uplink PUSCH and/or the TPMI, the first PTRS port corresponding to the first codeword.

**21.** The method according to claim 20, wherein the TPMI corresponds to one precoding matrix, the precoding matrix comprises X PUSCH/SRS ports and Y data layers, each data layer corresponds to one DMRS port, and X is greater than 4 and/or Y is greater than 4.

**22.** The method according to claim 20 or 21, wherein the X PUSCH/SRS ports are reported by the terminal or configured by the network device, and the X PUSCH/SRS ports are associated with the M PTRS ports according to a predefined rule.

**23.** The method according to any one of claims 1 to 22, wherein when an antenna port group Ng is equal to 2, a form of the precoding matrix corresponding to the TPMI is:

$$\frac{1}{\sqrt{\sum_{x=1}^{Nt}\sum_{y=1}^{NL} {a^2}_{x,y}}}\begin{bmatrix} a_{1,1} & a_{2,1} & a_{3,1} & a_{4,1} & 0 & 0 & 0 & 0 \\ a_{1,2} & a_{2,2} & a_{3,2} & a_{4,2} & 0 & 0 & 0 & 0 \\ a_{1,3} & a_{2,3} & a_{3,3} & a_{4,3} & 0 & 0 & 0 & 0 \\ a_{1,4} & a_{2,4} & a_{3,4} & a_{4,4} & 0 & 0 & 0 & 0 \\ 0 & 0 & 0 & 0 & a_{5,5} & a_{6,5} & a_{7,5} & a_{8,5} \\ 0 & 0 & 0 & 0 & a_{5,6} & a_{6,6} & a_{7,6} & a_{8,6} \\ 0 & 0 & 0 & 0 & a_{5,7} & a_{6,7} & a_{7,7} & a_{8,7} \\ 0 & 0 & 0 & 0 & a_{5,8} & a_{6,8} & a_{7,8} & a_{8,8} \end{bmatrix},$$

wherein
an element in an $x^{th}$ row and a $y^{th}$ column in the precoding matrix is represented as $a_{x,y}$, $a_{x,y}$ herein may be a real number whose modulus is 1, and a specific value of $a_{x,y}$ is usually {1, -1, j, -j}; $\frac{1}{\sqrt{\sum_{x=1}^{Nt}\sum_{y=1}^{NL} {a^2}_{x,y}}}$ is a power coefficient of the precoding matrix, and may be used to ensure that power of each PUSCH port is the same as power of each precoding matrix; and there is no element 0 in the Nt×NL precoding matrix for a partial-coherent codebook, or there is an element whose value is 0 in the precoding matrix for a partial-coherent codebook.

**24.** The method according to any one of claims 1 to 22, wherein when an antenna port group Ng is equal to 4, a form of the precoding matrix corresponding to the TPMI is:

$$\frac{1}{\sqrt{\sum_{x=1}^{Nt}\sum_{y=1}^{NL} a^2{}_{x,y}}}\begin{bmatrix} a_{1,1} & a_{2,1} & 0 & 0 & 0 & 0 & 0 & 0 \\ a_{1,2} & a_{2,2} & 0 & a_{4,2} & 0 & 0 & 0 & 0 \\ 0 & 0 & a_{3,3} & a_{4,3} & 0 & 0 & 0 & 0 \\ 0 & 0 & a_{3,4} & a_{4,4} & 0 & 0 & 0 & 0 \\ 0 & 0 & 0 & 0 & a_{5,5} & a_{6,5} & 0 & 0 \\ 0 & 0 & 0 & 0 & a_{5,6} & a_{6,6} & 0 & 0 \\ 0 & 0 & 0 & 0 & 0 & 0 & a_{7,7} & a_{8,7} \\ 0 & 0 & 0 & 0 & 0 & 0 & a_{7,8} & a_{8,8} \end{bmatrix},$$

wherein

an element in an x^th^ row and a y^th^ column in the precoding matrix is represented as $a_{x,y}$, $a_{x,y}$ herein may be a real number whose modulus is 1, and a specific value of $a_{x,y}$ is usually {1, -1, j, -j}; $\frac{1}{\sqrt{\sum_{x=1}^{Nt}\sum_{y=1}^{NL} a^2{}_{x,y}}}$ is a power coefficient of the precoding matrix, and may be used to ensure that power of each PUSCH port is the same as power of each precoding matrix; and there is no element 0 in the Nt×NL precoding matrix for a partial-coherent codebook, or there is an element whose value is 0 in the precoding matrix for a partial-coherent codebook, wherein

the first four columns in the precoding matrix correspond to the first codeword, and the last four columns in the precoding matrix correspond to the second codeword.

**25.** The method according to any one of claims 1 to 24, wherein the first codeword further corresponds to at least one antenna coherence group.

**26.** The method according to claim 25, wherein M is greater than or equal to 2, and the number of first PTRS ports is less than or equal to a number of antenna coherence groups.

**27.** A communication method, wherein the method comprises:

receiving, by a terminal, codeword indication information, wherein the codeword indication information indicates a first codeword, and the first codeword corresponds to at least one first phase tracking reference signal PTRS port;

receiving, by the terminal, downlink control information DCI, wherein the DCI indicates an association between the at least one first phase tracking reference signal PTRS port and at least one first DMRS port, and the at least one first DMRS port is a DMRS port corresponding to the first codeword; and

transmitting, by the terminal, at least one PTRS signal through the at least one first PTRS port based on a first DMRS port associated with each of the at least one first PTRS port.

**28.** The method according to claim 27, wherein the method further comprises:

reporting, by the terminal, M PTRS ports supported by the terminal; or receiving, by the terminal, first information from a network device, wherein the first information is used to configure the M PTRS ports, and M is a positive integer; and

determining, by the terminal, a number of the at least one first PTRS port corresponding to the first codeword, wherein the number of the at least one first PTRS port is less than or equal to M.

**29.** The method according to claim 28, wherein the number of the at least one first PTRS port is M.

**30.** The method according to claim 29, wherein M>1, a first DMRS port associated with at least one first PTRS port is determined based on the DCI, and DMRS ports associated with remaining M-1 PTRS ports are preset ports.

**31.** The method according to claim 29 or 30, wherein M=2, a first DMRS port associated with one of two first PTRS ports is determined based on the DCI, and a first DMRS port associated with the other one of the two first PTRS ports is a preset port.

**32.** The method according to claim 31, wherein a number of first DMRS ports associated with the other one of the two first PTRS ports is 1.

**33.** The method according to claim 28, wherein the first codeword corresponds to N first PTRS ports, N<M, a second codeword corresponds to R second PTRS ports, R=M-N, and N and R are positive integers; and the method further comprises:
determining, by the terminal, second DMRS ports respectively associated with the R second PTRS ports, wherein the second DMRS port is a DMRS port that is predefined or preconfigured in the second codeword or that is obtained according to a default rule.

**34.** The method according to claim 33, N>1, a first DMRS port associated with at least one first PTRS port is determined based on the DCI, and DMRS ports associated with remaining N-1 PTRS ports are preset ports.

**35.** The method according to claim 33 or 34, wherein M=4, N=3, R=1, and a first DMRS port associated with one of three first PTRS ports is determined based on the DCI, first DMRS ports associated with the other two of the three first PTRS ports are preset ports, and a number of first DMRS ports associated with each of the other two of the three first PTRS ports is 1; or
M=4, N=2, R=2, and a first DMRS port associated with each of two first PTRS ports is determined based on the DCI.

**36.** The method according to any one of claims 33 to 35, wherein the second DMRS port is a DMRS port with a smallest port number in the second codeword.

**37.** The method according to any one of claims 27 to 36, wherein the codeword indication information comprises a modulation and coding scheme MCS corresponding to each of a plurality of codewords, and the first codeword is a codeword corresponding to a highest MCS in the plurality of codewords.

**38.** The method according to any one of claims 27 to 36, wherein the codeword indication information comprises a modulation and coding scheme MCS corresponding to each of two codewords, and the first codeword is a preset codeword when MCSs corresponding to the two codewords are equal.

**39.** The method according to claim 38, wherein the two codewords are a codeword 0 and a codeword 1; and
the preset codeword is the codeword 0.

**40.** The method according to claim 27, wherein
the codeword indication information is codeword indication information corresponding to initial PUSCH transmission.

**41.** The method according to any one of claims 27 to 40, wherein the DCI further comprises at least one piece of the following information: a rank of an uplink physical uplink shared channel PUSCH and a TPMI; and
the method further comprises:
determining, by the terminal based on the rank of the uplink PUSCH and/or the TPMI, the at least one first PTRS port corresponding to the first codeword.

**42.** The method according to claim 41, wherein the TPMI corresponds to one precoding matrix, the precoding matrix comprises X PUSCH/SRS ports and Y data layers, each data layer corresponds to one DMRS port, and X is greater than 4 and/or Y is greater than 4.

**43.** The method according to claim 42, wherein the X PUSCH/SRS ports are reported by the terminal or configured by the network device, and the X PUSCH/SRS ports are associated with the M PTRS ports according to a predefined rule.

**44.** The method according to any one of claims 28 to 43, wherein the first codeword further corresponds to at least one antenna coherence group.

**45.** The method according to claim 44, wherein M is greater than or equal to 2, and the number of first PTRS ports is less than or equal to a number of antenna coherence groups.

**46.** The method according to claim 28 or 29, wherein the at least one first PTRS port comprises a PTRS port 0, the selected codeword is the first codeword, the at least one first DMRS port comprises a 1st, 2nd, 3rd, or 4th scheduled DMRS port, and when a value of M is 1, the association between the at least one first PTRS port and the at least one first DMRS port comprises:

when the DCI indicates a first value, a DMRS port corresponding to the selected codeword is the 1st scheduled DMRS port;
when the DCI indicates a second value, a DMRS port corresponding to the selected codeword is the 2nd scheduled DMRS port;
when the DCI indicates a third value, a DMRS port corresponding to the selected codeword is the 3rd scheduled DMRS port; or
when the DCI indicates a fourth value, a DMRS port corresponding to the selected codeword is the 4th scheduled DMRS port.

**47.** A communication method, wherein the method comprises:

transmitting, by a network device, codeword indication information, wherein the codeword indication information indicates a first codeword, and the first codeword corresponds to at least one first phase tracking reference signal PTRS port;
transmitting, by the network device, downlink control information DCI, wherein the DCI indicates an association between the at least one first phase tracking reference signal PTRS port and the at least one first DMRS port, and the at least one first DMRS port is a DMRS port corresponding to one or more layers in the first codeword; and
receiving, by the network device, at least one PTRS signal through the at least one first PTRS port based on a first DMRS port associated with each of the at least one first PTRS port.

**48.** The method according to claim 47, wherein the method further comprises:

receiving, by the network device, M PTRS ports reported and supported by a terminal; or
transmitting, by the network device, first information, wherein the first information is used to configure the M PTRS ports, and
M is a positive integer.

**49.** The method according to claim 48, wherein a number of the at least one first PTRS port is M.

**50.** The method according to claim 49, wherein M>1, a first DMRS port associated with at least one first PTRS port is determined based on the DCI, and DMRS ports associated with remaining M-1 PTRS ports are preset ports.

**51.** The method according to claim 49 or 50, wherein M=2, a first DMRS port associated with one of two first PTRS ports is determined based on the DCI, and a first DMRS port associated with the other one of the two first PTRS ports is a preset port.

**52.** The method according to claim 51, wherein a number of first DMRS ports associated with the other one of the two first PTRS ports is 1.

**53.** The method according to claim 48, wherein the first codeword corresponds to N first PTRS ports, N<M, a second codeword corresponds to R second PTRS ports, R=M-N, and N and R are positive integers.

**54.** The method according to claim 53, N>1, a first DMRS port associated with at least one first PTRS port is determined based on the DCI, and DMRS ports associated with remaining N-1 PTRS ports are preset ports.

**55.** The method according to claim 53 or 54, wherein M=4, N=3, R=1, and a first DMRS port associated with one of three first PTRS ports is determined based on the DCI, first DMRS ports associated with the other two of the three first PTRS ports are preset ports, and a number of first DMRS ports associated with each of the other two of the three first PTRS ports is 1; or
M=4, N=2, R=2, and a first DMRS port associated with each of two first PTRS ports is determined based on the DCI.

**56.** The method according to any one of claims 23 to 25, wherein the second DMRS port is a DMRS port with a smallest port number in the second codeword.

**57.** The method according to any one of claims 47 to 56, wherein the codeword indication information comprises a modulation and coding scheme MCS corresponding to each of a plurality of codewords, and the first codeword is a codeword corresponding to a highest MCS in the plurality of codewords.

**58.** The method according to any one of claims 47 to 56, wherein the codeword indication information comprises a modulation and coding scheme MCS corresponding to each of two codewords, and the first codeword is a preset codeword when MCSs corresponding to the two codewords are equal.

**59.** The method according to claim 58, wherein the two codewords are a codeword 0 and a codeword 1; and the preset codeword is the codeword 0.

**60.** The method according to claim 47, wherein the codeword indication information is codeword indication information corresponding to initial PUSCH transmission.

**61.** The method according to any one of claims 48 to 57, wherein the DCI further comprises at least one piece of the following information: a rank of an uplink physical uplink shared channel PUSCH and a TPMI; and the TPMI corresponds to one precoding matrix, the precoding matrix comprises X PUSCH/SRS ports and Y data layers, each data layer corresponds to one DMRS port, and X is greater than 4 and/or Y is greater than 4.

**62.** The method according to claim 61, wherein the X PUSCH/SRS ports are reported by the terminal or configured by the network device, and the X PUSCH/SRS ports are associated with the M PTRS ports according to a predefined rule.

**63.** The method according to any one of claims 48 to 62, wherein the first codeword further corresponds to at least one antenna coherence group.

**64.** The method according to claim 63, wherein M is greater than or equal to 2, and the number of first PTRS ports is less than or equal to a number of antenna coherence groups.

**65.** The method according to claim 48 or 49, wherein the at least one first PTRS port comprises a PTRS port 0, the selected codeword is the first codeword, the at least one first DMRS port comprises a $1^{st}$, $2^{nd}$, $3^{rd}$, or $4^{th}$ scheduled DMRS port, and when a value of M is 1, the association between the at least one first PTRS port and the at least one first DMRS port comprises:

when the DCI indicates a first value, a DMRS port corresponding to the selected codeword is the $1^{st}$ scheduled DMRS port;
when the DCI indicates a second value, a DMRS port corresponding to the selected codeword is the $2^{nd}$ scheduled DMRS port;
when the DCI indicates a third value, a DMRS port corresponding to the selected codeword is the $3^{rd}$ scheduled DMRS port; or
when the DCI indicates a fourth value, a DMRS port corresponding to the selected codeword is the $4^{th}$ scheduled DMRS port.

**66.** A communication apparatus, comprising a unit configured to implement the method according to any one of claims 1 to 65.

**67.** A communication system, comprising a first communication apparatus and a second communication apparatus, wherein the first communication apparatus comprises a module configured to perform the method according to any one of claims 1 to 9 and claims 19 to 46, and the second communication apparatus comprises a module configured to perform the method according to any one of claims 10 to 26 and claims 47 to 65.

**68.** A communication apparatus, comprising a processor, a memory, and instructions that are stored in the memory and that are run on the processor, wherein when the instructions are run, the communication apparatus is enabled to perform the method according to any one of claims 1 to 65.

**69.** A communication apparatus, comprising a processor, configured to execute a program stored in a memory, wherein when the program is executed, the apparatus is enabled to perform the method according to any one of claims 1 to 65.

**70.** The apparatus according to claim 69, wherein the memory is located outside the apparatus.

**71.** A computer-readable storage medium, comprising instructions, wherein when the instructions are run on a computer, the method according to any one of claims 1 to 65 is performed.

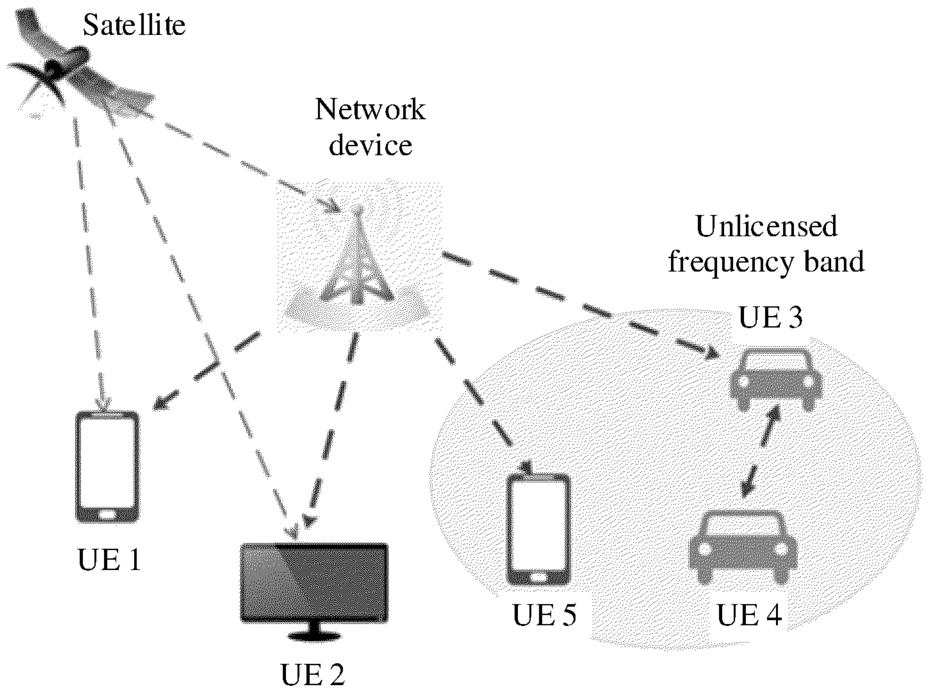
Satellite
Network device
Unlicensed frequency band
UE 3
UE 1
UE 2
UE 5
UE 4

FIG. 1

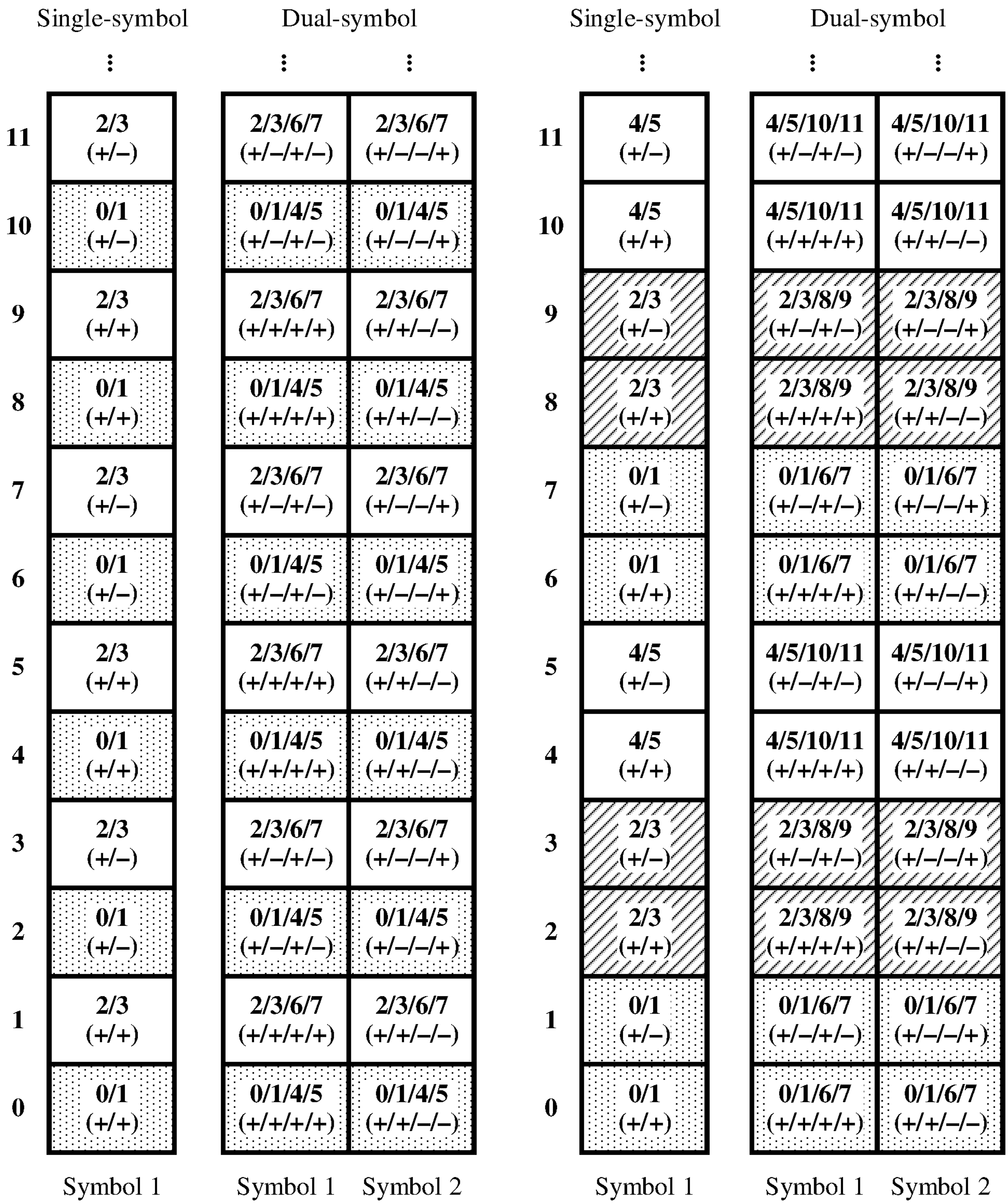
Single-symbol
Dual-symbol
Single-symbol
Dual-symbol
Symbol 1
Symbol 1
Symbol 2
Symbol 1
Symbol 1
Symbol 2

FIG. 2

| | |
|---|---|
| 0 | 0 1 |
| 1 | 0 1 |
| 2 | 2 3 |
| 3 | 2 3 |
| 4 | 4 5 |
| 5 | 4 5 |
| 6 | 0 1 |
| 7 | 0 1 |
| 8 | 2 3 |
| 9 | 2 3 |
| 10 | 4 5 |
| 11 | 4 5 |

| | |
|---|---|
| 0 | 0 1 6 7 |
| 1 | 0 1 6 7 |
| 2 | 2 3 8 9 |
| 3 | 2 3 8 9 |
| 4 | 4 5 10 11 |
| 5 | 4 5 10 11 |
| 6 | 0 1 6 7 |
| 7 | 0 1 6 7 |
| 8 | 2 3 8 9 |
| 9 | 2 3 8 9 |
| 10 | 4 5 10 11 |
| 11 | 4 5 10 11 |

| Resource element | P0 | P1 |
|---|---|---|
| 0 | +1 | +1 |
| 1 | +1 | –1 |
| 6 | +1 | +1 |
| 7 | +1 | –1 |

| Resource element | P0 | P1 | P6 | P7 |
|---|---|---|---|---|
| 0 | +1 | +1 | +1 | +1 |
| 1 | +1 | –1 | +1 | –1 |
| 6 | +1 | +1 | –1 | –1 |
| 7 | +1 | –1 | –1 | +1 |

FIG. 3

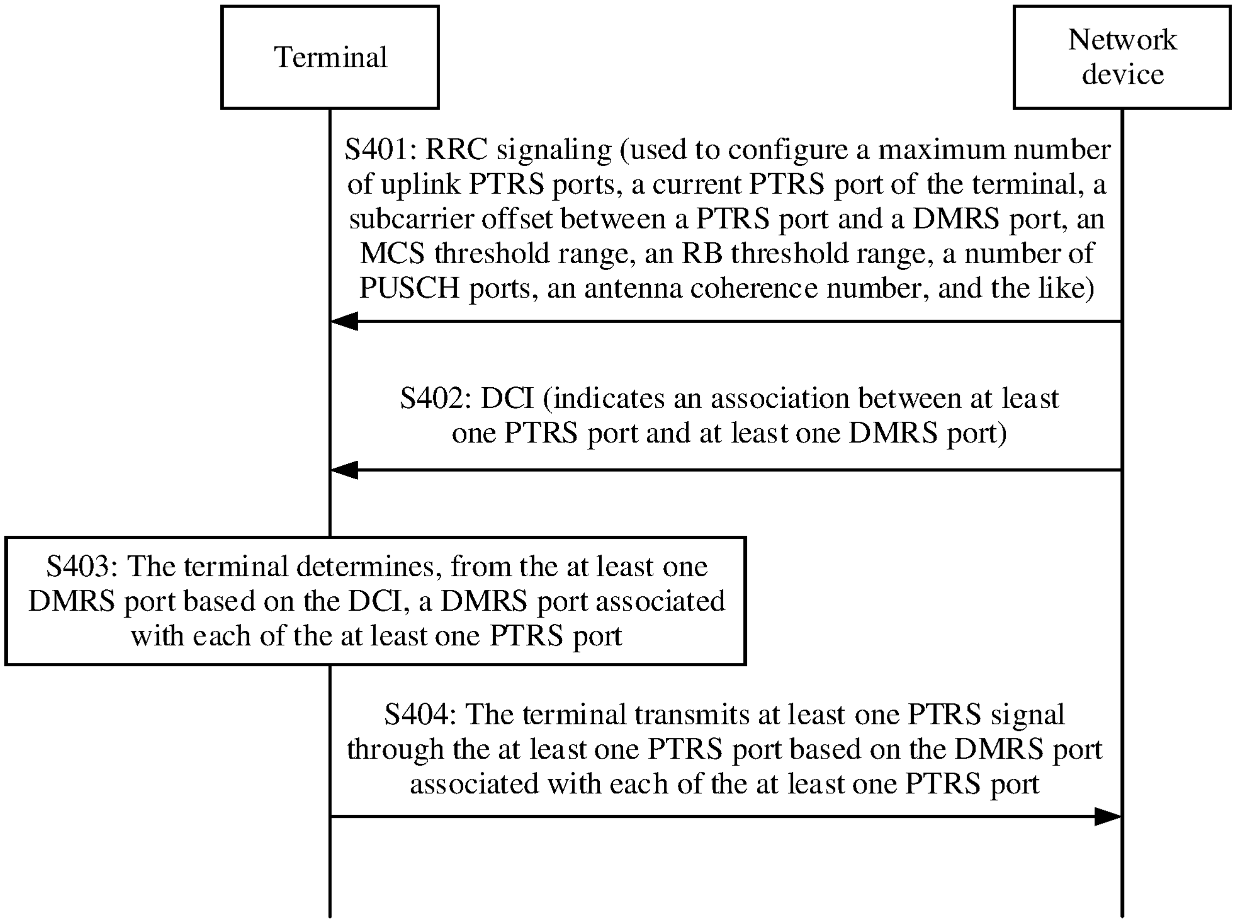
Terminal
Network device
S401: RRC signaling (used to configure a maximum number of uplink PTRS ports, a current PTRS port of the terminal, a subcarrier offset between a PTRS port and a DMRS port, an MCS threshold range, an RB threshold range, a number of PUSCH ports, an antenna coherence number, and the like)
S402: DCI (indicates an association between at least one PTRS port and at least one DMRS port)
S403: The terminal determines, from the at least one DMRS port based on the DCI, a DMRS port associated with each of the at least one PTRS port
S404: The terminal transmits at least one PTRS signal through the at least one PTRS port based on the DMRS port associated with each of the at least one PTRS port

FIG. 4

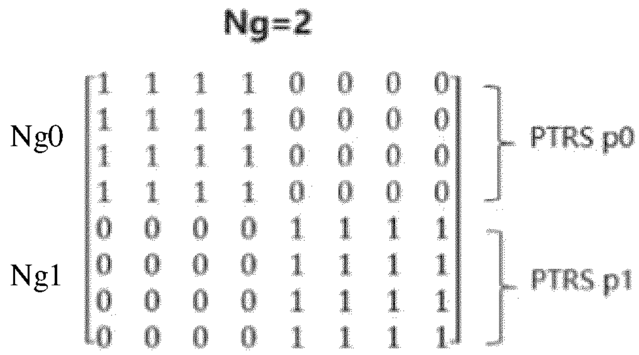
Ng=2
Ng0
Ng1
PTRS p0
PTRS p1

FIG. 5a

Ng=2

| | | | | | | | | |
|---|---|---|---|---|---|---|---|---|
| PUSCH p0 | 1 | 1 | 1 | 1 | 0 | 0 | 0 | 0 |
| PUSCH p1 | 0 | 0 | 0 | 0 | 1 | 1 | 1 | 1 |
| PUSCH p2 | 1 | 1 | 1 | 1 | 0 | 0 | 0 | 0 |
| PUSCH p3 | 0 | 0 | 0 | 0 | 1 | 1 | 1 | 1 |
| PUSCH p4 | 1 | 1 | 1 | 1 | 0 | 0 | 0 | 0 |
| PUSCH p5 | 0 | 0 | 0 | 0 | 1 | 1 | 1 | 1 |
| PUSCH p6 | 1 | 1 | 1 | 1 | 0 | 0 | 0 | 0 |
| PUSCH p7 | 0 | 0 | 0 | 0 | 1 | 1 | 1 | 1 |

FIG. 5b

Ng=4

| | | | | | | | | | |
|---|---|---|---|---|---|---|---|---|---|
| PTRS p0 | 1 | 1 | 0 | 0 | 0 | 0 | 0 | 0 | Ng0 |
| | 1 | 1 | 0 | 0 | 0 | 0 | 0 | 0 | |
| PTRS p1 | 0 | 0 | 1 | 1 | 0 | 0 | 0 | 0 | Ng1 |
| | 0 | 0 | 1 | 1 | 0 | 0 | 0 | 0 | |
| PTRS p2 | 0 | 0 | 0 | 0 | 1 | 1 | 0 | 0 | Ng2 |
| | 0 | 0 | 0 | 0 | 1 | 1 | 0 | 0 | |
| PTRS p3 | 0 | 0 | 0 | 0 | 0 | 0 | 1 | 1 | Ng3 |
| | 0 | 0 | 0 | 0 | 0 | 0 | 1 | 1 | |

FIG. 6a

**Ng=4**

| | | | | | | | | |
|---|---|---|---|---|---|---|---|---|
| PUSCH p0 | 1 | 1 | 0 | 0 | 0 | 0 | 0 | 0 |
| PUSCH p1 | 0 | 0 | 1 | 1 | 0 | 0 | 0 | 0 |
| PUSCH p2 | 0 | 0 | 0 | 0 | 1 | 1 | 0 | 0 |
| PUSCH p3 | 0 | 0 | 0 | 0 | 0 | 0 | 1 | 1 |
| PUSCH p4 | 1 | 1 | 0 | 0 | 0 | 0 | 0 | 0 |
| PUSCH p5 | 0 | 0 | 1 | 1 | 0 | 0 | 0 | 0 |
| PUSCH p6 | 0 | 0 | 0 | 0 | 1 | 1 | 0 | 0 |
| PUSCH p7 | 0 | 0 | 0 | 0 | 0 | 0 | 1 | 1 |

FIG. 6b

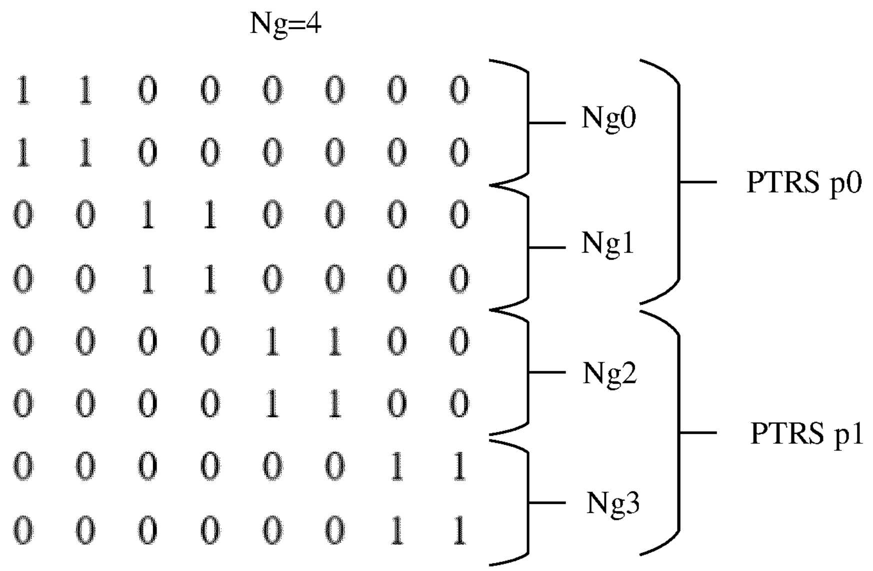


FIG. 7

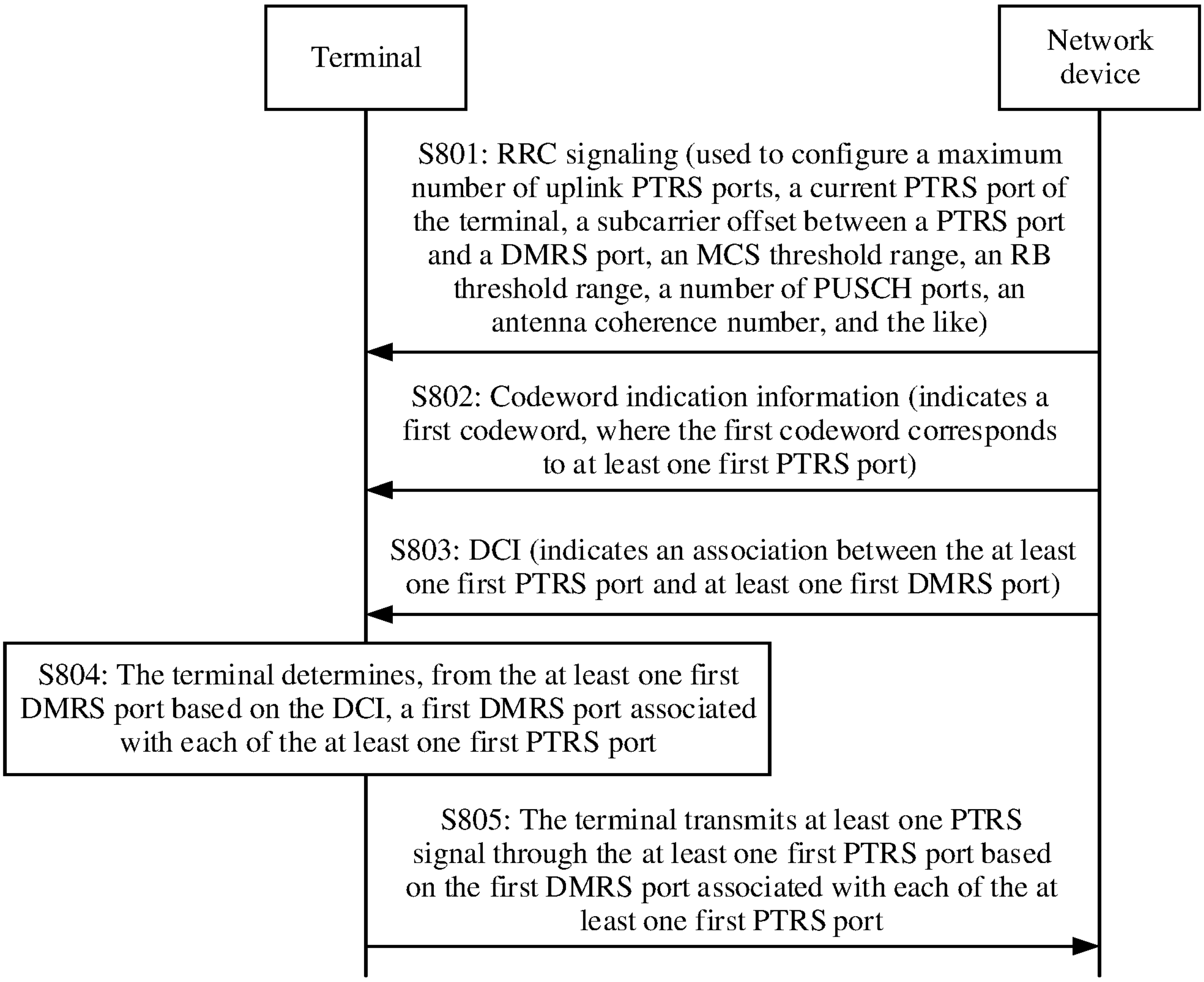
Terminal
Network device
S801: RRC signaling (used to configure a maximum number of uplink PTRS ports, a current PTRS port of the terminal, a subcarrier offset between a PTRS port and a DMRS port, an MCS threshold range, an RB threshold range, a number of PUSCH ports, an antenna coherence number, and the like)
S802: Codeword indication information (indicates a first codeword, where the first codeword corresponds to at least one first PTRS port)
S803: DCI (indicates an association between the at least one first PTRS port and at least one first DMRS port)
S804: The terminal determines, from the at least one first DMRS port based on the DCI, a first DMRS port associated with each of the at least one first PTRS port
S805: The terminal transmits at least one PTRS signal through the at least one first PTRS port based on the first DMRS port associated with each of the at least one first PTRS port

FIG. 8

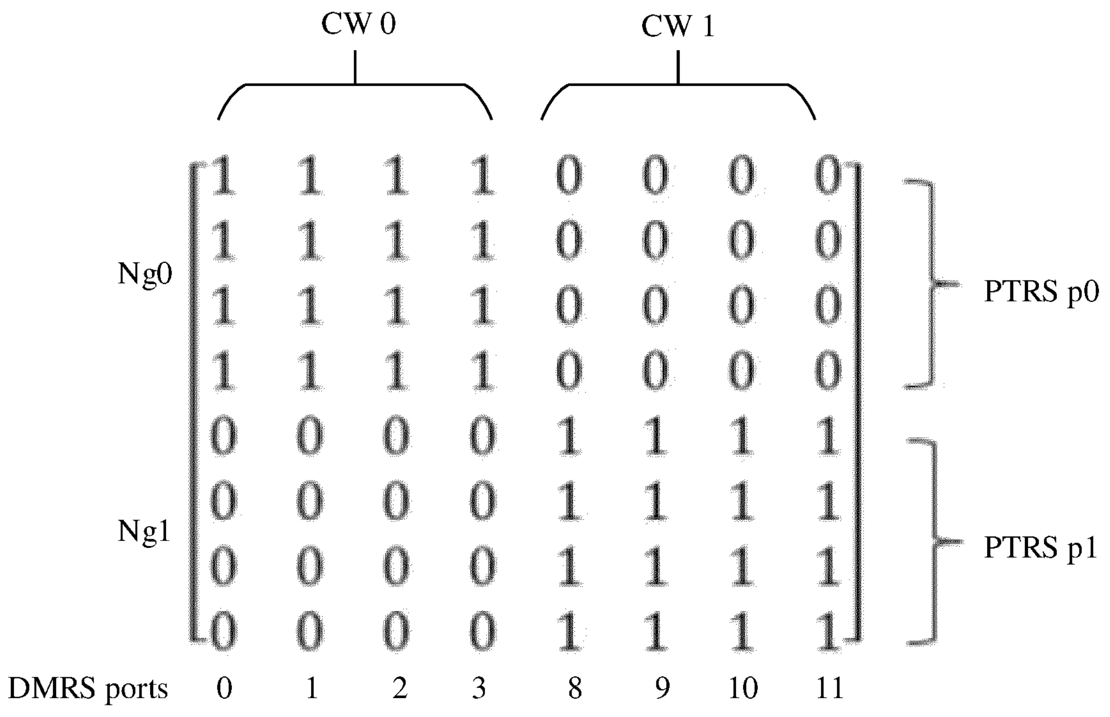
CW 0
CW 1
Ng0
Ng1
1 1 1 1 0 0 0 0
1 1 1 1 0 0 0 0
1 1 1 1 0 0 0 0
1 1 1 1 0 0 0 0
0 0 0 0 1 1 1 1
0 0 0 0 1 1 1 1
0 0 0 0 1 1 1 1
0 0 0 0 1 1 1 1
PTRS p0
PTRS p1
DMRS ports 0 1 2 3 8 9 10 11

FIG. 9a

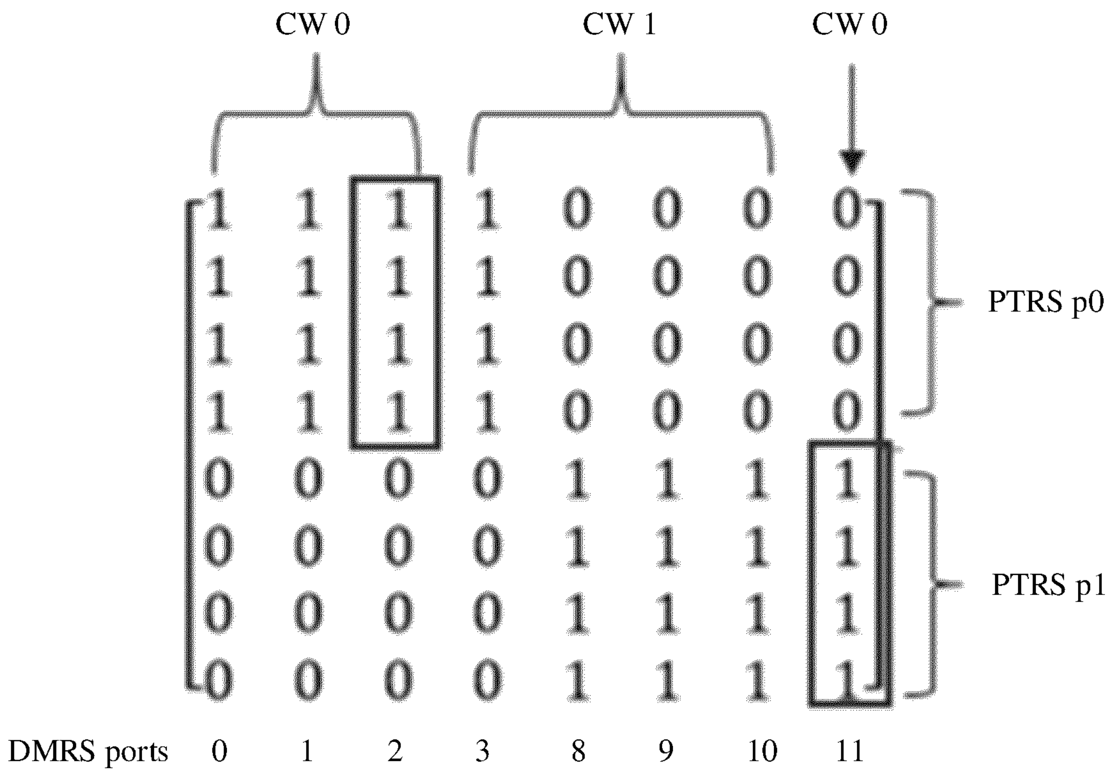
CW 0
CW 1
CW 0
1 1 1 1 0 0 0 0
1 1 1 1 0 0 0 0
1 1 1 1 0 0 0 0
1 1 1 1 0 0 0 0
0 0 0 0 1 1 1 1
0 0 0 0 1 1 1 1
0 0 0 0 1 1 1 1
0 0 0 0 1 1 1 1
PTRS p0
PTRS p1
DMRS ports 0 1 2 3 8 9 10 11

FIG. 9b

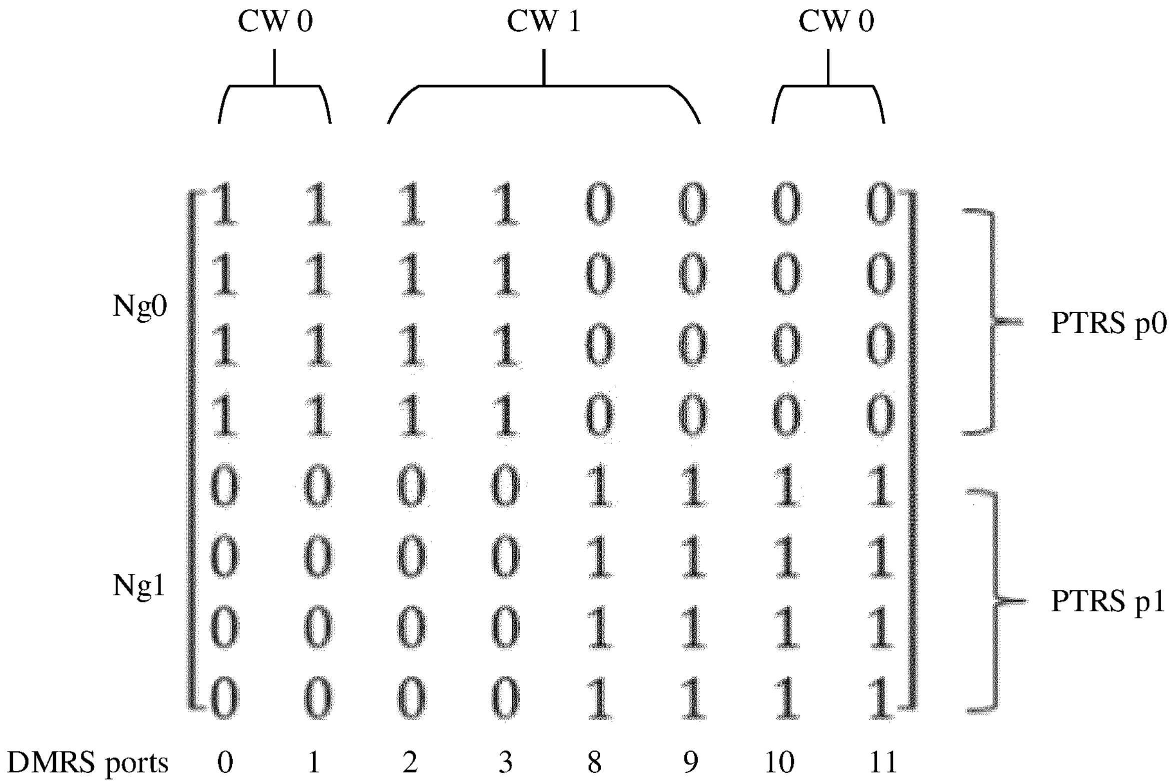
CW 0
CW 1
CW 0
Ng0
Ng1
PTRS p0
PTRS p1
1 1 1 1 0 0 0 0
1 1 1 1 0 0 0 0
1 1 1 1 0 0 0 0
1 1 1 1 0 0 0 0
0 0 0 0 1 1 1 1
0 0 0 0 1 1 1 1
0 0 0 0 1 1 1 1
0 0 0 0 1 1 1 1
DMRS ports 0 1 2 3 8 9 10 11

FIG. 9c

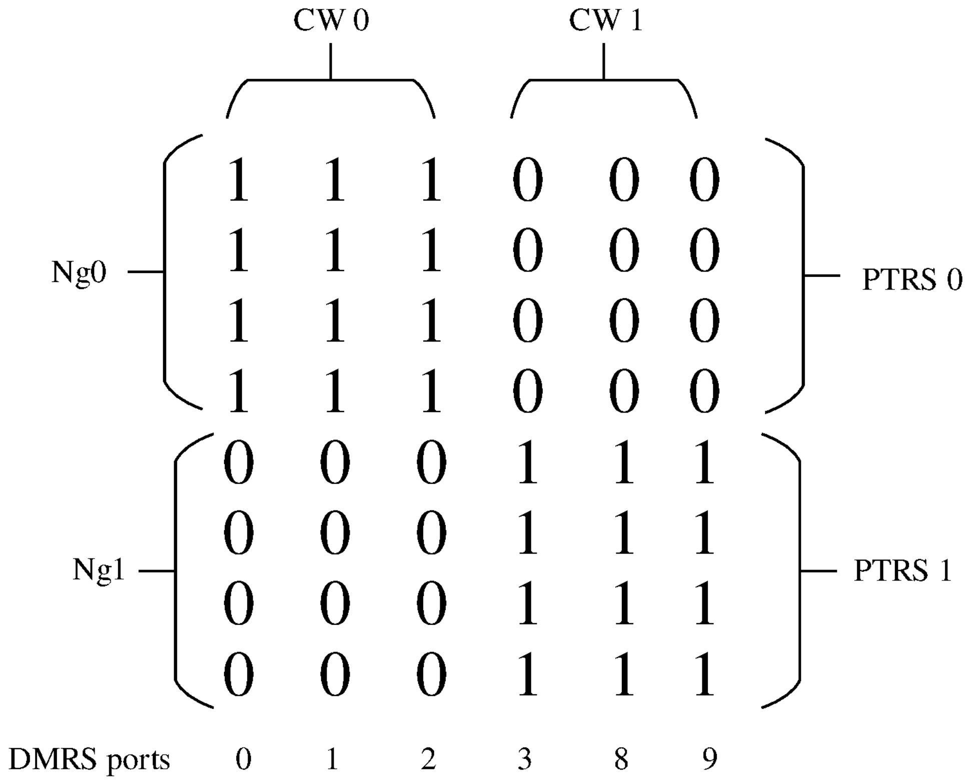
CW 0
CW 1
Ng0
PTRS 0
1 1 1 0 0 0
1 1 1 0 0 0
1 1 1 0 0 0
1 1 1 0 0 0
Ng1
PTRS 1
0 0 0 1 1 1
0 0 0 1 1 1
0 0 0 1 1 1
0 0 0 1 1 1
DMRS ports 0 1 2 3 8 9

FIG. 10

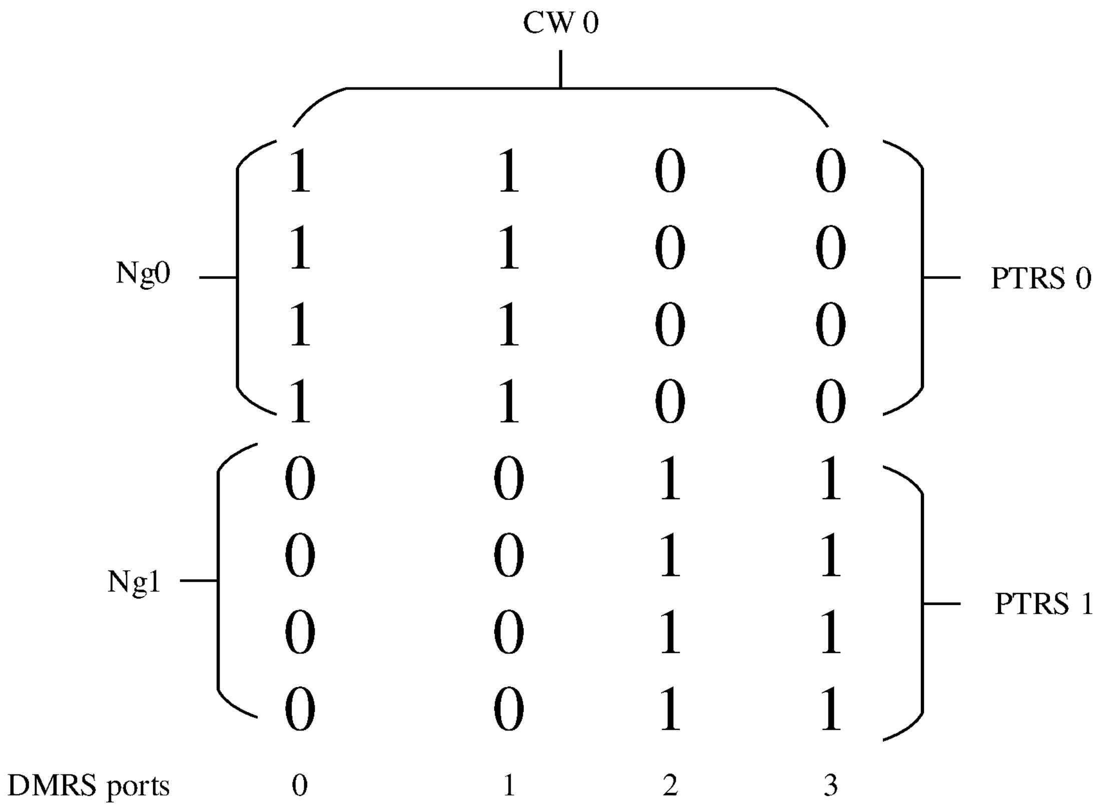
CW 0
Ng0
PTRS 0
1 1 0 0
1 1 0 0
1 1 0 0
1 1 0 0
Ng1
PTRS 1
0 0 1 1
0 0 1 1
0 0 1 1
0 0 1 1
DMRS ports 0 1 2 3

FIG. 11

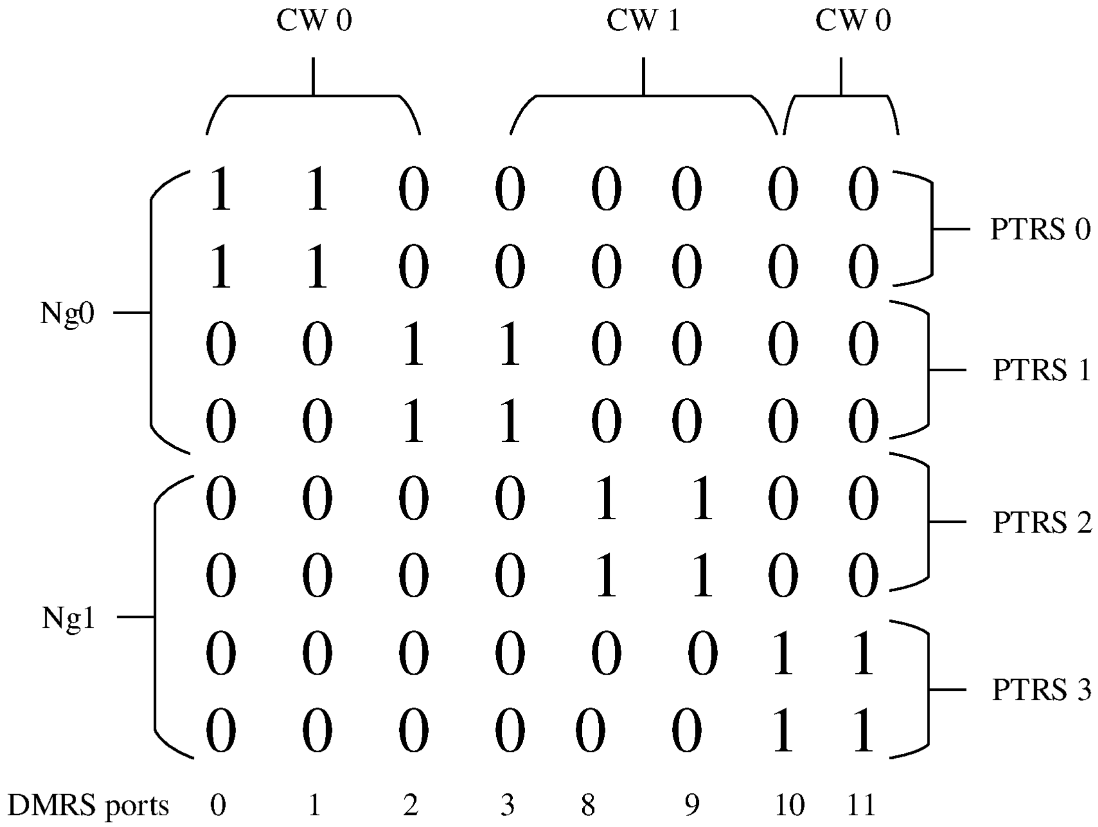
CW 0
CW 1
CW 0
1 1 0 0 0 0 0 0
1 1 0 0 0 0 0 0
0 0 1 1 0 0 0 0
0 0 1 1 0 0 0 0
0 0 0 0 1 1 0 0
0 0 0 0 1 1 0 0
0 0 0 0 0 0 1 1
0 0 0 0 0 0 1 1
PTRS 0
PTRS 1
PTRS 2
PTRS 3
Ng0
Ng1
DMRS ports 0 1 2 3 8 9 10 11

FIG. 12a

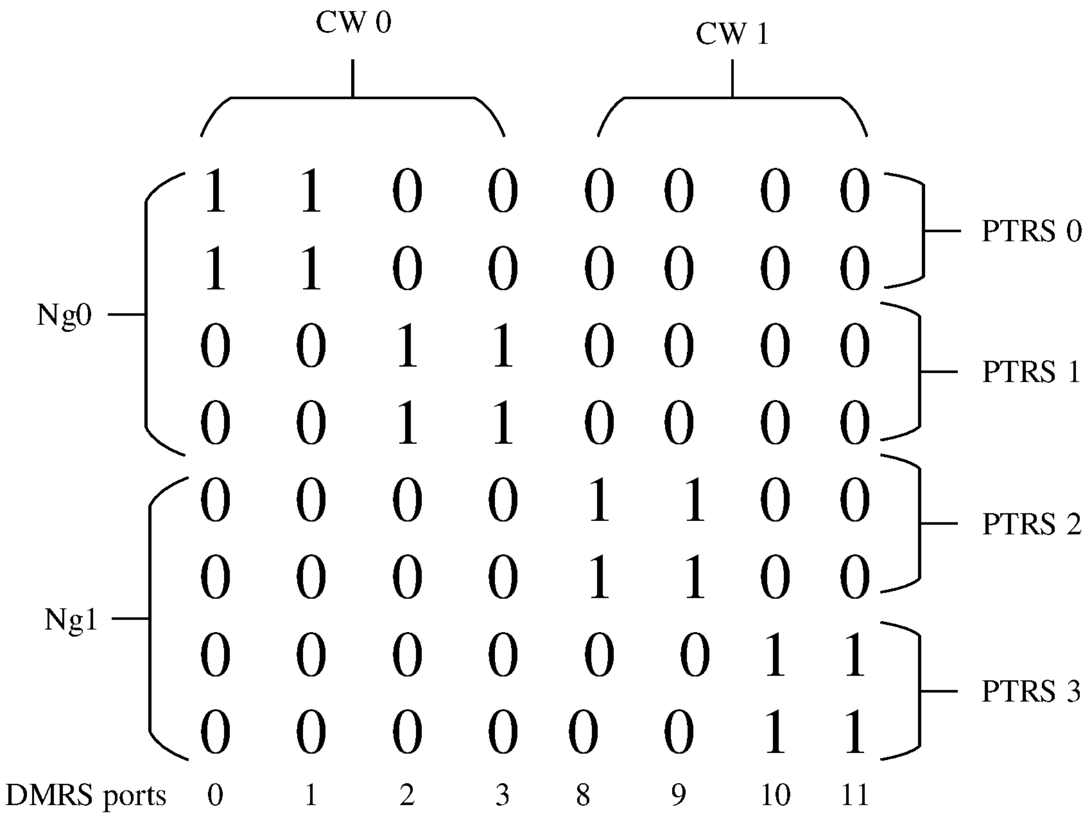
CW 0
CW 1
Ng0
Ng1
PTRS 0
PTRS 1
PTRS 2
PTRS 3
1 1 0 0 0 0 0 0
1 1 0 0 0 0 0 0
0 0 1 1 0 0 0 0
0 0 1 1 0 0 0 0
0 0 0 0 1 1 0 0
0 0 0 0 1 1 0 0
0 0 0 0 0 0 1 1
0 0 0 0 0 0 1 1
DMRS ports 0 1 2 3 8 9 10 11

FIG. 12b

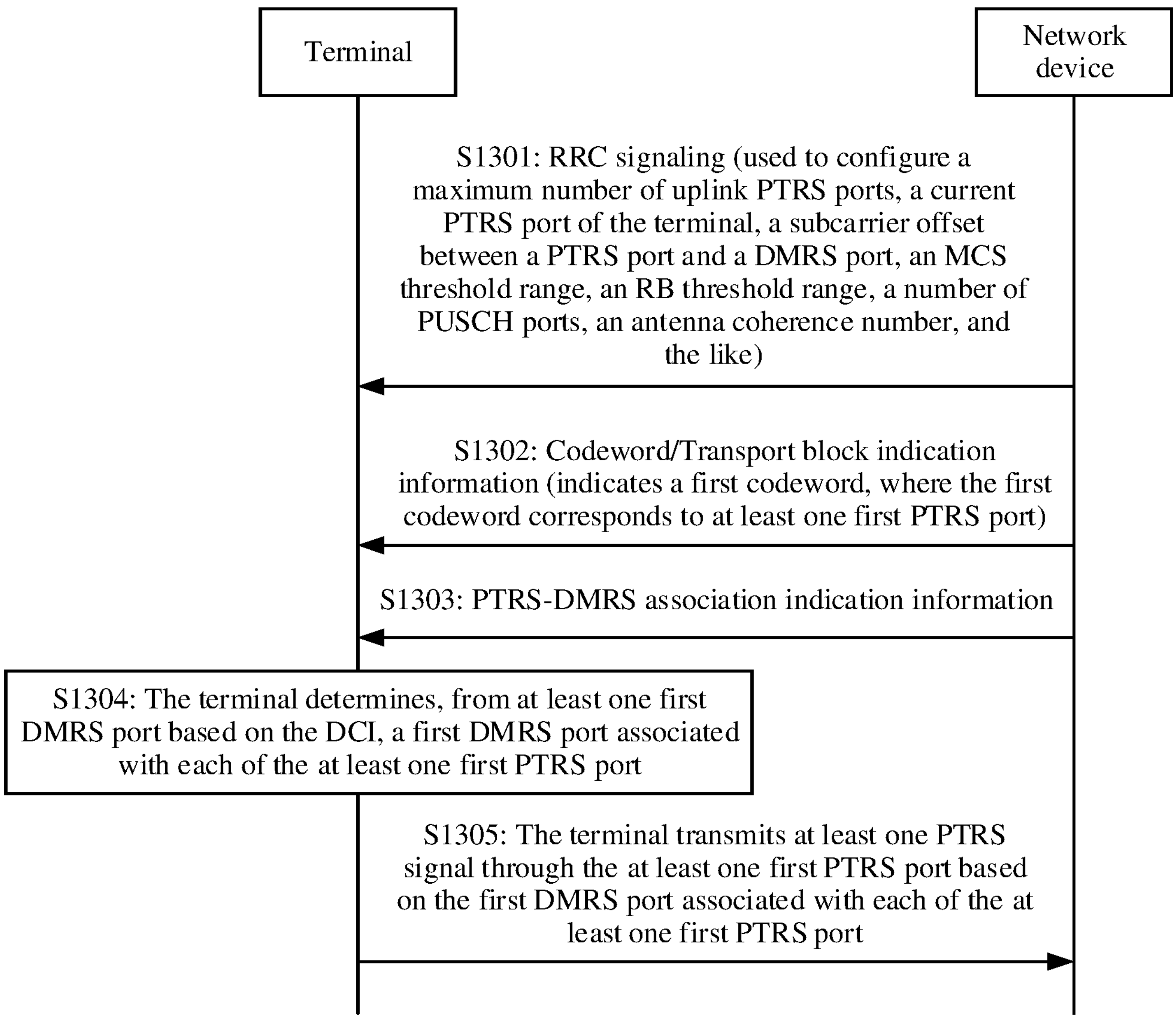


FIG. 13

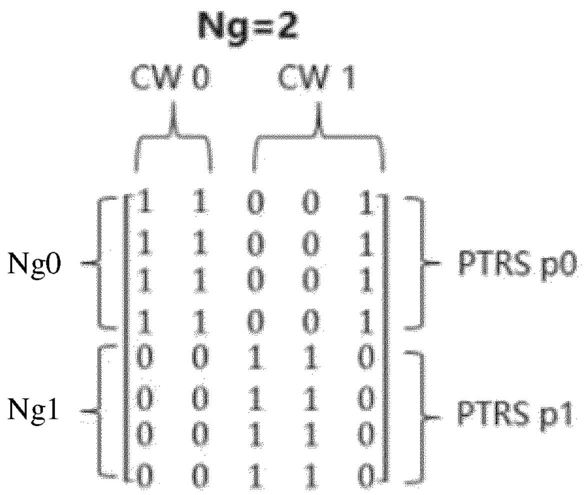


FIG. 14a

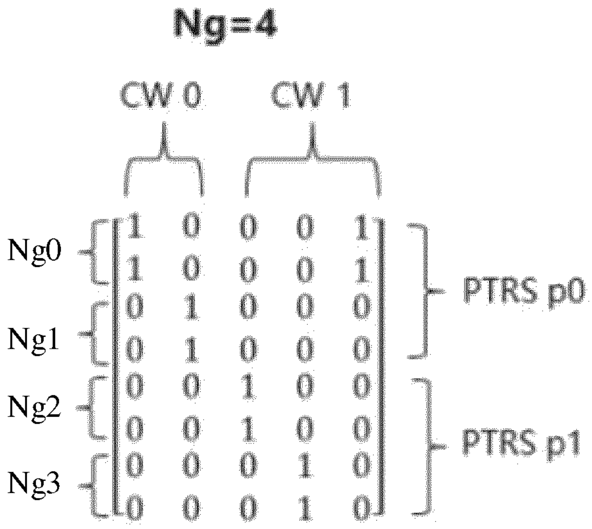


FIG. 14b

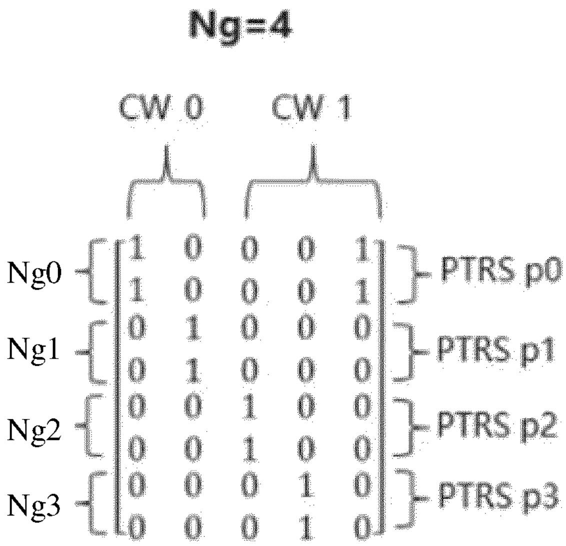


FIG. 14c

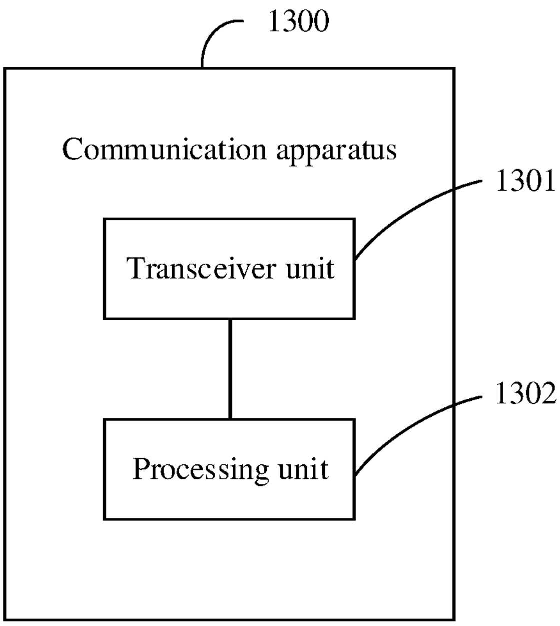
1300
Communication apparatus
1301
Transceiver unit
1302
Processing unit

FIG. 15

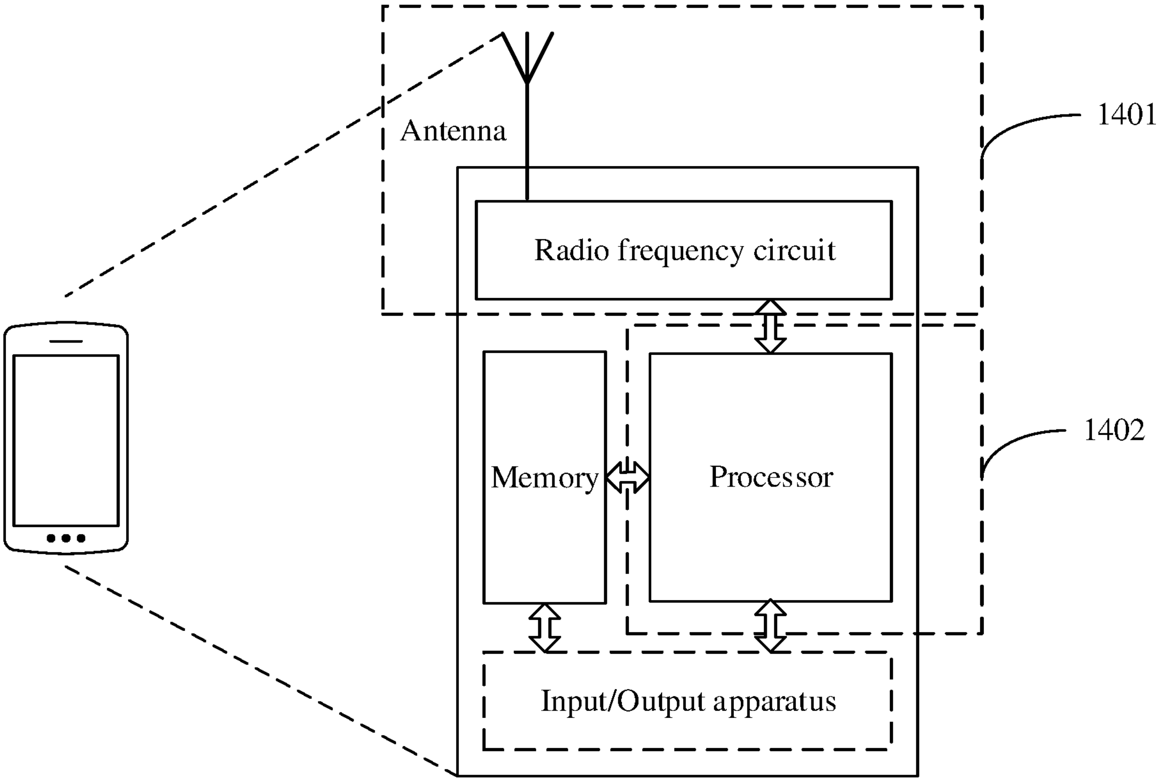
Antenna
1401
Radio frequency circuit
1402
Memory
Processor
Input/Output apparatus

FIG. 16

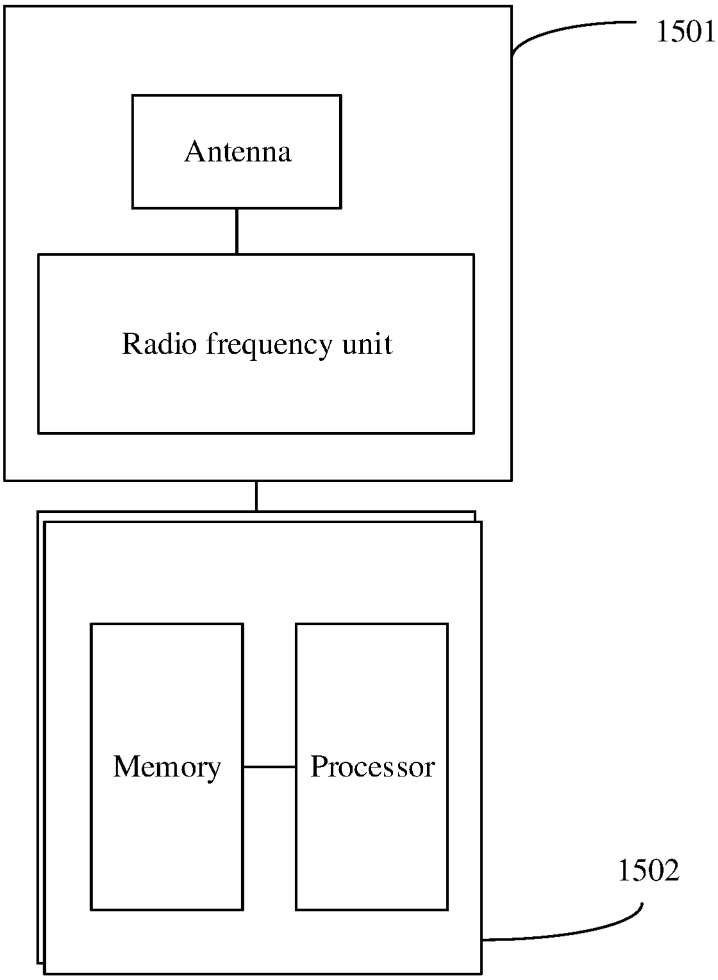
1501
Antenna
Radio frequency unit
Memory
Processor
1502

FIG. 17

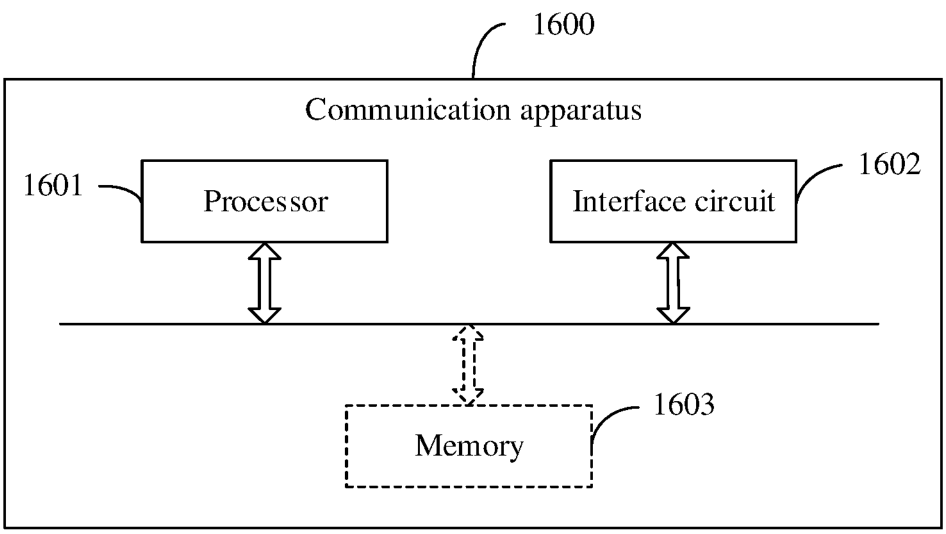
1600
Communication apparatus
1601
Processor
Interface circuit
1602
1603
Memory

FIG. 18

## INTERNATIONAL SEARCH REPORT

International application No.
**PCT/CN2023/122596**

**A. CLASSIFICATION OF SUBJECT MATTER**

H04B7/0456(2017.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT; CNKI; VEN; ENTXTC: 相位追踪参考信号, 解调参考信号, 关联, 联系, 相关, 指示, 配置, DCI, DMRS, PTRS, association, indicate, configuration

**C. DOCUMENTS CONSIDERED TO BE RELEVANT**

| Category* | Citation of document, with indication, where appropriate, of the relevant passages | Relevant to claim No. |
|---|---|---|
| X | CN 114765879 A (VIVO COMMUNICATION TECHNOLOGY CO., LTD.) 19 July 2022 (2022-07-19)<br>description, paragraphs [0194]-[0825] | 1-71 |
| X | CN 110034904 A (VIVO COMMUNICATION TECHNOLOGY CO., LTD.) 19 July 2019 (2019-07-19)<br>description, paragraphs [0027]-[0234] | 1-71 |
| X | CN 113767594 A (LG ELECTRONICS INC.) 07 December 2021 (2021-12-07)<br>description, paragraphs [0459]-[0537] | 1-71 |
| A | CN 114982177 A (TELEFONAKTIEBOLAGET LM ERICSSON (PUBL)) 30 August 2022 (2022-08-30)<br>entire document | 1-71 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 December 2023** | **11 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/122596**

| Patent document cited in search report | | | Publication date (day/month/year) | Patent family member(s) | | | Publication date (day/month/year) |
|---|---|---|---|---|---|---|---|
| CN | 114765879 | A | 19 July 2022 | None | | | |
| CN | 110034904 | A | 19 July 2019 | US | 2021075570 | A1 | 11 March 2021 |
| | | | | US | 11362787 | B2 | 14 June 2022 |
| CN | 113767594 | A | 07 December 2021 | WO | 2020222606 | A1 | 05 November 2020 |
| | | | | KR | 20230014858 | A | 30 January 2023 |
| | | | | EP | 3955502 | A1 | 16 February 2022 |
| | | | | EP | 3955502 | A4 | 15 June 2022 |
| | | | | US | 2023171076 | A1 | 01 June 2023 |
| | | | | US | 2022239433 | A1 | 28 July 2022 |
| | | | | KR | 20210152578 | A | 15 December 2021 |
| | | | | KR | 102489523 | B1 | 17 January 2023 |
| CN | 114982177 | A | 30 August 2022 | EP | 4055755 | A1 | 14 September 2022 |
| | | | | WO | 2021090180 | A1 | 14 May 2021 |
| | | | | KR | 20220097490 | A | 07 July 2022 |
| | | | | US | 2022385427 | A1 | 01 December 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211215724
- CN 202310165426